# EUROPEAN PATENT SPECIFICATION

(11) **EP 2 934 031 B1**
(45) Date of publication and mention of the grant of the patent: **25.03.2020**
(21) Application number: 13870929.0
(22) Date of filing: 14.01.2013
(51) Int. Cl.: H04W 8/00, H04W 76/14, H04W 8/26

(54) **REGISTRATION METHOD FOR USER EQUIPMENT, PROXIMITY SERVICE SERVER AND MOBILITY MANAGEMENT ENTITY**
REGISTRIERUNGSVERFAHREN FÜR BENUTZERVORRICHTUNG, NAHDIENSTSERVER UND MOBILITÄTSVERWALTUNGSEINHEIT
PROCÉDÉ D'ENREGISTREMENT D'ÉQUIPEMENT D'UTILISATEUR, SERVEUR DE SERVICE DE PROXIMITÉ ET ENTITÉ DE GESTION DE MOBILITÉ

(43) Date of publication of application: 21.10.2015
(73) Proprietor: Huawei Technologies Co., Ltd., Longgang District Shenzhen, Guangdong 518129 (CN)
(72) Inventor: GUO, Yali, Shenzhen Guangdong 518129 (CN); ZHOU, Weihua, Shenzhen Guangdong 518129 (CN)
(74) Representative: Pfenning, Meinig & Partner mbB
(86) International application number: PCT/CN2013/070421
(87) International publication number: WO 2014/107902

(56) References cited:
- WO-A1-2011/069287
- WO-A1-2012/079527
- WO-A1-2012/129806
- CN-A- 101 772 199
- US-A1- 2011 098 043
- INTEL: "Operator Managed and Operator Assisted D2D", 3GPP DRAFT; S1-120063-MANAGED OR ASSISTED D2D, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. Kyoto, Japan; 20120213 - 20120217, 6 February 2012 (2012-02-06), XP050574728, [retrieved on 2012-02-06]
- QUALCOMM INC ET AL: "Usefulness and Identifiers to use with ProSe Discovery", 3GPP DRAFT; S1-124013-USEFULNESS-IDENTIFIERS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG1, no. Edinburgh, United Kingdom; 20121112 - 20121117 31 October 2012 (2012-10-31), XP050681501, Retrieved from the Internet: URL:http://www.3gpp.org/ftp/tsg_sa/WG1_Ser v/TSGS1_60_Edinburgh/docs/ [retrieved on 2012-10-31]

## Description

### TECHNICAL FIELD

The present invention relates to the field of communications technologies, and in particular, to a user equipment registration method, a proximity service server, and a mobility management entity.

### BACKGROUND

With the widespread use of social applications, a function of proximity discovery becomes more important. For example, a user wants to learn, in a timely manner, that a friend appears around or leaves. The function of proximity discovery will bring more convenience to people's life and work. For example, after arriving at an office, a user may immediately learn, by using the function of proximity discovery, which colleagues will arrive at the office.

In order to implement that a network controls mutual discovery and communication between user equipments (UE), the user equipments are required to be registered with the network; the user equipments may perform mutual discovery and communication under the centralized control of the network.

A method provided in the prior art for registering a user equipment with a network is implemented based on an absolute location of the user equipment. This method requires the user equipment to report, in real time, a location of the user equipment to a location server on the network. Then, the location server calculates a distance between two user equipments according to location information of the two user equipments, and if the distance between the two user equipments is less than a preset threshold, determines that the two user equipments are in proximity to each other.

A proximity service based on the foregoing method provided in the prior art is implemented by an application server on a network, and a network of an operator provides only a function of an information transmission pipe between user equipments and the application server. Although the network of the operator needs to undertake many network resource overheads for the foregoing location-based service, the operator obtains no benefit from the location-based service.

INTEL: >Operator Managed and Operator Assisted D2D", 3GPP DRAFT; S1-120063 describes a use case for each of two primary D2D modes, including "Proximity Triggered D2D", which deals with proximity triggered data sessions.

QUALCOMM INC et al.: "Usefulness and Identifiers to use with PrSe Discovery", 3GPP DRAFT; S 1-124013 discusses representations of user equipment identifiers to be used in ProSe discovery.

US patent application 2011,098,043 A1 provides methods for facilitating device-to-device connection establishment. A method may include directing broadcast of an indication of a device-to-device registration area identification in each of one or more cells forming a device-to-device registration area identification. The method may further include directing receipt of a device-to-device registration request originated by a first terminal apparatus in response to the broadcast indication. The first terminal apparatus may be located within the registration area. The method may additionally include registering the first terminal apparatus based at least in part upon the device-to-device registration request. Corresponding apparatuses and systems are also provided.

### SUMMARY

The subject matter of the present invention is defined by the accompanying claims.

The present invention provides a user equipment registration method and a proximity service server so as to implement that a network effectively controls discovery and communication of a user equipment, so that an operator can provide a proximity service that is effectively controlled by the network.

The following aspects and related implementation manners are not covered by the claims.

A first aspect provides a user equipment registration method, including:
receiving, by a network side device, a proximity service request sent by a user equipment;
assigning, by the network side device, a device-to-device D2D identifier to the user equipment; and
sending, by the network side device, a proximity service response to the user equipment, where the proximity service response carries the D2D identifier.

Further, according to the first aspect,, the network side device is a proximity service server, and the D2D identifier includes broadcast code and an identifier that is used for D2D communication.

With reference to the first aspect, in a first possible implementation manner, before the assigning, by the network side device, a device-to-device D2D identifier to the user equipment, the method further includes:
determining, by the proximity service server, whether the user equipment is allowed to perform a proximity service; and
the assigning, by the network side device, a device-to-device D2D identifier to the user equipment includes:
   assigning, by the proximity service server, the broadcast code and the identifier that is used for D2D communication to the user equipment if the user equipment is allowed to perform the proximity service.

With reference to the first possible implementation manner, in a second possible implementation manner, the determining, by the proximity service server, whether the user equipment is allowed to perform a proximity service includes:
determining, by the proximity service server according to subscription data of the user equipment, whether the user equipment is allowed to perform the proximity service, where the subscription data of the user equipment is obtained, from a home subscriber server according to an identifier of the user equipment carried in the proximity service request, and is locally stored by the proximity service server, and the subscription data of the user equipment includes information about whether the user equipment is allowed to perform the proximity service.

With reference to the first possible implementation manner, in a third possible implementation manner, the determining, by the proximity service server, whether the user equipment is allowed to perform a proximity service includes:
sending, by the proximity service server after receiving the proximity service request sent by the user equipment, an identifier of the user equipment carried in the proximity service request and an identifier of the proximity service requested by the user equipment to a home subscriber server; receiving feedback information of the home subscriber server; and determining, according to the feedback information of the home subscriber server, whether the user equipment is allowed to perform the proximity service, where the feedback information of the home subscriber server includes information about whether the user equipment is allowed to perform the proximity service.

With reference to the first aspect, in a fourth possible implementation manner, the receiving, by a network side device, a proximity service request sent by a user equipment includes:
receiving, by the proximity service server, the proximity service request that is sent by the user equipment by using a mobility management entity; and
the sending, by the network side device, a proximity service response to the user equipment includes:
   sending, by the proximity service server, the proximity service response to the user equipment by using the mobility management entity.

With reference to the fourth possible implementation manner, in a fifth possible implementation manner, before the receiving, by the proximity service server, the proximity service request that is sent by the user equipment by using a mobility management entity, the method further includes:
determining, by the mobility management entity, whether the user equipment is allowed to perform a proximity service; and
if the user equipment is allowed to perform the proximity service, sending, by the mobility management entity to the proximity service server, the proximity service request sent by the user equipment.

With reference to the first aspect or any implementation manner of the first to fifth possible implementation manners, in a sixth possible implementation manner, after the assigning, by the proximity service server, the broadcast code and the identifier that is used for D2D communication to the user equipment, the method further includes:
sending, by the proximity service server, routing information of the proximity service server to the user equipment.

With reference to the sixth possible implementation manner, in a seventh possible implementation manner, the sending, by the proximity service server, routing information of the proximity service server to the user equipment includes:
sending, by the proximity service server, the routing information of the proximity service server to the user equipment by separately adding the routing information of the proximity service server to the proximity service response; or sending, by the proximity service server, the routing information of the proximity service server to the user equipment by adding the routing information of the proximity service server to the identifier for D2D communication.

With reference to the first aspect or any implementation manner of the first to fifth possible implementation manners, in an eigth possible implementation manner, after the assigning, by the proximity service server, the broadcast code and the identifier that is used for device-to-device D2D communication to the user equipment, the method further includes:
assigning, by the proximity service server, a decryption key to the user equipment, and sending the decryption key to the user equipment, so that the user equipment performs decryption by using the decryption key when obtaining encrypted content from the proximity service server by using an application layer server.

With reference to the first aspect, in a ninth possible implementation manner, the network side device includes a proximity service server and a mobility management entity, and the D2D identifier includes broadcast code and an identifier that is used for D2D communication;
the receiving, by a network side device, a proximity service request sent by a user equipment includes:
receiving, by the mobility management entity, the proximity service request sent by the user equipment; and
the assigning, by the network side device, a device-to-device D2D identifier to the user equipment includes:
assigning, by the mobility management entity, the broadcast code to the user equipment, and sending the broadcast code to the proximity service server by adding the broadcast code to the proximity service request; and assigning, by the proximity service server, the identifier for D2D communication to the user equipment.

With reference to the ninth possible implementation manner, in a tenth possible implementation manner, after the assigning, by the proximity service server, the identifier for D2D communication to the user equipment, the method further includes:
sending, by the proximity service server to the mobility management entity, the identifier used for D2D communication and assigned to the user equipment, and storing the identifier used for D2D communication and assigned to the user equipment and the broadcast code that is received from the mobility management entity.

With reference to the ninth possible implementation manner, in an eleventh possible implementation manner, after the assigning, by the proximity service server, the identifier for D2D communication to the user equipment, the method further includes:
sending, by the proximity service server, routing information of the proximity service server to the mobility management entity, so that the mobility management entity sends the routing information of the proximity service server to the user equipment.

With reference to the eleventh possible implementation manner, in a twelfth possible implementation manner, the sending, by the proximity service server, routing information of the proximity service server to the mobility management entity includes:
sending, by the proximity service server, the routing information of the proximity service server to the mobility management entity by adding the routing information of the proximity service server to the identifier used for D2D communication and assigned to the user equipment.

With reference to the ninth possible implementation manner, in a thirteenth possible implementation manner, after the assigning, by the proximity service server, the identifier for D2D communication to the user equipment, the method further includes:
assigning, by the proximity service server, a decryption key to the user equipment, and sending the decryption key to the user equipment by using the mobility management entity, so that the user equipment performs decryption by using the decryption key when obtaining encrypted content from the proximity service server by using an application layer server.

With reference to any implementation manner of the ninth to thirteenth possible implementation manners, in a fourteenth possible implementation manner, before the assigning, by the mobility management entity, the broadcast code to the user equipment, the method further includes:
determining, by the mobility management entity, whether the user equipment is allowed to perform a proximity service; and
the assigning, by the mobility management entity, the broadcast code to the user equipment includes:
   assigning, by the mobility management entity, the broadcast code to the user equipment if the user equipment is allowed to perform the proximity service.

With reference to the first aspect, in a fifteenth possible implementation manner, the network side device is a mobility management entity, and the D2D identifier includes broadcast code and an identifier that is used for D2D communication;
the receiving, by a network side device, a proximity service request sent by a user equipment includes:
receiving, by the mobility management entity, the proximity service request sent by the user equipment; and
the assigning, by the network side device, a device-to-device D2D identifier to the user equipment includes:
   assigning, by the mobility management entity, the broadcast code and the identifier that is used for D2D communication to the user equipment.

With reference to the fifteenth possible implementation manner, in a sixteenth possible implementation manner, before the assigning, by the mobility management entity, the broadcast code and the identifier that is used for D2D communication to the user equipment, the method further includes:
determining, by the mobility management entity, whether the user equipment is allowed to perform a proximity service; and
the assigning, by the mobility management entity, the broadcast code and the identifier that is used for D2D communication to the user equipment includes:
   assigning, by the mobility management entity, the broadcast code and the identifier that is used for D2D communication to the user equipment if the user equipment is allowed to perform the proximity service.

With reference to the fifteenth possible implementation manner or the sixteenth possible implementation manner, in a seventeenth possible implementation manner, after the assigning, by the mobility management entity, the broadcast code and the identifier that is used for D2D communication to the user equipment, the method further includes:
sending, by the mobility management entity to a proximity service server, the broadcast code and the identifier that is used for D2D communication which are assigned to the user equipment, so that the proximity service server stores the broadcast code and the identifier that is used for D2D communication.

With reference to the seventeenth possible implementation manner, in an eighteenth possible implementation manner, after the sending, by the mobility management entity to a proximity service server, the broadcast code and the identifier that is used for D2D communication which are assigned to the user equipment, the method further includes:
receiving, by the mobility management entity, routing information that is of the proximity service server and sent by the proximity service server, and sending the routing information of the proximity service server to the user equipment.

With reference to the seventeenth possible implementation manner, in a nineteenth possible implementation manner, after the sending, by the mobility management entity to a proximity service server, the broadcast code and the identifier that is used for D2D communication which are assigned to the user equipment, the method further includes:
receiving, by the mobility management entity, a decryption key that is assigned by the proximity service server to the user equipment, and sending the decryption key to the user equipment, so that the user equipment performs decryption by using the decryption key when obtaining encrypted content from the proximity service server by using an application layer server.

With reference to the first aspect, in a twentieth possible implementation manner, the network side device includes a mobility management entity and a proximity service server, and the D2D identifier includes broadcast code and an identifier that is used for D2D communication;
the receiving, by a network side device, a proximity service request sent by a user equipment includes:
receiving, by the mobility management entity, the proximity service request sent by the user equipment; and
the assigning, by the network side device, a device-to-device D2D identifier to the user equipment includes:
   assigning, by the mobility management entity, the identifier for D2D communication to the user equipment, and sending, to the proximity service server by adding the identifier for D2D communication to the proximity service request, the identifier used for D2D communication and assigned to the user equipment; and assigning, by the proximity service server, the broadcast code to the user equipment.

With reference to the twentieth possible implementation manner, in a twenty-first possible implementation manner, after the assigning, by the proximity service server, the broadcast code to the user equipment, the method further includes:
sending, by the proximity service server to the mobility management entity, the broadcast code that is assigned to the user equipment, and storing the broadcast code that is assigned to the user equipment and the identifier for D2D communication that is received from the mobility management entity.

With reference to the twentieth possible implementation manner, in a twenty-second possible implementation manner, after the assigning, by the proximity service server, the broadcast code to the user equipment, the method further includes:
sending, by the proximity service server, routing information of the proximity service server to the mobility management entity, so that the mobility management entity sends the routing information of the proximity service server to the user equipment.

With reference to the twentieth possible implementation manner, in a twenty-third possible implementation manner, after the assigning, by the proximity service server, the broadcast code to the user equipment, the method further includes:
assigning, by the proximity service server, a decryption key to the user equipment, and sending the decryption key to the user equipment by using the mobility management entity, so that the user equipment performs decryption by using the decryption key when obtaining encrypted content from the proximity service server by using an application layer server.

With reference to any implementation manner of the twentieth to twenty-third possible implementation manners, in a twenty-fourth possible implementation manner, before the assigning, by the mobility management entity, the identifier for D2D communication to the user equipment, the method further includes:
determining, by the mobility management entity, whether the user equipment is allowed to perform a proximity service; and
the assigning, by the mobility management entity, the identifier for D2D communication to the user equipment includes:
   assigning, by the mobility management entity, the identifier for D2D communication to the user equipment if the user equipment is allowed to perform the proximity service.

With reference to the first aspect, in a twenty-fifth possible implementation manner, the proximity service request carries an identifier, for device-to-device D2D communication, of the user equipment; and
the network side device is a mobility management entity, and the D2D identifier is broadcast code.

With reference to the twenty-fifth possible implementation manner, in a twenty-sixth possible implementation manner, after the assigning, by the network side device, a device-to-device D2D identifier to the user equipment, the method further includes:
sending, by the mobility management entity to a proximity service server, the broadcast code that is assigned to the user equipment and the identifier for D2D communication that is carried in the proximity service request, so that the proximity service server stores the broadcast code and the identifier that is used for D2D communication.

With reference to the twenty-sixth possible implementation manner, in a twenty-seventh possible implementation manner, after the sending, by the mobility management entity to a proximity service server, the broadcast code that is assigned to the user equipment and the identifier for D2D communication that is carried in the proximity service request, the method further includes:
receiving, by the mobility management entity, routing information that is of the proximity service server and sent by the proximity service server, and sending the routing information of the proximity service server to the user equipment.

With reference to the twenty-sixth possible implementation manner, in a twenty-eighth possible implementation manner, after the sending, by the mobility management entity to a proximity service server, the broadcast code that is assigned to the user equipment and the identifier for D2D communication that is carried in the proximity service request, the method further includes:
receiving, by the mobility management entity, a decryption key that is assigned by the proximity service server to the user equipment, and sending the decryption key to the user equipment, so that the user equipment performs decryption by using the decryption key when obtaining encrypted content from the proximity service server by using an application layer server.

With reference to any implementation manner of the twenty-fifth to twenty-eighth possible implementation manners, in a twenty-ninth possible implementation manner, before the assigning, by the network side device, a device-to-device D2D identifier to the user equipment, the method further includes:
determining, by the mobility management entity, whether the user equipment is allowed to perform a proximity service; and
the assigning, by the network side device, a device-to-device D2D identifier to the user equipment includes:
   assigning, by the mobility management entity, the broadcast code to the user equipment if the user equipment is allowed to perform the proximity service.

With reference to the sixth, the fifteenth, the seventeenth, the twenty-fifth, or the twenty-ninth possible implementation manner, in a thirtieth possible implementation manner, the determining, by the mobility management entity, whether the user equipment is allowed to perform a proximity service includes:
determining, by the mobility management entity according to subscription data of the user equipment, whether the user equipment is allowed to perform the proximity service, where the subscription data of the user equipment is obtained, from a home subscriber server according to an identifier of the user equipment carried in the proximity service request, and is locally stored by the mobility management entity, and the subscription data of the user equipment includes information about whether the user equipment is allowed to perform the proximity service.

With reference to the fifth, the fourteenth, the sixteenth, the twentieth, or the twenty-ninth possible implementation manner, in a thirty-first possible implementation manner, the determining, by the mobility management entity, whether the user equipment is allowed to perform a proximity service includes:
sending, by the mobility management entity after receiving the proximity service request sent by the user equipment, an identifier of the user equipment carried in the proximity service request and an identifier of the proximity service requested by the user equipment to a home subscriber server; receiving feedback information of the home subscriber server; and determining, according to the feedback information of the home subscriber server, whether the user equipment is allowed to perform the proximity service, where the feedback information of the home subscriber server includes information about whether the user equipment is allowed to perform the proximity service.

With reference to the second possible implementation manner, in a thirty-second possible implementation manner, the proximity service request further carries proximity discovery configuration information of the user equipment, or the subscription data of the user equipment further carries proximity discovery configuration information of the user equipment; and
the method further includes: storing, by the proximity service server, the proximity discovery configuration information of the user equipment after receiving the proximity discovery configuration information of the user equipment.

With reference to the third possible implementation manner, in a thirty-third possible implementation manner, the proximity service request further carries proximity discovery configuration information of the user equipment, or the feedback information of the home subscriber server further carries proximity discovery configuration information of the user equipment; and
the method further includes: storing, by the proximity service server, the proximity discovery configuration information of the user equipment after receiving the proximity discovery configuration information of the user equipment.

With reference to the third or thirty-first possible implementation manner, in a thirty-fourth possible implementation manner, if the proximity service request further carries the identifier of the proximity service requested by the user equipment, the identifier, sent to the home subscriber server, of the proximity service requested by the user equipment is directly acquired from the proximity service request; or
if a message name of the proximity service request indicates the proximity service requested by the user equipment, the identifier, sent to the home subscriber server, of the proximity service requested by the user equipment is generated according to the message name of the proximity service request.

A second aspect provides a user equipment registration method, including:
sending, by a user equipment, a proximity service request to a network side device; and
receiving, by the user equipment, a proximity service response sent by the network side device, where the proximity service response carries a device-to-device D2D identifier assigned by the network side device to the user equipment.

With reference to the second aspect, in a first possible implementation manner, the D2D identifier includes broadcast code and an identifier that is used for D2D communication; or
the proximity service request carries an identifier, for D2D communication, of the user equipment, and the D2D identifier is broadcast code.

With reference to the second aspect or the first possible implementation manner, in a second possible implementation manner, after the sending, by a user equipment, a proximity service request to a network side device, the method further includes:
receiving, by the user equipment, routing information that is of a proximity service server and sent by the network side device; and
in subsequent interaction with an application layer, sending, by the user equipment, the routing information of the proximity service server to an application layer server, so that the application layer server finds, according to the routing information of the proximity service server, the proximity service server with which the user equipment is registered.

With reference to the second aspect or the first possible implementation manner, in a third possible implementation manner, after the sending, by a user equipment, a proximity service request to a network side device, the method further includes:
receiving, by the user equipment, a decryption key that is assigned by the proximity service server to the user equipment and sent by the network side device; and
performing, by the user equipment, decryption by using the decryption key when obtaining encrypted content from the proximity service server by using an application layer server.

A third aspect provides a proximity service server, including:
a receiving module, configured to receive a proximity service request sent by a user equipment;
an assigning module, configured to assign a device-to-device D2D identifier to the user equipment, where the D2D identifier includes broadcast code and an identifier that is used for D2D communication; and
a sending module, configured to send a proximity service response to the user equipment, where the proximity service response carries the D2D identifier assigned by the assigning module.

With reference to the third aspect, in a first possible implementation manner, the proximity service server further includes a determining module, where:
the determining module is configured to: before the assigning module assigns the D2D identifier to the user equipment, determine whether the user equipment is allowed to perform a proximity service; and
the assigning module is specifically configured to assign the broadcast code and the identifier that is used for D2D communication to the user equipment when the determining module determines that the user equipment is allowed to perform the proximity service.

With reference to the first possible implementation manner, in a second possible implementation manner, the determining module is specifically configured to determine, according to subscription data of the user equipment, whether the user equipment is allowed to perform the proximity service, where the subscription data of the user equipment is obtained, from a home subscriber server according to an identifier of the user equipment carried in the proximity service request, and is locally stored by the proximity service server, and the subscription data of the user equipment includes information about whether the user equipment is allowed to perform the proximity service.

With reference to the first possible implementation manner, in a third possible implementation manner, the sending module is further configured to: after the receiving module receives the proximity service request sent by the user equipment, send an identifier of the user equipment carried in the proximity service request and an identifier of the proximity service requested by the user equipment to a home subscriber server;
the receiving module is further configured to receive feedback information of the home subscriber server; and
the determining module is specifically configured to determine, according to the feedback information that is of the home subscriber server and received by the receiving module, whether the user equipment is allowed to perform the proximity service, where the feedback information of the home subscriber server includes information about whether the user equipment is allowed to perform the proximity service.

With reference to the third aspect, in a fourth possible implementation manner,
the receiving module is specifically configured to receive the proximity service request that is sent by the user equipment by using a mobility management entity; and
the sending module is specifically configured to send the proximity service response to the user equipment by using the mobility management entity.

With reference to the third aspect or any implementation manner of the first to fourth possible implementation manners, in a fifth possible implementation manner, the sending module is further configured to send routing information of the proximity service server to the user equipment after the assigning module assigns the broadcast code and the identifier that is used for D2D communication to the user equipment.

With reference to the fifth possible implementation manner, in a sixth possible implementation manner, the sending module is specifically configured to send the routing information of the proximity service server to the user equipment by separately adding the routing information of the proximity service server to the proximity service response, or send the routing information of the proximity service server to the user equipment by adding the routing information of the proximity service server to the identifier for D2D communication.

With reference to the third aspect or any implementation manner of the first to fourth possible implementation manners, in a seventh possible implementation manner, the assigning module is further configured to assign a decryption key to the user equipment after assigning the broadcast code and the identifier that is used for D2D communication to the user equipment; and
the sending module is further configured to send, to the user equipment, the decryption key assigned by the assigning module, so that the user equipment performs decryption by using the decryption key when obtaining encrypted content from the proximity service server by using an application layer server.

With reference to the second possible implementation manner, in an eighth possible implementation manner, the proximity service request further carries proximity discovery configuration information of the user equipment, or the subscription data of the user equipment further carries proximity discovery configuration information of the user equipment; and
the proximity service server further includes a storing module, where:
the storing module is configured to store the proximity discovery configuration information of the user equipment after the receiving module receives the proximity discovery configuration information of the user equipment.

With reference to the third possible implementation manner, in a ninth possible implementation manner, the proximity service request further carries proximity discovery configuration information of the user equipment, or the feedback information of the home subscriber server further carries proximity discovery configuration information of the user equipment; and
the proximity service server further includes a storing module, where:
the storing module is configured to store the proximity discovery configuration information of the user equipment after the receiving module receives the proximity discovery configuration information of the user equipment.

With reference to the third possible implementation manner, in a tenth possible implementation manner, if the proximity service request further carries the identifier of the proximity service requested by the user equipment, the identifier, sent by the sending module to the home subscriber server, of the proximity service requested by the user equipment is directly acquired from the proximity service request; or
if a message name of the proximity service request indicates the proximity service requested by the user equipment, the identifier, sent by the sending module to the home subscriber server, of the proximity service requested by the user equipment is generated according to the message name of the proximity service request.

A fourth aspect provides a mobility management entity, including:
a receiving module, configured to receive a proximity service request sent by a user equipment;
an assigning module, configured to assign a device-to-device D2D identifier to the user equipment; and
a sending module, configured to send a proximity service response to the user equipment, where the proximity service response carries the D2D identifier assigned by the assigning module.

With reference to the fourth aspect, in a first possible implementation manner, the D2D identifier includes broadcast code and an identifier that is used for D2D communication; and
the assigning module is specifically configured to assign the broadcast code and the identifier that is used for D2D communication to the user equipment.

With reference to the first possible implementation manner, in a second possible implementation manner, the mobility management entity further includes a determining module, where:
the determining module is configured to: before the assigning module assigns the broadcast code and the identifier that is used for D2D communication to the user equipment, determine whether the user equipment is allowed to perform a proximity service; and
the assigning module is specifically configured to assign the broadcast code and the identifier that is used for D2D communication to the user equipment when the determining module determines that the user equipment is allowed to perform the proximity service.

With reference to the first or second possible implementation manner, in a third possible implementation manner, the sending module is further configured to send, to a proximity service server, the broadcast code and the identifier that is used for D2D communication which are assigned by the assigning module to the user equipment, so that the proximity service server stores the broadcast code and the identifier that is used for D2D communication.

With reference to the third possible implementation manner, in a fourth possible implementation manner, the receiving module is further configured to: after the sending module sends, to the proximity service server, the broadcast code and the identifier that is used for D2D communication which are assigned to the user equipment, receive routing information that is of the proximity service server and sent by the proximity service server; and
the sending module is further configured to send the routing information that is of the proximity service server and received by the receiving module to the user equipment.

With reference to the third possible implementation manner, in a fifth possible implementation manner, the receiving module is further configured to: after the sending module sends, to the proximity service server, the broadcast code and the identifier that is used for D2D communication which are assigned to the user equipment, receive a decryption key that is assigned by the proximity service server to the user equipment; and
the sending module is further configured to send the decryption key received by the receiving module to the user equipment, so that the user equipment performs decryption by using the decryption key when obtaining encrypted content from the proximity service server by using an application layer server.

With reference to the fourth aspect, in a sixth possible implementation manner, the proximity service request received by the receiving module carries an identifier, for D2D communication, of the user equipment; and the D2D identifier assigned by the assigning module to the user equipment is broadcast code.

With reference to the sixth possible implementation manner, in a seventh possible implementation manner, the sending module is further configured to send, to a proximity service server, the broadcast code that is assigned to the user equipment and the identifier for D2D communication that is carried in the proximity service request, so that the proximity service server stores the broadcast code and the identifier that is used for D2D communication.

With reference to the seventh possible implementation manner, in an eighth possible implementation manner, the receiving module is further configured to: after the sending module sends, to the proximity service server, the broadcast code that is assigned to the user equipment and the identifier for D2D communication that is carried in the proximity service request, receive routing information that is of the proximity service server and sent by the proximity service server; and
the sending module is further configured to send the routing information that is of the proximity service server and received by the receiving module to the user equipment.

With reference to the seventh possible implementation manner, in a ninth possible implementation manner, the receiving module is further configured to: after the sending module sends, to the proximity service server, the broadcast code that is assigned to the user equipment and the identifier for D2D communication that is carried in the proximity service request, receive a decryption key that is assigned by the proximity service server to the user equipment; and
the sending module is further configured to send the decryption key received by the receiving module to the user equipment, so that the user equipment performs decryption by using the decryption key when obtaining encrypted content from the proximity service server by using an application layer server.

With reference to any implementation manner of the sixth to ninth possible implementation manners, in a tenth possible implementation manner, the mobility management entity further includes a determining module, where:
the determining module is configured to: before the assigning module assigns the broadcast code to the user equipment, determine whether the user equipment is allowed to perform a proximity service; and
the assigning module is specifically configured to assign the broadcast code to the user equipment when the determining module determines that the user equipment is allowed to perform the proximity service.

With reference to the second or tenth possible implementation manner, in an eleventh possible implementation manner, the determining module is specifically configured to determine, according to subscription data of the user equipment, whether the user equipment is allowed to perform the proximity service, where the subscription data of the user equipment is obtained, from a home subscriber server according to an identifier of the user equipment carried in the proximity service request, and is locally stored by the mobility management entity, and the subscription data of the user equipment includes information about whether the user equipment is allowed to perform the proximity service.

With reference to the second or tenth possible implementation manner, in a twelfth possible implementation manner, the sending module is further configured to: after the receiving module receives the proximity service request sent by the user equipment, send an identifier of the user equipment carried in the proximity service request and an identifier of the proximity service requested by the user equipment to a home subscriber server;
the receiving module is further configured to receive feedback information of the home subscriber server; and
the determining module is specifically configured to determine, according to the feedback information that is of the home subscriber server and received by the receiving module, whether the user equipment is allowed to perform the proximity service, where the feedback information of the home subscriber server includes information about whether the user equipment is allowed to perform the proximity service.

With reference to the twelfth possible implementation manner, in a thirteenth possible implementation manner, if the proximity service request further carries the identifier of the proximity service requested by the user equipment, the identifier, sent by the sending module to the home subscriber server, of the proximity service requested by the user equipment is directly acquired from the proximity service request; or
if a message name of the proximity service request indicates the proximity service requested by the user equipment, the identifier, sent by the sending module to the home subscriber server, of the proximity service requested by the user equipment is generated according to the message name of the proximity service request.

A fifth aspect provides a proximity registration system, including a proximity service server and a mobility management entity, where:
the mobility management entity is configured to receive a proximity service request sent by a user equipment, assign broadcast code to the user equipment, and send the broadcast code to the proximity service server by adding the broadcast code to the proximity service request; receive a proximity service response sent by the proximity service server, where the proximity service response sent by the proximity service server carries an identifier for D2D communication that is assigned by the proximity service server to the user equipment; and send the proximity service response to the user equipment, where the proximity service response sent to the user equipment carries the broadcast code and the identifier that is used for D2D communication; and
the proximity service server is configured to receive the proximity service request that is sent by the mobility management entity and carries the broadcast code, assign the identifier for D2D communication to the user equipment, and send the identifier for D2D communication to the mobility management entity by adding the identifier for D2D communication to the proximity service response.

With reference to the fifth aspect, in a first possible implementation manner, the proximity service server is further configured to: after assigning the identifier for D2D communication to the user equipment, store the identifier used for D2D communication and assigned to the user equipment and the broadcast code that is received from the mobility management entity.

With reference to the fifth aspect, in a second possible implementation manner,
the proximity service server is further configured to send routing information of the proximity service server to the mobility management entity after assigning the identifier for D2D communication to the user equipment; and
the mobility management entity is further configured to receive the routing information that is of the proximity service server and sent by the proximity service server, and send the routing information of the proximity service server to the user equipment.

With reference to the fifth aspect, in a third possible implementation manner,
the proximity service server is further configured to assign a decryption key to the user equipment after assigning the identifier for D2D communication to the user equipment, and send the decryption key to the user equipment by using the mobility management entity, so that the user equipment performs decryption by using the decryption key when obtaining encrypted content from the proximity service server by using an application layer server.

With reference to the fifth aspect or any implementation manner of the first to third possible implementation manners, in a fourth possible implementation manner,
the mobility management entity is further configured to: before assigning the broadcast code to the user equipment, determine whether the user equipment is allowed to perform a proximity service; and
the mobility management entity is specifically configured to assign the broadcast code to the user equipment when determining that the user equipment is allowed to perform the proximity service.

A sixth aspect provides a proximity service server, including:
a receiving module, configured to receive a proximity service request sent by a mobility management entity, where the proximity service request sent by the mobility management entity carries broadcast code assigned by the mobility management entity to a user equipment;
an assigning module, configured to assign an identifier for D2D communication to the user equipment after the receiving module receives the proximity service request; and
a sending module, configured to send the identifier for D2D communication, which is assigned by the assigning module, to the mobility management entity by adding the identifier for D2D communication to a proximity service response.

With reference to the sixth aspect, in a first possible implementation manner, the proximity service server further includes a storing module, where:
the storing module is configured to: after the assigning module assigns the identifier for D2D communication to the user equipment, store the identifier for D2D communication that is assigned by the assigning module to the user equipment and the broadcast code that is received by the receiving module from the mobility management entity.

With reference to the sixth aspect, in a second possible implementation manner, the sending module is further configured to send routing information of the proximity service server to the mobility management entity after the assigning module assigns the identifier for D2D communication to the user equipment, so that the mobility management entity sends the routing information of the proximity service server to the user equipment.

With reference to the second possible implementation manner, in a third possible implementation manner, the sending module is specifically configured to send the routing information of the proximity service server to the mobility management entity by adding the routing information of the proximity service server to the identifier for D2D communication that is assigned by the assigning module to the user equipment.

With reference to the sixth aspect, in a fourth possible implementation manner, the assigning module is further configured to assign a decryption key to the user equipment after assigning the identifier for D2D communication to the user equipment; and
the sending module is further configured to send, to the user equipment by using the mobility management entity, the decryption key assigned by the assigning module, so that the user equipment performs decryption by using the decryption key when obtaining encrypted content from the proximity service server by using an application layer server.

A seventh aspect provides a mobility management entity, including:
a receiving module, configured to receive a proximity service request sent by a user equipment; and after a sending module sends broadcast code, assigned by an assigning module, to a proximity service server by adding the broadcast code to the proximity service request, receive a proximity service response sent by the proximity service server, where the proximity service response sent by the proximity service server carries an identifier for D2D communication that is assigned by the proximity service server to the user equipment;
the assigning module, configured to assign the broadcast code to the user equipment after the receiving module receives the proximity service request; and
the sending module, configured to send the broadcast code, assigned by the assigning module, to the proximity service server by adding the broadcast code to the proximity service request; and after the receiving module receives the proximity service response sent by the proximity service server, send the proximity service response to the user equipment, where the proximity service response sent to the user equipment carries the broadcast code and the identifier that is used for D2D communication.

With reference to the seventh aspect, in a first possible implementation manner, the receiving module is further configured to receive routing information that is of the proximity service server and sent by the proximity service server; and

the sending module is further configured to send the routing information that is of the proximity service server and received by the receiving module to the user equipment.

With reference to the seventh aspect or the first possible implementation manner, in a second possible implementation manner, the mobility management entity further includes a determining module, where:
the determining module is configured to: before the assigning module assigns the broadcast code to the user equipment, determine whether the user equipment is allowed to perform a proximity service; and
the assigning module is specifically configured to assign the broadcast code to the user equipment when the determining module determines that the user equipment is allowed to perform the proximity service.

An eighth aspect provides a proximity registration system, including a proximity service server and a mobility management entity, where:
the mobility management entity is configured to receive a proximity service request sent by a user equipment, assign an identifier for D2D communication to the user equipment, and send the identifier for D2D communication, assigned to the user equipment, to the proximity service server by adding the identifier for D2D communication to the proximity service request; receive a proximity service response sent by the proximity service server, where the proximity service response sent by the proximity service server carries broadcast code that is assigned by the proximity service server to the user equipment; and send the proximity service response to the user equipment, where the proximity service response sent to the user equipment carries the identifier for D2D communication and the broadcast code; and
the proximity service server is configured to receive the proximity service request that is sent by the mobility management entity and carries the identifier for D2D communication, and assign the broadcast code to the user equipment; and send the proximity service response to the mobility management entity, where the proximity service response sent by the proximity service server carries the broadcast code that is assigned by the proximity service server to the user equipment.

With reference to the eighth aspect, in a first possible implementation manner, the proximity service server is further configured to: after assigning the broadcast code to the user equipment, store the broadcast code that is assigned to the user equipment and the identifier for D2D communication that is received from the mobility management entity.

With reference to the eighth aspect, in a second possible implementation manner,
the proximity service server is further configured to send routing information of the proximity service server to the mobility management entity after assigning the broadcast code to the user equipment; and
the mobility management entity is further configured to receive the routing information that is of the proximity service server and sent by the proximity service server, and send the routing information of the proximity service server to the user equipment.

With reference to the eighth aspect, in a third possible implementation manner,
the proximity service server is further configured to assign a decryption key to the user equipment after assigning the broadcast code to the user equipment, and send the decryption key to the user equipment by using the mobility management entity, so that the user equipment performs decryption by using the decryption key when obtaining encrypted content from the proximity service server by using an application layer server.

With reference to the eighth aspect or any implementation manner of the first to third possible implementation manners, in a fourth possible implementation manner, the mobility management entity is further configured to: before assigning the identifier for D2D communication to the user equipment, determine whether the user equipment is allowed to perform a proximity service; and
the mobility management entity is specifically configured to assign the identifier for D2D communication to the user equipment when determining that the user equipment is allowed to perform the proximity service.

A ninth aspect provides a proximity service server, including:
a receiving module, configured to receive a proximity service request sent by a mobility management entity, where the proximity service request carries an identifier for D2D communication that is assigned by the mobility management entity to a user equipment;
an assigning module, configured to assign broadcast code to the user equipment after the receiving module receives the proximity service request; and
a sending module, configured to send a proximity service response to the mobility management entity, where the proximity service response carries the broadcast code that is assigned by the assigning module to the user equipment.

With reference to the ninth aspect, in a first possible implementation manner, the proximity service server further includes a storing module, where:
the storing module is configured to: after the assigning module assigns the broadcast code to the user equipment, store the broadcast code that is assigned by the assigning module to the user equipment and the identifier for D2D communication that is received by the receiving module from the mobility management entity.

With reference to the ninth aspect, in a second possible implementation manner, the sending module is further configured to send routing information of the proximity service server to the mobility management entity after the assigning module assigns the broadcast code to the user equipment, so that the mobility management entity sends the routing information of the proximity service server to the user equipment.

With reference to the ninth aspect, in a third possible implementation manner, the assigning module is further configured to assign a decryption key to the user equipment after assigning the broadcast code to the user equipment; and
the sending module is further configured to send, to the user equipment by using the mobility management entity, the decryption key assigned by the assigning module, so that the user equipment performs decryption by using the decryption key when obtaining encrypted content from the proximity service server by using an application layer server.

A tenth aspect provides a mobility management entity, including:
a receiving module, configured to receive a proximity service request sent by a user equipment; and after a sending module sends an identifier for D2D communication, assigned by an assigning module to the user equipment, to a proximity service server by adding the identifier for D2D communication to the proximity service request, receive a proximity service response sent by the proximity service server, where the proximity service response sent by the proximity service server carries broadcast code that is assigned by the proximity service server to the user equipment;
the assigning module, configured to assign the identifier for D2D communication to the user equipment after the receiving module receives the proximity service request; and
the sending module, configured to send the identifier for D2D communication, assigned by the assigning module to the user equipment, to the proximity service server by adding the identifier for D2D communication to the proximity service request, and after the receiving module receives the proximity service response sent by the proximity service server, send the proximity service response to the user equipment, where the proximity service response sent to the user equipment carries the identifier for D2D communication and the broadcast code.

With reference to the tenth aspect, in a first possible implementation manner, the receiving module is further configured to receive routing information that is of the proximity service server and sent by the proximity service server; and
the sending module is further configured to send the routing information that is of the proximity service server and received by the receiving module to the user equipment.

With reference to the tenth aspect or the first possible implementation manner, in a second possible implementation manner, the mobility management entity further includes a determining module, where:
the determining module is configured to: before the assigning module assigns the identifier for D2D communication to the user equipment, determine whether the user equipment is allowed to perform a proximity service; and
the assigning module is specifically configured to assign the identifier for D2D communication to the user equipment when the determining module determines that the user equipment is allowed to perform the proximity service.

An eleventh aspect provides a user equipment, including:
a sending module, configured to send a proximity service request to a network side device; and
a receiving module, configured to receive a proximity service response sent by the network side device, where the proximity service response carries a device-to-device D2D identifier assigned by the network side device to the user equipment.

With reference to the eleventh aspect, in a first possible implementation manner, the D2D identifier includes broadcast code and an identifier that is used for D2D communication; or
the proximity service request carries an identifier, for D2D communication, of the user equipment, and the D2D identifier is broadcast code.

With reference to the eleventh aspect or the first possible implementation manner, in a second possible implementation manner, the receiving module is further configured to: after the sending module sends the proximity service request to the network side device, receive routing information that is of a proximity service server and sent by the network side device; and
the sending module is further configured to send, in subsequent interaction with an application layer, the routing information of the proximity service server to an application layer server, so that the application layer server finds, according to the routing information of the proximity service server, the proximity service server with which the user equipment is registered.

With reference to the eleventh aspect or the first possible implementation manner, in a third possible implementation manner, the user equipment further includes a decrypting module, where:
the receiving module is further configured to: after the sending module sends the proximity service request to the network side device, receive a decryption key that is assigned by the proximity service server to the user equipment and sent by the network side device; and
the decrypting module is configured to: when the user equipment obtains encrypted content from the proximity service server by using an application layer server, perform decryption by using the decryption key received by the receiving module.

A twelfth aspect provides a proximity service server, including a transmitter, a receiver, a memory, and a processor connected to the transmitter, the receiver, and the memory separately, where:
the receiver is configured to receive a proximity service request sent by a user equipment;
the memory is configured to store a group of program code;
the processor is configured to invoke the program code stored in the memory, to assign a device-to-device D2D identifier to the user equipment, where the D2D identifier includes broadcast code and an identifier that is used for D2D communication; and
the transmitter is configured to send a proximity service response to the user equipment, where the proximity service response carries the D2D identifier assigned by the processor to the user equipment.

With reference to the twelfth aspect, in a first possible implementation manner, the processor is further configured to: before assigning the D2D identifier to the user equipment, determine whether the user equipment is allowed to perform a proximity service; and assign the broadcast code and the identifier that is used for D2D communication to the user equipment when determining that the user equipment is allowed to perform the proximity service.

With reference to the first possible implementation manner, in a second possible implementation manner, that the processor is configured to determine whether the user equipment is allowed to perform a proximity service includes that:
the processor is specifically configured to determine, according to subscription data of the user equipment, whether the user equipment is allowed to perform the proximity service, where the subscription data of the user equipment is obtained, from a home subscriber server according to an identifier of the user equipment carried in the proximity service request, and is locally stored by the processor, and the subscription data of the user equipment includes information about whether the user equipment is allowed to perform the proximity service.

With reference to the first possible implementation manner, in a third possible implementation manner, the transmitter is further configured to: after the receiver receives the proximity service request sent by the user equipment, send an identifier of the user equipment carried in the proximity service request and an identifier of the proximity service requested by the user equipment to a home subscriber server;
the receiver is further configured to receive feedback information of the home subscriber server; and
the processor is specifically configured to determine, according to the feedback information that is of the home subscriber server and received by the receiver, whether the user equipment is allowed to perform the proximity service, where the feedback information of the home subscriber server includes information about whether the user equipment is allowed to perform the proximity service.

With reference to the twelfth aspect, in a fourth possible implementation manner,
the receiver is specifically configured to receive the proximity service request that is sent by the user equipment by using a mobility management entity; and
the transmitter is specifically configured to send the proximity service response to the user equipment by using the mobility management entity.

With reference to the twelfth aspect or any implementation manner of the first to fourth possible implementation manners, in a fifth possible implementation manner, the transmitter is further configured to send routing information of the proximity service server to the user equipment after the processor assigns the broadcast code and the identifier that is used for D2D communication to the user equipment.

With reference to the fifth possible implementation manner, in a sixth possible implementation manner, the transmitter is specifically configured to send the routing information of the proximity service server to the user equipment by separately adding the routing information of the proximity service server to the proximity service response, or send the routing information of the proximity service server to the user equipment by adding the routing information of the proximity service server to the identifier for D2D communication.

With reference to the twelfth aspect or any implementation manner of the first to fourth possible implementation manners, in a seventh possible implementation manner, the processor is further configured to assign a decryption key to the user equipment after assigning the broadcast code and the identifier that is used for D2D communication to the user equipment; and
the transmitter is further configured to send, to the user equipment, the decryption key assigned by the processor, so that the user equipment performs decryption by using the decryption key when obtaining encrypted content from the proximity service server by using an application layer server.

With reference to the second possible implementation manner, in an eighth possible implementation manner, the proximity service request further carries proximity discovery configuration information of the user equipment, or the subscription data of the user equipment further carries proximity discovery configuration information of the user equipment; and
the processor is further configured to store the proximity discovery configuration information of the user equipment after the receiver receives the proximity discovery configuration information of the user equipment.

With reference to the third possible implementation manner, in a ninth possible implementation manner, the proximity service request further carries proximity discovery configuration information of the user equipment, or the feedback information of the home subscriber server further carries proximity discovery configuration information of the user equipment; and
the processor is further configured to store the proximity discovery configuration information of the user equipment after the receiver receives the proximity discovery configuration information of the user equipment.

With reference to the third possible implementation manner, in a tenth possible implementation manner, if the proximity service request further carries the identifier of the proximity service requested by the user equipment, the identifier, sent by the transmitter to the home subscriber server, of the proximity service requested by the user equipment is directly acquired from the proximity service request; or
if a message name of the proximity service request indicates the proximity service requested by the user equipment, the identifier, sent by the transmitter to the home subscriber server, of the proximity service requested by the user equipment is generated according to the message name of the proximity service request.

A thirteenth aspect provides a mobility management entity, including a transmitter, a receiver, a memory, and a processor connected to the transmitter, the receiver, and the memory separately, where:
the receiver is configured to receive a proximity service request sent by a user equipment;
the memory is configured to store a group of program code;
the processor is configured to invoke the program code stored in the memory, to assign a device-to-device D2D identifier to the user equipment; and
the transmitter is configured to send a proximity service response to the user equipment, where the proximity service response carries the D2D identifier assigned by the processor to the user equipment.

With reference to the thirteenth aspect, in a first possible implementation manner, the D2D identifier includes broadcast code and an identifier that is used for D2D communication;
the processor is specifically configured to assign the broadcast code and the identifier that is used for D2D communication to the user equipment.

With reference to the first possible implementation manner, in a second possible implementation manner, the processor is further configured to: before assigning the broadcast code and the identifier that is used for D2D communication to the user equipment, determine whether the user equipment is allowed to perform a proximity service; and assign the broadcast code and the identifier that is used for D2D communication to the user equipment when determining that the user equipment is allowed to perform the proximity service.

With reference to the first or second possible implementation manner, in a third possible implementation manner, the transmitter is further configured to send, to a proximity service server, the broadcast code and the identifier that is used for D2D communication which are assigned by the processor to the user equipment, so that the proximity service server stores the broadcast code and the identifier that is used for D2D communication.

With reference to the third possible implementation manner, in a fourth possible implementation manner, the receiver is further configured to: after the transmitter sends, to the proximity service server, the broadcast code and the identifier that is used for D2D communication which are assigned by the processor to the user equipment, receive routing information that is of the proximity service server and sent by the proximity service server; and
the transmitter is further configured to send the routing information that is of the proximity service server and received by the receiver to the user equipment.

With reference to the third possible implementation manner, in a fifth possible implementation manner, the receiver is further configured to: after the transmitter sends, to the proximity service server, the broadcast code and the identifier that is used for D2D communication which are assigned by the processor to the user equipment, receive a decryption key that is assigned by the proximity service server to the user equipment; and
the transmitter is further configured to send the decryption key received by the receiver to the user equipment, so that the user equipment performs decryption by using the decryption key when obtaining encrypted content from the proximity service server by using an application layer server.

With reference to the thirteenth aspect, in a sixth possible implementation manner, the proximity service request received by the receiver carries the identifier, for D2D communication, of the user equipment; and the D2D identifier assigned by the processor to the user equipment is broadcast code.

With reference to the sixth possible implementation manner, in a seventh possible implementation manner, the transmitter is further configured to send, to a proximity service server, the identifier for D2D communication that is carried in the proximity service request and the broadcast code that is assigned by the processor to the user equipment, so that the proximity service server stores the broadcast code and the identifier that is used for D2D communication.

With reference to the seventh possible implementation manner, in an eighth possible implementation manner, the receiver is further configured to: after the transmitter sends, to the proximity service server, the identifier for D2D communication that is carried in the proximity service request and the broadcast code that is assigned by the processor to the user equipment, receive routing information that is of the proximity service server and sent by the proximity service server; and
the transmitter is further configured to send the routing information that is of the proximity service server and received by the receiver to the user equipment.

With reference to the seventh possible implementation manner, in a ninth possible implementation manner, the receiver is further configured to: after the transmitter sends, to the proximity service server, the identifier for D2D communication that is carried in the proximity service request and the broadcast code that is assigned by the processor to the user equipment, receive a decryption key that is assigned by the proximity service server to the user equipment; and
the transmitter is further configured to send the decryption key received by the receiver to the user equipment, so that the user equipment performs decryption by using the decryption key when obtaining encrypted content from the proximity service server by using an application layer server.

With reference to any implementation manner of the sixth to ninth possible implementation manners, in a tenth possible implementation manner, the processor is further configured to: before assigning the broadcast code to the user equipment, determine whether the user equipment is allowed to perform a proximity service; and assign the broadcast code to the user equipment when determining that the user equipment is allowed to perform the proximity service.

With reference to the second or tenth possible implementation manner, in an eleventh possible implementation manner, that the processor is configured to determine whether the user equipment is allowed to perform a proximity service includes that:
the processor is specifically configured to determine, according to subscription data of the user equipment, whether the user equipment is allowed to perform the proximity service, where the subscription data of the user equipment is obtained, from a home subscriber server according to an identifier of the user equipment carried in the proximity service request, and is locally stored by the processor, and the subscription data of the user equipment includes information about whether the user equipment is allowed to perform the proximity service.

With reference to the second or tenth possible implementation manner, in a twelfth possible implementation manner, the transmitter is further configured to: after the receiver receives the proximity service request sent by the user equipment, send an identifier of the user equipment carried in the proximity service request and an identifier of the proximity service requested by the user equipment to a home subscriber server;
the receiver is further configured to receive feedback information of the home subscriber server; and
the processor is specifically configured to determine, according to the feedback information that is of the home subscriber server and received by the receiver, whether the user equipment is allowed to perform the proximity service, where the feedback information of the home subscriber server includes information about whether the user equipment is allowed to perform the proximity service.

With reference to the twelfth possible implementation manner, in a thirteenth possible implementation manner, if the proximity service request further carries the identifier of the proximity service requested by the user equipment, the identifier, sent by the transmitter to the home subscriber server, of the proximity service requested by the user equipment is directly acquired from the proximity service request; or
if a message name of the proximity service request indicates the proximity service requested by the user equipment, the identifier, sent by the transmitter to the home subscriber server, of the proximity service requested by the user equipment is generated according to the message name of the proximity service request.

A fourteenth aspect provides a proximity service server, including a transmitter, a receiver, a memory, and a processor connected to the transmitter, the receiver, and the memory separately, where:
the receiver is configured to receive a proximity service request sent by a mobility management entity, where the proximity service request sent by the mobility management entity carries broadcast code assigned by the mobility management entity to a user equipment;
the memory is configured to store a group of program code;
the processor is configured to invoke the program code stored in the memory, to assign an identifier for D2D communication to the user equipment after the receiver receives the proximity service request; and
the transmitter is configured to send the identifier for D2D communication, assigned by the processor, to the mobility management entity by adding the identifier for D2D communication to a proximity service response.

With reference to the fourteenth aspect, in a first possible implementation manner, the processor is further configured to: after assigning the identifier for D2D communication to the user equipment, store the identifier used for D2D communication and assigned to the user equipment and the broadcast code that is received by the receiver from the mobility management entity.

With reference to the fourteenth aspect, in a second possible implementation manner, the transmitter is further configured to send routing information of the proximity service server to the mobility management entity after the processor assigns the identifier for D2D communication to the user equipment, so that the mobility management entity sends the routing information of the proximity service server to the user equipment.

With reference to the second possible implementation manner, in a third possible implementation manner, the transmitter is specifically configured to send the routing information of the proximity service server to the mobility management entity by adding the routing information of the proximity service server to the identifier for D2D communication that is assigned by the processor to the user equipment.

With reference to the fourteenth aspect, in a fourth possible implementation manner, the processor is further configured to assign a decryption key to the user equipment after assigning the identifier for D2D communication to the user equipment; and
the transmitter is further configured to send, to the user equipment by using the mobility management entity, the decryption key assigned by the processor, so that the user equipment performs decryption by using the decryption key when obtaining encrypted content from the proximity service server by using an application layer server.

A fifteenth aspect provides a mobility management entity, including: a transmitter, a receiver, a memory, and a processor connected to the transmitter, the receiver, and the memory separately, where:
the receiver is configured to receive a proximity service request sent by a user equipment; and after the transmitter sends broadcast code, assigned by the processor, to a proximity service server by adding the broadcast code to the proximity service request, receive a proximity service response sent by the proximity service server, where the proximity service response sent by the proximity service server carries an identifier for D2D communication that is assigned by the proximity service server to the user equipment;
the memory is configured to store a group of program code;
the processor is configured to invoke the program code stored in the memory, to assign the broadcast code to the user equipment after the receiver receives the proximity service request; and
the transmitter is configured to send the broadcast code, assigned by the processor, to the proximity service server by adding the broadcast code to the proximity service request, and after the receiver receives the proximity service response sent by the proximity service server, send the proximity service response to the user equipment, where the proximity service response sent to the user equipment carries the broadcast code and the identifier that is used for D2D communication.

With reference to the fifteenth aspect, in a first possible implementation manner, the receiver is further configured to receive routing information that is of the proximity service server and sent by the proximity service server; and
the transmitter is further configured to send the routing information that is of the proximity service server and received by the receiver to the user equipment.

With reference to the fifteenth aspect or the first possible implementation manner, in a second possible implementation manner, the processor is further configured to: before assigning the broadcast code to the user equipment, determine whether the user equipment is allowed to perform a proximity service; and assign the broadcast code to the user equipment when determining that the user equipment is allowed to perform the proximity service.

A sixteenth aspect provides a proximity service server, including: a transmitter, a receiver, a memory, and a processor connected to the transmitter, the receiver, and the memory separately, where:
the receiver is configured to receive a proximity service request sent by a mobility management entity, where the proximity service request carries an identifier for D2D communication that is assigned by the mobility management entity to a user equipment;
the memory is configured to store a group of program code;
the processor is configured to invoke the program code stored in the memory, to assign broadcast code to the user equipment after the receiver receives the proximity service request; and
the transmitter is configured to send a proximity service response to the mobility management entity, where the proximity service response carries the broadcast code assigned by the processor to the user equipment.

With reference to the sixteenth aspect, in a first possible implementation manner, the processor is further configured to: after assigning the broadcast code to the user equipment, store the broadcast code that is assigned to the user equipment and the identifier for D2D communication that is received by the receiver from the mobility management entity.

With reference to the sixteenth aspect, in a second possible implementation manner, the transmitter is further configured to send routing information of the proximity service server to the mobility management entity after the processor assigns the broadcast code to the user equipment, so that the mobility management entity sends the routing information of the proximity service server to the user equipment.

With reference to the sixteenth aspect, in a third possible implementation manner, the processor is further configured to assign a decryption key to the user equipment after assigning the broadcast code to the user equipment; and
the transmitter is further configured to send, to the user equipment by using the mobility management entity, the decryption key assigned by the processor, so that the user equipment performs decryption by using the decryption key when obtaining encrypted content from the proximity service server by using an application layer server.

A seventeenth aspect provides a mobility management entity, including a transmitter, a receiver, a memory, and a processor connected to the transmitter, the receiver, and the memory separately, where:
the receiver is configured to receive a proximity service request sent by a user equipment; and after the transmitter sends an identifier for D2D communication, assigned by the processor to the user equipment, to a proximity service server by adding the identifier for D2D communication to the proximity service request, receive a proximity service response sent by the proximity service server, where the proximity service response sent by the proximity service server carries broadcast code that is assigned by the proximity service server to the user equipment;
the memory is configured to store a group of program code;
the processor is configured to invoke the program code stored in the memory, to assign the identifier for D2D communication to the user equipment after the receiver receives the proximity service request; and
the transmitter is configured to send the identifier for D2D communication, assigned by the processor to the user equipment, to the proximity service server by adding the identifier for D2D communication to the proximity service request; and after the receiver receives the proximity service response sent by the proximity service server, send the proximity service response to the user equipment, where the proximity service response sent to the user equipment carries the identifier for D2D communication and the broadcast code.

With reference to the seventeenth aspect, in a first possible implementation manner, the receiver is further configured to receive routing information that is of the proximity service server and sent by the proximity service server; and
the transmitter is further configured to send the routing information that is of the proximity service server and received by the receiver to the user equipment.

With reference to the seventeenth aspect or the first possible implementation manner, in a second possible implementation manner, the processor is further configured to: before assigning the identifier for D2D communication to the user equipment, determine whether the user equipment is allowed to perform a proximity service; and assign the identifier for D2D communication to the user equipment when determining that the user equipment is allowed to perform the proximity service.

An eighteenth aspect provides a user equipment, including:
a transmitter, configured to send a proximity service request to a network side device; and
a receiver, configured to: after the transmitter sends the proximity service request, receive a proximity service response sent by the network side device, where the proximity service response carries a device-to-device D2D identifier assigned by the network side device to the user equipment.

With reference to the eighteenth aspect, in a first possible implementation manner, the receiver is further configured to: after the transmitter sends the proximity service request, receive routing information that is of a proximity service server and sent by the network side device; and
the transmitter is further configured to send, in subsequent interaction with an application layer, the routing information that is of the proximity service server and received by the receiver to an application layer server, so that the application layer server finds, according to the routing information of the proximity service server, the proximity service server with which the user equipment is registered.

With reference to the eighteenth aspect or the first possible implementation manner, in a second possible implementation manner, the user equipment further includes a processor, where:
the receiver is further configured to: after the transmitter sends the proximity service request, receive a decryption key that is assigned by the proximity service server to the user equipment and sent by the network side device; and
the processor is configured to: when the user equipment obtains encrypted content from the proximity service server by using the application layer server, perform decryption by using the decryption key received by the receiver.

The technical effects of the present invention are that: after receiving a proximity service request sent by a user equipment, a network side device assigns a D2D identifier to the user equipment. In this way, the user equipment may announce its existence at a current location by using the D2D identifier, so that another device discovers the user equipment; and the network side device may further effectively control discovery and communication of the user equipment by using the D2D identifier, so that an operator can provide a proximity service that is effectively controlled by a network.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention.
FIG. 1 is a flowchart of an embodiment of a user equipment registration method according to the present invention;
FIG. 2 is a flowchart of another embodiment of a user equipment registration method according to the present invention;
FIG. 3 is a flowchart of still another embodiment of a user equipment registration method according to the present invention;
FIG. 4 is a flowchart of yet another embodiment of a user equipment registration method according to the present invention;
FIG. 5 is a flowchart of still yet another embodiment of a user equipment registration method according to the present invention;
FIG. 6 is a flowchart of a further embodiment of a user equipment registration method according to the present invention;
FIG. 7 is a flowchart of a still further embodiment of a user equipment registration method according to the present invention;
FIG. 8 is a flowchart of a yet further embodiment of a user equipment registration method according to the present invention;
FIG. 9 is a schematic structural diagram of an embodiment of a proximity service server according to the present invention;
FIG. 10 is a schematic structural diagram of another embodiment of a proximity service server according to the present invention;
FIG. 11 is a schematic structural diagram of an embodiment of a mobility management entity according to the present invention;
FIG. 12 is a schematic structural diagram of another embodiment of a mobility management entity according to the present invention;
FIG. 13 is a schematic structural diagram of an embodiment of a proximity registration system according to the present invention;
FIG. 14 is a schematic structural diagram of still another embodiment of a proximity service server according to the present invention;
FIG. 15 is a schematic structural diagram of still another embodiment of a mobility management entity according to the present invention;
FIG. 16 is a schematic structural diagram of another embodiment of a proximity registration system according to the present invention;
FIG. 17 is a schematic structural diagram of yet another embodiment of a proximity service server according to the present invention;
FIG. 18 is a schematic structural diagram of yet another embodiment of a mobility management entity according to the present invention;
FIG. 19 is a schematic structural diagram of an embodiment of a user equipment according to the present invention;
FIG. 20 is a schematic structural diagram of still yet another embodiment of a proximity service server according to the present invention;
FIG. 21 is a schematic structural diagram of still yet another embodiment of a mobility management entity according to the present invention;
FIG. 22 is a schematic structural diagram of a further embodiment of a proximity service server according to the present invention;
FIG. 23 is a schematic structural diagram of a further embodiment of a mobility management entity according to the present invention;
FIG. 24 is a schematic structural diagram of a still further embodiment of a proximity service server according to the present invention;
FIG. 25 is a schematic structural diagram of a still further embodiment of a mobility management entity according to the present invention; and
FIG. 26 is a schematic structural diagram of another embodiment of a user equipment according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. The invention is defined in the claims.

In the following embodiments of the present invention, a proximity service server is a server that is on a network of an operator and that is used to provide a proximity service to a user equipment.

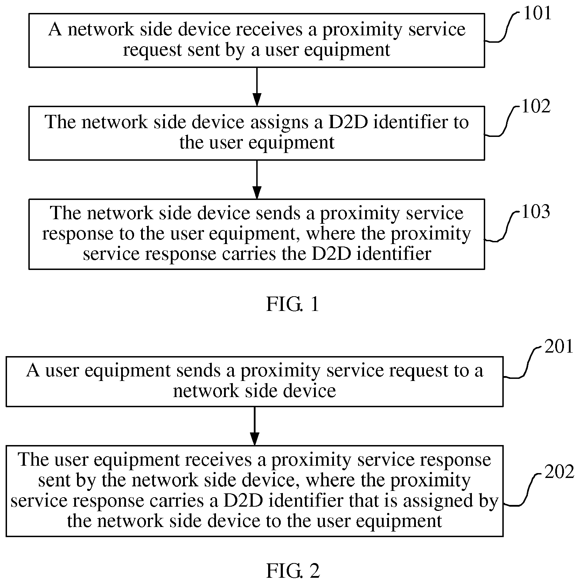

FIG. 1 is a flowchart of an embodiment of a user equipment registration method according to the present invention. As shown in FIG. 1, the user equipment registration method may include:
Step 101: A network side device receives a proximity service request sent by a user equipment.

Step 102: The network side device assigns a device-to-device (D2D) identifier to the user equipment.

Step 103: The network side device sends a proximity service response to the user equipment, where the proximity service response carries the D2D identifier.

In an implementation manner of this embodiment, the network side device is a proximity service server, and the D2D identifier includes broadcast code and an identifier that is used for D2D communication. The proximity service server.

In this implementation manner, before step 102, the proximity service server may further determine whether the user equipment is allowed to perform a proximity service; then, step 102 may be that: the proximity service server assigns the broadcast code and the identifier that is used for D2D communication to the user equipment if the user equipment is allowed to perform the proximity service.

Specifically, in a specific implementation manner, that the proximity service server determines whether the user equipment is allowed to perform the proximity service may be that: the proximity service server determines, according to subscription data of the user equipment, whether the user equipment is allowed to perform the proximity service, where the subscription data of the user equipment is obtained, from a home subscriber server according to an identifier of the user equipment carried in the proximity service request, and is locally stored by the proximity service server, and the subscription data of the user equipment includes information about whether the user equipment is allowed to perform the proximity service.

In another specific implementation manner, that the proximity service server determines whether the user equipment is allowed to perform a proximity service may be that: the proximity service server sends, after receiving the proximity service request sent by the user equipment, an identifier of the user equipment carried in the proximity service request and an identifier of the proximity service requested by the user equipment to a home subscriber server; receives feedback information of the home subscriber server; and determines, according to the feedback information of the home subscriber server, whether the user equipment is allowed to perform the proximity service, where the feedback information of the home subscriber server includes information about whether the user equipment is allowed to perform the proximity service.

In the foregoing two specific implementation manners, the identifier of the user equipment carried in the proximity service request may be a device identifier of the user equipment, where the device identifier of the user equipment may be an international mobile subscriber identity (IMSI) or a mobile subscriber integrated service digital network number (MSISDN) of the user equipment, a temporary device identifier assigned by a network, or the like.

In this implementation manner, step 101 may be that: the proximity service server receives the proximity service request that is sent by the user equipment by using a mobility management entity (MME); and
step 103 may be that: the proximity service server sends the proximity service response to the user equipment by using the MME.

Further, before the proximity service server receives the proximity service request that is sent by the user equipment by using the MME, the method further includes that: the mobility management entity determines whether the user equipment is allowed to perform a proximity service; and if the user equipment is allowed to perform the proximity service, the MME sends, to the proximity service server, the proximity service request sent by the user equipment.

In this implementation manner, after the proximity service server assigns the broadcast code and the identifier that is used for D2D communication to the user equipment, the proximity service server may further send routing information of the proximity service server to the user equipment. Specifically, the proximity service server may send the routing information of the proximity service server to the user equipment by separately adding the routing information of the proximity service server to the proximity service response; or the proximity service server may send the routing information of the proximity service server to the user equipment by adding the routing information of the proximity service server to the identifier for D2D communication.

In this implementation manner, after the proximity service server assigns the broadcast code and the identifier that is used for D2D communication to the user equipment, the proximity service server may further assign a decryption key to the user equipment, and send the decryption key to the user equipment, so that the user equipment performs decryption by using the decryption key when obtaining encrypted content from the proximity service server by using an application layer server.

In another implementation manner of this embodiment, the network side device may be a proximity service server and an MME, and the D2D identifier includes broadcast code and an identifier that is used for D2D communication.

In this implementation manner, step 101 may be that: the MME receives the proximity service request sent by the user equipment; and step 102 may be that: the MME assigns the broadcast code to the user equipment, and sends the broadcast code to the proximity service server by adding the broadcast code to the proximity service request, and the proximity service server assigns the identifier for D2D communication to the user equipment.

Further, after the proximity service server assigns the identifier for D2D communication to the user equipment, the proximity service server may further send, to the MME, the identifier used for D2D communication and assigned to the user equipment, and store the identifier used for D2D communication and assigned to the user equipment and the broadcast code that is received from the MME.

Further, after the proximity service server assigns the identifier for D2D communication to the user equipment, the proximity service server may further send routing information of the proximity service server to the MME, so that the MME sends the routing information of the proximity service server to the user equipment. Specifically, the proximity service server may send the routing information of the proximity service server to the MME by adding the routing information of the proximity service server to the identifier used for D2D communication and assigned to the user equipment.

Further, after the proximity service server assigns the identifier for D2D communication to the user equipment, the proximity service server may further assign a decryption key to the user equipment, and send the decryption key to the user equipment by using the MME, so that the user equipment performs decryption by using the decryption key when obtaining encrypted content from the proximity service server by using an application layer server.

In this implementation manner, before the MME assigns the broadcast code to the user equipment, the MME may further determine whether the user equipment is allowed to perform a proximity service; then, that the MME assigns the broadcast code to the user equipment may be that: the MME assigns the broadcast code to the user equipment if the user equipment is allowed to perform the proximity service.

In another implementation manner of this embodiment, the network side device may be an MME, and the D2D identifier includes broadcast code and an identifier that is used for D2D communication. In this implementation manner, step 101 may be that: the MME receives the proximity service request sent by the user equipment; and step 102 may be that: the MME assigns the broadcast code and the identifier that is used for D2D communication to the user equipment.

In this implementation manner, before the MME assigns the broadcast code and the identifier that is used for D2D communication to the user equipment, the MME may further determine whether the user equipment is allowed to perform a proximity service; then, that the MME assigns the broadcast code and the identifier that is used for D2D communication to the user equipment may be that: the MME assigns the broadcast code and the identifier that is used for D2D communication to the user equipment if the user equipment is allowed to perform the proximity service.

Further, after the MME assigns the broadcast code and the identifier that is used for D2D communication to the user equipment, the MME may further send, to a proximity service server, the broadcast code and the identifier that is used for D2D communication which are assigned to the user equipment, so that the proximity service server stores the broadcast code and the identifier that is used for D2D communication.

Further, after the MME sends, to the proximity service server, the broadcast code and the identifier that is used for D2D communication which are assigned to the user equipment, the MME may further receive routing information that is of the proximity service server and sent by the proximity service server, and send the routing information of the proximity service server to the user equipment.

Further, after the MME sends, to the proximity service server, the broadcast code and the identifier that is used for D2D communication which are assigned to the user equipment, the MME may further receive a decryption key that is assigned by the proximity service server to the user equipment, and send the decryption key to the user equipment, so that the user equipment performs decryption by using the decryption key when obtaining encrypted content from the proximity service server by using an application layer server.

In still another implementation manner of this embodiment, the network side device may be an MME and a proximity service server, and the D2D identifier includes broadcast code and an identifier that is used for D2D communication.

In this implementation manner, step 101 may be that: the MME receives the proximity service request sent by the user equipment; and step 102 may be that: the MME assigns the identifier for D2D communication to the user equipment, and sends, to the proximity service server by adding the identifier for D2D communication to the proximity service request, the identifier used for D2D communication and assigned to the user equipment; and the proximity service server assigns the broadcast code to the user equipment.

Further, after the proximity service server assigns the broadcast code to the user equipment, the proximity service server may further send, to the MME, the broadcast code that is assigned to the user equipment, and store the broadcast code that is assigned to the user equipment and the identifier for D2D communication that is received from the MME.

Further, after the proximity service server assigns the broadcast code to the user equipment, the proximity service server may further send routing information of the proximity service server to the MME, so that the MME sends the routing information of the proximity service server to the user equipment.

Further, after the proximity service server assigns the broadcast code to the user equipment, the proximity service server may further assign a decryption key to the user equipment, and send the decryption key to the user equipment by using the MME, so that the user equipment performs decryption by using the decryption key when obtaining encrypted content from the proximity service server by using an application layer server.

Further, before the MME assigns the identifier for D2D communication to the user equipment, the MME may further determine whether the user equipment is allowed to perform a proximity service; then, that the MME assigns the identifier for D2D communication to the user equipment may be that: the MME assigns the identifier for D2D communication to the user equipment if the user equipment is allowed to perform the proximity service.

In still another implementation manner of this embodiment, the proximity service request carries an identifier, for D2D communication, of the user equipment; the network side device is an MME; and the D2D identifier is broadcast code.

In this implementation manner, after the network side device assigns the D2D identifier to the user equipment, the MME may further send, to a proximity service server, the broadcast code that is assigned to the user equipment and the identifier for D2D communication that is carried in the proximity service request, so that the proximity service server stores the broadcast code and the identifier that is used for D2D communication.

Further, after the MME sends, to the proximity service server, the broadcast code that is assigned to the user equipment and the identifier for D2D communication that is carried in the proximity service request, the MME may further receive routing information that is of the proximity service server and sent by the proximity service server, and send the routing information of the proximity service server to the user equipment.

Further, after the MME sends, to the proximity service server, the broadcast code that is assigned to the user equipment and the identifier for D2D communication that is carried in the proximity service request, the MME may further receive a decryption key that is assigned by the proximity service server to the user equipment, and send the decryption key to the user equipment, so that the user equipment performs decryption by using the decryption key when obtaining encrypted content from the proximity service server by using an application layer server.

In this implementation manner, before the network side device assigns the D2D identifier to the user equipment, the MME may further determine whether the user equipment is allowed to perform a proximity service; then, that the network side device assigns the D2D identifier to the user equipment may be that: the MME assigns the broadcast code to the user equipment if the user equipment is allowed to perform the proximity service.

In this embodiment, in a specific implementation manner, that the MME determines whether the user equipment is allowed to perform a proximity service may be that: the MME determines, according to subscription data of the user equipment, whether the user equipment is allowed to perform the proximity service, where the subscription data of the user equipment is obtained, from a home subscriber server according to an identifier of the user equipment carried in the proximity service request, and is locally stored by the MME, and the subscription data of the user equipment includes information about whether the user equipment is allowed to perform the proximity service.

In another specific implementation manner, that the MME determines whether the user equipment is allowed to perform a proximity service may be that: the MME sends, after receiving the proximity service request sent by the user equipment, an identifier of the user equipment carried in the proximity service request and an identifier of the proximity service requested by the user equipment to a home subscriber server; receives feedback information of the home subscriber server; and determines, according to the feedback information of the home subscriber server, whether the user equipment is allowed to perform the proximity service, where the feedback information of the home subscriber server includes information about whether the user equipment is allowed to perform the proximity service.

It should be noted that, when the proximity service request carries a device identifier of the user equipment, the identifier of the user equipment carried in the proximity service request is the device identifier of the user equipment, where the device identifier of the user equipment may be an IMSI or an MSISDN of the user equipment, a temporary device identifier assigned by a network, or the like. When the proximity service request carries the identifier, for D2D communication, of the user equipment, the identifier of the user equipment carried in the proximity service request is the identifier, for D2D communication, of the user equipment, where the identifier, for D2D communication, of the user equipment may be an IMSI, an MSISDN, or an Internet Protocol (IP) address of the user equipment, or another identifier for D2D communication that is newly defined and configured on the equipment.

In this embodiment, the proximity service request may further carry proximity discovery configuration information of the user equipment, or the subscription data of the user equipment further carries proximity discovery configuration information of the user equipment. Further, the proximity service server stores the proximity discovery configuration information of the user equipment after the proximity service server receives the proximity discovery configuration information of the user equipment.

In this embodiment, the proximity service request further carries proximity discovery configuration information of the user equipment, or the feedback information of the home subscriber server further carries proximity discovery configuration information of the user equipment. Further, the proximity service server stores the proximity discovery configuration information of the user equipment after the proximity service server receives the proximity discovery configuration information of the user equipment.

In this embodiment, the proximity service request further carries the identifier of the proximity service requested by the user equipment, and in this case, the identifier, sent to the home subscriber server, of the proximity service requested by the user equipment is directly acquired from the proximity service request; or if a message name of the proximity service request indicates the proximity service requested by the user equipment, the identifier, sent to the home subscriber server, of the proximity service requested by the user equipment is generated according to the message name of the proximity service request.

In this embodiment, after receiving a proximity service request sent by a user equipment, a network side device assigns a D2D identifier to the user equipment. In this way, the user equipment may announce its existence at a current location by using the D2D identifier, so that another device discovers the user equipment; and the network side device may further effectively control discovery and communication of the user equipment by using the D2D identifier, so that an operator can provide a proximity service that is effectively controlled by a network.

FIG. 2 is a flowchart of another embodiment of a user equipment registration method according to the present invention. As shown in FIG. 2, the user equipment registration method may include:
Step 201: A user equipment sends a proximity service request to a network side device.

Step 202: The user equipment receives a proximity service response sent by the network side device, where the proximity service response carries a D2D identifier assigned by the network side device to the user equipment.

In an implementation manner of this embodiment, the D2D identifier includes broadcast code and an identifier that is used for D2D communication.

In another implementation manner of this embodiment, the proximity service request carries an identifier, for D2D communication, of the user equipment, and the D2D identifier is broadcast code.

Further, after step 201, the user equipment may further receive routing information that is of a proximity service server and sent by the network side device. In this way, in subsequent interaction with an application layer, the user equipment may send the routing information of the proximity service server to an application layer server, so that the application layer server finds, according to the routing information of the proximity service server, the proximity service server with which the user equipment is registered.

Further, after step 201, the user equipment may further receive a decryption key that is assigned by the proximity service server to the user equipment and sent by the network side device. In this way, the user equipment may perform decryption by using the decryption key when obtaining encrypted content from the proximity service server by using an application layer server.

In this embodiment, after sending a proximity service request to a network side device, a user equipment receives a D2D identifier assigned by the network side device to the user equipment. In this way, the user equipment may announce its existence at a current location by using the D2D identifier, so that another device discovers the user equipment; and the network side device may further effectively control discovery and communication of the user equipment by using the D2D identifier, so that an operator can provide a proximity service that is effectively controlled by a network.

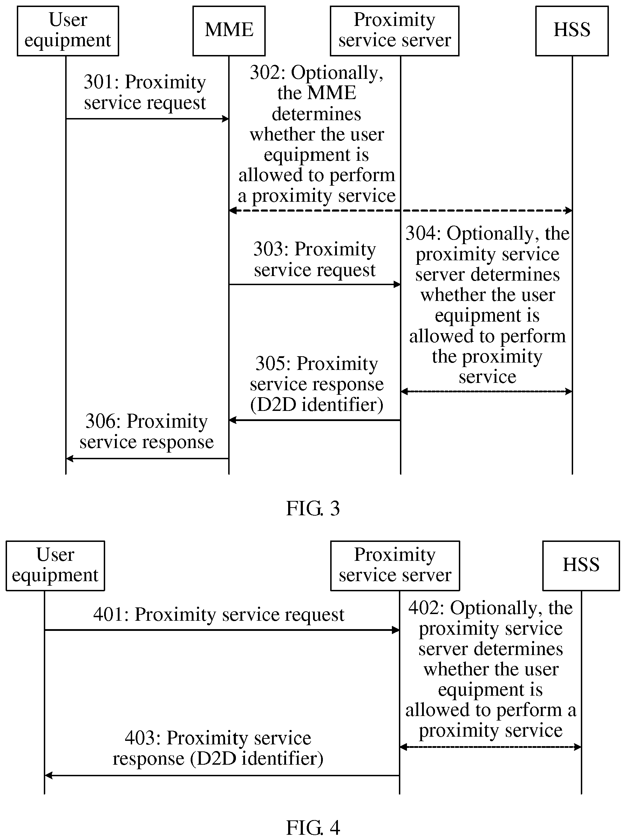

FIG. 3 is a flowchart of still another embodiment of a user equipment registration method according to the present invention. As shown in FIG. 3, the user equipment registration method may include:
Step 301: A user equipment sends a proximity service request to an MME.

The proximity service request carries a device identifier of the user equipment, where the device identifier of the user equipment may be an IMSI or an MSISDN of the user equipment, a temporary device identifier assigned by a network, or the like.

The proximity service request may be an existing non-access stratum (NAS) message such as a network attachment request message or a location update message, an access stratum (AS) message sent by the user equipment to the MME by using a base station, or a newly defined message. If the proximity service request uses the existing message, the proximity service request further carries an identifier of a proximity service requested by the user equipment, where the identifier of the proximity service requested by the user equipment is used to indicate the proximity service requested by the user equipment.

If the proximity service request uses the newly defined message, a message name of the proximity service request indicates a proximity service requested by the user equipment. In other words, if the proximity service request uses the newly defined message, the proximity service request may not carry an identifier of the proximity service requested by the user equipment.

Optionally, the proximity service request may further carry proximity discovery configuration information of the user equipment. The proximity discovery configuration information of the user equipment may be one of the following four cases:
1) one or a combination of "can discover others, but cannot be discovered by others", "query each time whether the user equipment can be discovered by a peer party", "an identifier list of devices that are allowed to discover the user equipment", and "an identifier list of devices that are not allowed to discover the user equipment";
2) one or a combination of "can discover others, and can be discovered by others", "query each time whether the user equipment can be discovered by a peer party", "an identifier list of devices that are allowed to discover the user equipment", and "an identifier list of devices that are not allowed to discover the user equipment";
3) one or a combination of "cannot discover others, and cannot be discovered by others", "query each time whether the user equipment can be discovered by a peer party", "an identifier list of devices that are allowed to discover the user equipment", and "an identifier list of devices that are not allowed to discover the user equipment"; and
4) one or a combination of "cannot discover others, but can be discovered by others", "query each time whether the user equipment can be discovered by a peer party", "an identifier list of devices that are allowed to discover the user equipment", and "an identifier list of devices that are not allowed to discover the user equipment".

Step 302: Optionally, the MME determines whether the user equipment is allowed to perform a proximity service. If yes, step 303 is executed; and if the MME determines that the user equipment is not allowed to perform the proximity service, the MME directly rejects the proximity service request of the user equipment.

In a specific implementation manner, that the MME determines whether the user equipment is allowed to perform a proximity service may be that: the MME determines, according to subscription data of the user equipment, whether the user equipment is allowed to perform the proximity service, where the subscription data of the user equipment is obtained, from a home subscriber server (HSS) according to the device identifier of the user equipment carried in the proximity service request, and is locally stored by the MME, and the subscription data of the user equipment includes information about whether the user equipment is allowed to perform the proximity service.

Specially, if the MME has obtained the subscription data of the user equipment before receiving the proximity service request in step 301, the MME does not need to obtain the subscription data from the HSS, and may directly search, locally on the MME according to the device identifier of the user equipment, for the subscription data of the user equipment stored by the MME.

Optionally, the subscription data of the user equipment includes proximity discovery configuration information of the user equipment; reference may be made to the description in step 301 for a specific description of the proximity discovery configuration information of the user equipment, which is not described repeatedly in this step.

In another specific implementation manner, that the MME determines whether the user equipment is allowed to perform a proximity service may be that: the MME sends, after receiving the proximity service request sent by the user equipment, the device identifier of the user equipment carried in the proximity service request and an identifier of the proximity service requested by the user equipment to an HSS; receives feedback information of the HSS; and determines, according to the feedback information of the HSS, whether the user equipment is allowed to perform the proximity service, where the feedback information of the HSS includes information about whether the user equipment is allowed to perform the proximity service.

In this implementation manner, each time after the MME receives the proximity service request in step 301, the MME sends the device identifier of the user equipment and the identifier of the proximity service requested by the user equipment to the HSS, and the HSS feeds back, to the MME, the information about whether the user equipment is allowed to perform the proximity service.

In this implementation manner, if the proximity service request further carries the identifier of the proximity service requested by the user equipment, the identifier, sent to the HSS, of the proximity service requested by the user equipment is directly acquired from the proximity service request; or if a message name of the proximity service request indicates the proximity service requested by the user equipment, the identifier, sent to the HSS, of the proximity service requested by the user equipment is generated according to the message name of the proximity service request.

Optionally, the feedback information of the HSS may further include proximity discovery configuration information of the user equipment; reference may be made to the description in step 301 for a specific description of the proximity discovery configuration information of the user equipment, which is not described repeatedly in this step.

Step 303: The MME forwards the proximity service request to a proximity service server.

Specifically, when the MME does not execute step 302, or determines, in step 302, that the user equipment is allowed to perform the proximity service, the MME forwards the proximity service request to the proximity service server.

Optionally, the proximity service request may further carry proximity discovery configuration information of the user equipment. Specifically, if the proximity service request sent by the user equipment in step 301 carries the proximity discovery configuration information, the proximity discovery configuration information in this step may be the proximity discovery configuration information carried in a proximity discovery request in step 301; if the proximity service request sent by the user equipment in step 301 does not carry the proximity discovery configuration information, and the subscription data of the user equipment or the feedback information of the HSS in step 302 carries the proximity discovery configuration information, the proximity discovery configuration information in this step may be the proximity discovery configuration information carried in the subscription data of the user equipment or the feedback information of the HSS in step 302; and if the proximity service request sent by the user equipment in step 301 carries the proximity discovery configuration information, and the subscription data of the user equipment or the feedback information of the HSS in step 302 also carries the proximity discovery configuration information, the proximity discovery configuration information in this step may be the proximity discovery configuration information originally carried in the proximity service request sent by the user equipment in step 301, or the proximity discovery configuration information carried in the subscription data of the user equipment or the feedback information of the HSS in step 302.

Step 304: Optionally, the proximity service server determines whether the user equipment is allowed to perform a proximity service.

If yes, step 305 is executed; and if the proximity service server determines that the user equipment is not allowed to perform the proximity service, the proximity service server directly rejects the proximity service request of the user equipment.

In a specific implementation manner, that the proximity service server determines whether the user equipment is allowed to perform a proximity service may be that: the proximity service server determines, according to subscription data of the user equipment, whether the user equipment is allowed to perform the proximity service, where the subscription data of the user equipment is obtained, from an HSS according to the device identifier of the user equipment carried in the proximity service request, and is locally stored by the proximity service server, and the subscription data of the user equipment includes information about whether the user equipment is allowed to perform the proximity service.

Specially, if the proximity service server has obtained the subscription data of the user equipment before receiving the proximity service request in step 301, the proximity service server does not need to obtain the subscription data from the HSS, and may directly search, locally on the proximity service server according to the device identifier of the user equipment, for the subscription data of the user equipment stored by the proximity service server.

Optionally, the subscription data of the user equipment includes proximity discovery configuration information of the user equipment; reference may be made to the description in step 301 for a specific description of the proximity discovery configuration information of the user equipment, which is not described repeatedly in this step.

In another specific implementation manner, that the proximity service server determines whether the user equipment is allowed to perform a proximity service may be that: the proximity service server sends, after receiving the proximity service request sent by the user equipment, the device identifier of the user equipment carried in the proximity service request and the identifier of the proximity service requested by the user equipment to an HSS; receives feedback information of the HSS; and determines, according to the feedback information of the HSS, whether the user equipment is allowed to perform the proximity service, where the feedback information of the HSS includes information about whether the user equipment is allowed to perform the proximity service.

In this implementation manner, each time after the proximity service server receives the proximity service request in step 301, the proximity service server sends the device identifier of the user equipment and the identifier of the proximity service requested by the user equipment to the HSS, and the HSS feeds back, to the proximity service server, the information about whether the user equipment is allowed to perform the proximity service.

In this implementation manner, if the proximity service request further carries the identifier of the proximity service requested by the user equipment, the identifier, sent to the HSS, of the proximity service requested by the user equipment is directly acquired from the proximity service request; or if a message name of the proximity service request indicates the proximity service requested by the user equipment, the identifier, sent to the HSS, of the proximity service requested by the user equipment is generated according to the message name of the proximity service request.

Optionally, the feedback information of the HSS may further include proximity discovery configuration information of the user equipment; reference may be made to the description in step 301 for a specific description of the proximity discovery configuration information of the user equipment, which is not described repeatedly in this step.

Step 305: The proximity service server assigns a D2D identifier to the user equipment, and sends the D2D identifier to the MME by adding the D2D identifier to a proximity service response, where the D2D identifier includes broadcast code (Broadcast Code) and an identifier that is used for D2D communication.

Specifically, after step 303, when the proximity service server does not execute step 304, or when the proximity service server executes step 304 and determines that the user equipment is allowed to perform the proximity service, the proximity service server executes step 305.

After assigning the broadcast code and the identifier that is used for D2D communication to the user equipment, the proximity service server stores the broadcast code and the identifier that is used for D2D communication which are assigned to the user equipment.

Optionally, when the proximity service request that is sent by the MME to the proximity service server in step 303 carries proximity discovery configuration information of the user equipment, the proximity service server may further store the proximity discovery configuration information of the user equipment.

In this step, after assigning the broadcast code and the identifier that is used for D2D communication to the user equipment, the proximity service server may further send routing information of the proximity service server to the MME by adding the routing information of the proximity service server to the proximity service response, and then the MME sends the routing information of the proximity service server to the user equipment, so that the user equipment can provide, in subsequent interaction with an application layer, the obtained routing information of the proximity service server to an application layer server. In this way, the application layer server may find, according to the routing information, the proximity service server with which the user equipment is registered, to perform message exchange, thereby obtaining proximity service support from the proximity service server.

The routing information of the proximity service server may be a server identifier of the proximity service server, for example, a uniform resource identifier (URI) or an Internet Protocol (IP) address. This embodiment of the present invention does not limit a form of the routing information of the proximity service server.

Specifically, the proximity service server may send the routing information of the proximity service server to the MME by separately adding the routing information of the proximity service server to the proximity service response; or the proximity service server may send the routing information of the proximity service server to the MME by adding the routing information of the proximity service server to the identifier for D2D communication, for example, the proximity service server may define, in a form of device d2d id@proximityserver URI, the identifier used for D2D communication and assigned to the user equipment, or different proximity service servers assign identifiers for D2D communication in different ranges, so that the user equipment may provide the identifier for D2D communication to the application layer server in subsequent interaction with the application layer, and the application layer server may directly extract the routing information of the proximity service server from the identifier for D2D communication, or obtain the routing information of the proximity service server implicitly by matching a range of the identifier for D2D communication, thereby obtaining proximity service support from the proximity service server.

Optionally, the proximity service server may further assign a decryption key to the user equipment, and send the decryption key to the MME by adding the decryption key to the proximity service response; and the MME sends the decryption key to the user equipment. Subsequently, the user equipment may perform decryption by using the decryption key when obtaining encrypted content from the proximity service server by using an application layer server.

Step 306: The MME sends the received proximity service response to the user equipment, where the proximity service response carries the broadcast code and the identifier that is used for D2D communication which are assigned by the proximity service server to the user equipment.

Optionally, if the proximity service response that is sent by the proximity service server to the MME carries the routing information of the proximity service server and/or the decryption key, where the decryption key is assigned by the proximity service server to the user equipment, the proximity service response that is sent by the MME to the user equipment may further carry the routing information of the proximity service server and/or the decryption key, where the decryption key is assigned by the proximity service server to the user equipment.

Specifically, because the proximity service response is corresponding to the proximity service request, if the proximity service request is an NAS message, the proximity service response is also an NAS message; if the proximity service request is an AS message, the proximity service response is also an AS message; and if the proximity service request uses a newly defined message, the proximity service response also uses a corresponding newly defined message.

In this embodiment, a network assigns broadcast code to a user equipment for the user equipment to perform broadcasting, which is used by the user equipment to announce its existence at a current location, so as to help another device to discover the user equipment. The network also assigns an identifier for D2D communication to the user equipment, so that the network can effectively control discovery and communication of the user equipment; therefore, an operator can provide a proximity service that is effectively controlled by the network. Moreover, a proximity service server may store proximity discovery configuration information of the user equipment, so that the proximity service server can directly reject, in subsequent user equipment discovery processes, some discovery or to-be-discovered processes that are not allowed by the user equipment, thereby reducing network signaling waste and effectively protecting privacy of a user.

FIG. 4 is a flowchart of still another embodiment of a user equipment registration method according to the present invention. As shown in FIG. 4, the user equipment registration method may include:
Step 401: A user equipment sends a proximity service request to a proximity service server.

The proximity service request carries a device identifier of the user equipment, where the device identifier of the user equipment may be an IMSI or an MSISDN of the user equipment, a temporary device identifier assigned by a network, or the like.

The proximity service request may be an existing NAS message such as a network attachment request message or a location update message, an access stratum AS message sent by the user equipment to an MME by using a base station, or a newly defined message. If the proximity service request uses the existing message, the proximity service request further carries an identifier of a proximity service requested by the user equipment, where the identifier of the proximity service requested by the user equipment is used to indicate the proximity service requested by the user equipment.

If the proximity service request uses the newly defined message, a message name of the proximity service request indicates a proximity service requested by the user equipment. In other words, if the proximity service request uses the newly defined message, the proximity service request may not carry an identifier of the proximity service requested by the user equipment.

Optionally, the proximity service request may further carry proximity discovery configuration information of the user equipment. The proximity discovery configuration information of the user equipment may be one of the following four cases:
1) one or a combination of "can discover others, but cannot be discovered by others", "query each time whether the user equipment can be discovered by a peer party", "an identifier list of devices that are allowed to discover the user equipment", and "an identifier list of devices that are not allowed to discover the user equipment";
2) one or a combination of "can discover others, and can be discovered by others", "query each time whether the user equipment can be discovered by a peer party", "an identifier list of devices that are allowed to discover the user equipment", and "an identifier list of devices that are not allowed to discover the user equipment";
3) one or a combination of "cannot discover others, and cannot be discovered by others", "query each time whether the user equipment can be discovered by a peer party", "an identifier list of devices that are allowed to discover the user equipment", and "an identifier list of devices that are not allowed to discover the user equipment"; and
4) one or a combination of "cannot discover others, but can be discovered by others", "query each time whether the user equipment can be discovered by a peer party", "an identifier list of devices that are allowed to discover the user equipment", and "an identifier list of devices that are not allowed to discover the user equipment".

Step 402: Optionally, the proximity service server determines whether the user equipment is allowed to perform a proximity service.

If yes, step 403 is executed; and if the proximity service server determines that the user equipment is not allowed to perform the proximity service, the proximity service server directly rejects the proximity service request of the user equipment.

In a specific implementation manner, that the proximity service server determines whether the user equipment is allowed to perform a proximity service may be that: the proximity service server determines, according to subscription data of the user equipment, whether the user equipment is allowed to perform the proximity service, where the subscription data of the user equipment is obtained, from an HSS according to the device identifier of the user equipment carried in the proximity service request, and is locally stored by the proximity service server, and the subscription data of the user equipment includes information about whether the user equipment is allowed to perform the proximity service.

Specially, if the proximity service server has obtained the subscription data of the user equipment before receiving the proximity service request in step 401, the proximity service server does not need to obtain the subscription data from the HSS, and may directly search, locally on the proximity service server according to the device identifier of the user equipment, for the subscription data of the user equipment stored by the proximity service server.

Optionally, the subscription data of the user equipment includes proximity discovery configuration information of the user equipment; reference may be made to the description in step 401 for a specific description of the proximity discovery configuration information of the user equipment, which is not described repeatedly in this step.

In another specific implementation manner, that the proximity service server determines whether the user equipment is allowed to perform a proximity service may be that: the proximity service server sends, after receiving the proximity service request sent by the user equipment, the device identifier of the user equipment carried in the proximity service request and the identifier of the proximity service requested by the user equipment to an HSS; receives feedback information of the HSS; and determines, according to the feedback information of the HSS, whether the user equipment is allowed to perform the proximity service, where the feedback information of the HSS includes information about whether the user equipment is allowed to perform the proximity service.

In this implementation manner, each time after the proximity service server receives the proximity service request in step 401, the proximity service server sends the device identifier of the user equipment and the identifier of the proximity service requested by the user equipment to the HSS, and the HSS feeds back, to the proximity service server, the information about whether the user equipment is allowed to perform the proximity service.

In this implementation manner, if the proximity service request further carries the identifier of the proximity service requested by the user equipment, the identifier, sent to the HSS, of the proximity service requested by the user equipment is directly acquired from the proximity service request; or if a message name of the proximity service request indicates the proximity service requested by the user equipment, the identifier, sent to the HSS, of the proximity service requested by the user equipment is generated according to the message name of the proximity service request.

Optionally, the feedback information of the HSS may further include proximity discovery configuration information of the user equipment; reference may be made to the description in step 401 for a specific description of the proximity discovery configuration information of the user equipment, which is not described repeatedly in this step.

Step 403: The proximity service server assigns a D2D identifier to the user equipment, and sends the D2D identifier to the user equipment by adding the D2D identifier to a proximity service response, where the D2D identifier includes broadcast code (Broadcast Code) and an identifier that is used for D2D communication.

Specifically, after step 401, when the proximity service server does not execute step 402, or when the proximity service server executes step 402 and determines that the user equipment is allowed to perform the proximity service, the proximity service server executes step 403.

After assigning the broadcast code and the identifier that is used for D2D communication to the user equipment, the proximity service server stores the broadcast code and the identifier that is used for D2D communication which are assigned to the user equipment.

Optionally, the proximity service server may further store the proximity discovery configuration information of the user equipment. Specifically, if the proximity service request sent by the user equipment in step 401 carries the proximity discovery configuration information, the proximity discovery configuration information stored by the proximity service server in this step may be the proximity discovery configuration information carried in a proximity discovery request in step 401; if the proximity service request sent by the user equipment in step 401 does not carry the proximity discovery configuration information, and the subscription data of the user equipment or the feedback information of the HSS in step 402 carries the proximity discovery configuration information, the proximity discovery configuration information stored by the proximity service server in this step may be the proximity discovery configuration information carried in the subscription data of the user equipment or the feedback information of the HSS in step 402; and if the proximity service request sent by the user equipment in step 401 carries the proximity discovery configuration information, and the subscription data of the user equipment or the feedback information of the HSS in step 402 also carries the proximity discovery configuration information, the proximity discovery configuration information stored by the proximity service server in this step may be the proximity discovery configuration information originally carried in the proximity service request sent by the user equipment in step 401, or the proximity discovery configuration information carried in the subscription data of the user equipment or the feedback information of the HSS in step 402.

In this step, after assigning the broadcast code and the identifier that is used for D2D communication to the user equipment, the proximity service server may further send routing information of the proximity service server to the user equipment by adding the routing information of the proximity service server to the proximity service response, so that the user equipment can provide, in subsequent interaction with an application layer, the obtained routing information of the proximity service server to an application layer server. In this way, the application layer server may find, according to the routing information, the proximity service server with which the user equipment is registered, to perform message exchange, thereby obtaining proximity service support from the proximity service server.

The routing information of the proximity service server may be a server identifier of the proximity service server, for example, a URI or an IP address. This embodiment of the present invention does not limit a form of the routing information of the proximity service server.

Specifically, the proximity service server may send the routing information of the proximity service server to the user equipment by separately adding the routing information of the proximity service server to the proximity service response; or the proximity service server may send the routing information of the proximity service server to the user equipment by adding the routing information of the proximity service server to the identifier for D2D communication, for example, the proximity service server may define, in a form of device d2d id@proximityserver URI, the identifier used for D2D communication and assigned to the user equipment, or different proximity service servers assign identifiers for D2D communication in different ranges, so that the user equipment may provide the identifier for D2D communication to the application layer server in subsequent interaction with the application layer, and the application layer server may directly extract the routing information of the proximity service server from the identifier for D2D communication, or obtain the routing information of the proximity service server implicitly by matching a range of the identifier for D2D communication, thereby obtaining proximity service support from the proximity service server.

Optionally, the proximity service server may further assign a decryption key to the user equipment, and send the decryption key to the user equipment by adding the decryption key to the proximity service response. Subsequently, the user equipment may perform decryption by using the decryption key when obtaining encrypted content from the proximity service server by using an application layer server.

Specifically, because the proximity service response is corresponding to the proximity service request, if the proximity service request is an NAS message, the proximity service response is also an NAS message; if the proximity service request is an AS message, the proximity service response is also an AS message; and if the proximity service request uses a newly defined message, the proximity service response also uses a corresponding newly defined message.

In this embodiment, a network assigns broadcast code to a user equipment for the user equipment to perform broadcasting, which is used by the user equipment to announce its existence at a current location, so as to help another device to discover the user equipment. The network also assigns an identifier for D2D communication to the user equipment, so that the network can effectively control discovery and communication of the user equipment; therefore, an operator can provide a proximity service that is effectively controlled by the network. Moreover, a proximity service server may store proximity discovery configuration information of the user equipment, so that the proximity service server can directly reject, in subsequent user equipment discovery processes, some discovery or to-be-discovered processes that are not allowed by the user equipment, thereby reducing network signaling waste and effectively protecting privacy of a user.

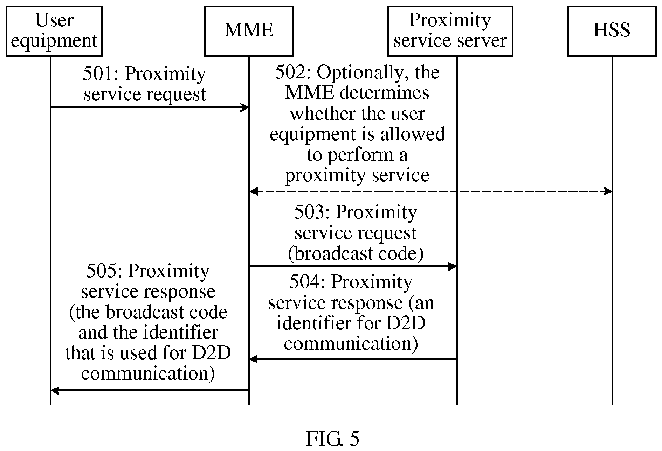

FIG. 5 is a flowchart of still yet another embodiment of a user equipment registration method according to the present invention. As shown in FIG. 5, the user equipment registration method may include:
Step 501 to step 502 are the same as step 301 to step 302.

Step 503: The MME assigns broadcast code to the user equipment, and sends the assigned broadcast code to a proximity service server by adding the assigned broadcast code to the proximity service request.

Specifically, when the MME does not execute step 502, or when the MME executes step 502 and determines that the user equipment is allowed to perform the proximity service, the MME executes step 503.

In this step, the MME needs to ensure that the assigned broadcast code is unique on the proximity service server. For example, different MMEs may assign broadcast codes in different ranges.

Optionally, the proximity service request in this step may further carry proximity discovery configuration information of the user equipment. Specifically, if the proximity service request sent by the user equipment in step 501 carries the proximity discovery configuration information, the proximity discovery configuration information in this step may be the proximity discovery configuration information carried in a proximity discovery request in step 501; if the proximity service request sent by the user equipment in step 501 does not carry the proximity discovery configuration information, and the subscription data of the user equipment or the feedback information of the HSS in step 502 carries the proximity discovery configuration information, the proximity discovery configuration information in this step may be the proximity discovery configuration information carried in the subscription data of the user equipment or the feedback information of the HSS in step 502; and if the proximity service request sent by the user equipment in step 501 carries the proximity discovery configuration information, and the subscription data of the user equipment or the feedback information of the HSS in step 502 also carries the proximity discovery configuration information, the proximity discovery configuration information in this step may be the proximity discovery configuration information originally carried in the proximity service request sent by the user equipment in step 501, or the proximity discovery configuration information carried in the subscription data of the user equipment or the feedback information of the HSS in step 502.

Step 504: The proximity service server assigns an identifier for D2D communication to the user equipment, and sends the identifier for D2D communication to the MME by adding the identifier for D2D communication to a proximity service response.

After the proximity service server assigns the identifier for D2D communication to the user equipment, the proximity service server stores the identifier used for D2D communication and assigned to the user equipment and the broadcast code that is received from the MME.

Optionally, when the proximity service request that is sent by the MME to the proximity service server in step 503 carries proximity discovery configuration information of the user equipment, the proximity service server may further store the proximity discovery configuration information of the user equipment.

In this step, after assigning the identifier for D2D communication to the user equipment, the proximity service server may further send routing information of the proximity service server to the MME by adding the routing information of the proximity service server to the proximity service response, and then the MME sends the routing information of the proximity service server to the user equipment, so that the user equipment can provide, in subsequent interaction with an application layer, the obtained routing information of the proximity service server to an application layer server. In this way, the application layer server may find, according to the routing information, the proximity service server with which the user equipment is registered, to perform message exchange, thereby obtaining proximity service support from the proximity service server.

The routing information of the proximity service server may be a server identifier of the proximity service server, for example, a URI or an IP address. This embodiment of the present invention does not limit a form of the routing information of the proximity service server.

Specifically, the proximity service server may send the routing information of the proximity service server to the MME by separately adding the routing information of the proximity service server to the proximity service response; or the proximity service server may send the routing information of the proximity service server to the MME by adding the routing information of the proximity service server to the identifier for D2D communication, for example, the proximity service server may define, in a form of device d2d id@proximityserver URI, the identifier used for D2D communication and assigned to the user equipment, or different proximity service servers assign identifiers for D2D communication in different ranges, so that the user equipment may provide the identifier for D2D communication to the application layer server in subsequent interaction with the application layer, and the application layer server may directly extract the routing information of the proximity service server from the identifier for D2D communication, or obtain the routing information of the proximity service server implicitly by matching a range of the identifier for D2D communication, thereby obtaining proximity service support from the proximity service server.

Optionally, the proximity service server may further assign a decryption key to the user equipment, and send the decryption key to the MME by adding the decryption key to the proximity service response; and the MME sends the decryption key to the user equipment. Subsequently, the user equipment may perform decryption by using the decryption key when obtaining encrypted content from the proximity service server by using an application layer server.

Step 505: The MME sends the proximity service response to the user equipment, where the proximity service response carries the broadcast code and the identifier that is used for D2D communication which are assigned to the user equipment.

Optionally, if the proximity service response that is sent by the proximity service server to the MME carries the routing information of the proximity service server and/or the decryption key, where the decryption key is assigned by the proximity service server to the user equipment, the proximity service response that is sent by the MME to the user equipment may further carry the routing information of the proximity service server and/or the decryption key, where the decryption key is assigned by the proximity service server to the user equipment.

Specifically, because the proximity service response is corresponding to the proximity service request, if the proximity service request is an NAS message, the proximity service response is also an NAS message; if the proximity service request is an AS message, the proximity service response is also an AS message; and if the proximity service request uses a newly defined message, the proximity service response also uses a corresponding newly defined message.

In this embodiment, a network assigns broadcast code to a user equipment for the user equipment to perform broadcasting, which is used by the user equipment to announce its existence at a current location, so as to help another device to discover the user equipment. The network also assigns an identifier for D2D communication to the user equipment, so that the network can effectively control discovery and communication of the user equipment; therefore, an operator can provide a proximity service that is effectively controlled by the network. Moreover, a proximity service server may store proximity discovery configuration information of the user equipment, so that the proximity service server can directly reject, in subsequent user equipment discovery processes, some discovery or to-be-discovered processes that are not allowed by the user equipment, thereby reducing network signaling waste and effectively protecting privacy of a user.

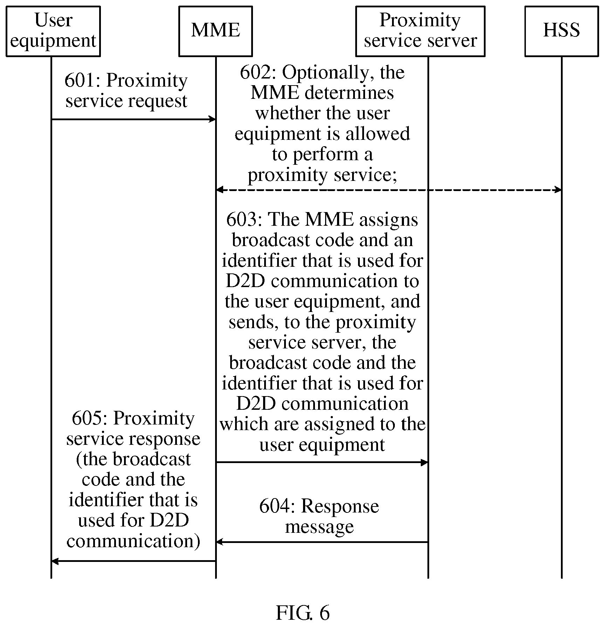

FIG. 6 is a flowchart of a further embodiment of a user equipment registration method according to the present invention. As shown in FIG. 6, the user equipment registration method may include:
Step 601 is the same as step 301.

Step 602: Optionally, the MME determines whether the user equipment is allowed to perform a proximity service. If yes, step 603 is executed; and if the MME determines that the user equipment is not allowed to perform the proximity service, the MME directly rejects the proximity service request of the user equipment.

In a specific implementation manner, that the MME determines whether the user equipment is allowed to perform a proximity service may be that: the MME determines, according to subscription data of the user equipment, whether the user equipment is allowed to perform the proximity service, where the subscription data of the user equipment is obtained, from an HSS according to the device identifier of the user equipment carried in the proximity service request, and is locally stored by the MME, and the subscription data of the user equipment includes information about whether the user equipment is allowed to perform the proximity service. Optionally, the subscription data of the user equipment may further include an identifier that is used for D2D communication and to which the user equipment subscribes.

Specially, if the MME has obtained the subscription data of the user equipment before receiving the proximity service request in step 601, the MME does not need to obtain the subscription data from the HSS, and may directly search, locally on the MME according to the device identifier of the user equipment, for the subscription data of the user equipment stored by the MME.

Optionally, the subscription data of the user equipment includes proximity discovery configuration information of the user equipment; reference may be made to the description in step 601 for a specific description of the proximity discovery configuration information of the user equipment, which is not described repeatedly in this step.

In another specific implementation manner, that the MME determines whether the user equipment is allowed to perform a proximity service may be that: the MME sends, after receiving the proximity service request sent by the user equipment, the device identifier of the user equipment carried in the proximity service request and an identifier of the proximity service requested by the user equipment to an HSS; receives feedback information of the HSS; and determines, according to the feedback information of the HSS, whether the user equipment is allowed to perform the proximity service, where the feedback information of the HSS includes information about whether the user equipment is allowed to perform the proximity service. Optionally, the feedback information of the HSS may further include an identifier that is used for D2D communication and to which the user equipment subscribes.

In this implementation manner, each time after the MME receives the proximity service request in step 601, the MME sends the device identifier of the user equipment and the identifier of the proximity service requested by the user equipment to the HSS, and the HSS feeds back, to the MME, the information about whether the user equipment is allowed to perform the proximity service.

In this implementation manner, if the proximity service request further carries the identifier of the proximity service requested by the user equipment, the identifier, sent to the HSS, of the proximity service requested by the user equipment is directly acquired from the proximity service request; or if a message name of the proximity service request indicates the proximity service requested by the user equipment, the identifier, sent to the HSS, of the proximity service requested by the user equipment is generated according to the message name of the proximity service request.

Optionally, the feedback information of the HSS may further include proximity discovery configuration information of the user equipment; reference may be made to the description in step 601 for a specific description of the proximity discovery configuration information of the user equipment, which is not described repeatedly in this step.

Step 603: The MME assigns broadcast code and an identifier that is used for D2D communication to the user equipment, and sends, to a proximity service server, the broadcast code and the identifier that is used for D2D communication which are assigned to the user equipment.

Specifically, when the MME does not execute step 602, or when the MME executes step 602 and determines that the user equipment is allowed to perform the proximity service, the MME assigns the broadcast code and the identifier that is used for D2D communication to the user equipment.

In this embodiment, it needs to be ensured that the broadcast code and the identifier that is used for D2D communication which are assigned by the MME are unique on the proximity service server. For example, different MMEs may assign broadcast codes in different ranges, and different MMEs may assign identifiers for D2D communication also in different ranges.

In this step, the MME itself may assign the identifier for D2D communication; or when the subscription data of the user equipment or the feedback information of the HSS in step 602 includes the identifier that is used for D2D communication and to which the user equipment subscribes, the MME may directly use the identifier that is used for D2D communication, to which the user equipment subscribes and which is included in the subscription data of the user equipment or the feedback information of the HSS; or the MME may also use, as the identifier for D2D communication, a network identifier of the user equipment that is obtained by the MME from another network entity before step 603, for example, the MME may assign an IP address, delivered by a packet data network gateway (PGW), of the user equipment as the identifier for D2D communication to the user equipment.

Optionally, the MME may further add proximity discovery configuration information of the user equipment to a message by means of which the broadcast code and the identifier that is used for D2D communication are sent to the proximity service server. Specifically, if the proximity service request sent by the user equipment in step 601 carries the proximity discovery configuration information, the proximity discovery configuration information in this step may be the proximity discovery configuration information carried in a proximity discovery request in step 601; if the proximity service request sent by the user equipment in step 601 does not carry the proximity discovery configuration information, and the subscription data of the user equipment or the feedback information of the HSS in step 602 carries the proximity discovery configuration information, the proximity discovery configuration information in this step may be the proximity discovery configuration information carried in the subscription data of the user equipment or the feedback information of the HSS in step 602; and if the proximity service request sent by the user equipment in step 601 carries the proximity discovery configuration information, and the subscription data of the user equipment or the feedback information of the HSS in step 602 also carries the proximity discovery configuration information, the proximity discovery configuration information in this step may be the proximity discovery configuration information originally carried in the proximity service request sent by the user equipment in step 601, or the proximity discovery configuration information carried in the subscription data of the user equipment or the feedback information of the HSS in step 602.

Step 604: The proximity service server stores the broadcast code and the identifier that is used for D2D communication which are sent by the MME, and feeds back a response message to the MME.

Optionally, when the MME adds proximity discovery configuration information of the user equipment to the message by means of which the broadcast code and the identifier that is used for D2D communication are sent to the proximity service server, the proximity service server stores the proximity discovery configuration information of the user equipment.

In this step, the proximity service server may further send routing information of the proximity service server to the MME by adding the routing information of the proximity service server to the response message, and then the MME sends the routing information of the proximity service server to the user equipment, so that the user equipment can provide, in subsequent interaction with an application layer, the obtained routing information of the proximity service server to an application layer server. In this way, the application layer server may find, according to the routing information, the proximity service server with which the user equipment is registered, to perform message exchange, thereby obtaining proximity service support from the proximity service server.

The routing information of the proximity service server may be a server identifier of the proximity service server, for example, a URI or an IP address. This embodiment of the present invention does not limit a form of the routing information of the proximity service server.

Optionally, the proximity service server may further assign a decryption key to the user equipment, and send the decryption key to the user equipment by adding the decryption key to the response message. Subsequently, the user equipment may perform decryption by using the decryption key when obtaining encrypted content from the proximity service server by using an application layer server.

Step 605: The MME sends a proximity service response to the user equipment, where the proximity service response carries the broadcast code and the identifier that is used for D2D communication which are assigned by the MME to the user equipment.

Optionally, if the response message that is fed back by the proximity service server to the MME carries the routing information of the proximity service server and/or the decryption key, where the decryption key is assigned by the proximity service server to the user equipment, the proximity service response that is sent by the MME to the user equipment may further carry the routing information of the proximity service server and/or the decryption key, where the decryption key is assigned by the proximity service server to the user equipment.

Specifically, because the proximity service response is corresponding to the proximity service request, if the proximity service request is an NAS message, the proximity service response is also an NAS message; if the proximity service request is an AS message, the proximity service response is also an AS message; and if the proximity service request uses a newly defined message, the proximity service response also uses a corresponding newly defined message.

In this embodiment, a network assigns broadcast code to a user equipment for the user equipment to perform broadcasting, which is used by the user equipment to announce its existence at a current location, so as to help another device to discover the user equipment. The network also assigns an identifier for D2D communication to the user equipment, so that the network can effectively control discovery and communication of the user equipment; therefore, an operator can provide a proximity service that is effectively controlled by the network. Moreover, a proximity service server may store proximity discovery configuration information of the user equipment, so that the proximity service server can directly reject, in subsequent user equipment discovery processes, some discovery or to-be-discovered processes that are not allowed by the user equipment, thereby reducing network signaling waste and effectively protecting privacy of a user.

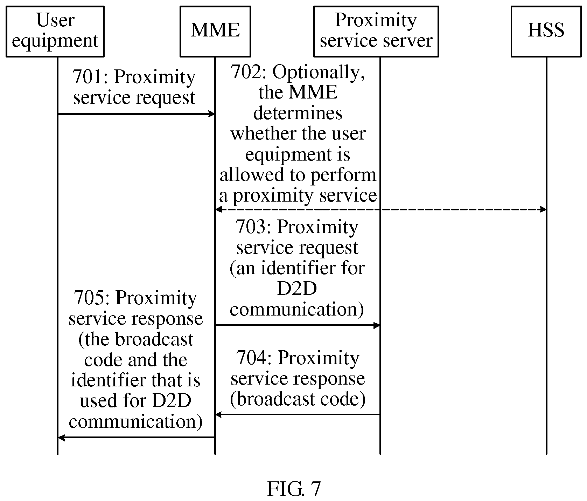

FIG. 7 is a flowchart of a still further embodiment of a user equipment registration method according to the present invention. As shown in FIG. 7, the user equipment registration method may include:
Step 701 to step 702 are the same as step 601 to step 602.

Step 703: The MME assigns an identifier for D2D communication to the user equipment, and sends the identifier for D2D communication, assigned to the user equipment, to a proximity service server by adding the identifier for D2D communication to the proximity service request.

Specifically, when the MME does not execute step 702, or when the MME executes step 702 and determines that the user equipment is allowed to perform the proximity service, the MME executes step 703.

In this step, it needs to be ensured that the identifier for D2D communication that is assigned by the MME is unique on the proximity service server. For example, different MMEs may assign identifiers for D2D communication in different ranges.

In this step, the MME itself may assign the identifier for D2D communication; or when the subscription data of the user equipment or the feedback information of the HSS in step 702 includes the identifier that is used for D2D communication and to which the user equipment subscribes, the MME may directly use the identifier that is used for D2D communication, to which the user equipment subscribes and which is included in the subscription data of the user equipment or the feedback information of the HSS; or the MME may also use, as the identifier for D2D communication, a network identifier of the user equipment that is obtained by the MME from another network entity before step 703, for example, the MME may assign an IP address, delivered by a PGW, of the user equipment as the identifier for D2D communication to the user equipment.

Optionally, the proximity service request that is sent by the MME to the proximity service server may carry proximity discovery configuration information of the user equipment. Specifically, if the proximity service request sent by the user equipment in step 701 carries the proximity discovery configuration information, the proximity discovery configuration information in this step may be the proximity discovery configuration information carried in a proximity discovery request in step 701; if the proximity service request sent by the user equipment in step 701 does not carry the proximity discovery configuration information, and the subscription data of the user equipment or the feedback information of the HSS in step 702 carries the proximity discovery configuration information, the proximity discovery configuration information in this step may be the proximity discovery configuration information carried in the subscription data of the user equipment or the feedback information of the HSS in step 702; and if the proximity service request sent by the user equipment in step 701 carries the proximity discovery configuration information, and the subscription data of the user equipment or the feedback information of the HSS in step 702 also carries the proximity discovery configuration information, the proximity discovery configuration information in this step may be the proximity discovery configuration information originally carried in the proximity service request sent by the user equipment in step 701, or the proximity discovery configuration information carried in the subscription data of the user equipment or the feedback information of the HSS in step 702.

Step 704: The proximity service server assigns broadcast code to the user equipment, and sends the broadcast code, assigned to the user equipment, to the MME by adding the broadcast code to a proximity service response.

In this step, after the proximity service server assigns the broadcast code to the user equipment, the proximity service server stores the broadcast code that is assigned to the user equipment and the identifier for D2D communication that is received from the MME.

Optionally, if the proximity service request that is sent by the MME to the proximity service server carries proximity discovery configuration information of the user equipment, the proximity service server may store the proximity discovery configuration information of the user equipment.

In this step, after the proximity service server assigns the broadcast code to the user equipment, the proximity service server may further send routing information of the proximity service server to the MME by adding the routing information of the proximity service server to the proximity service response, and then the MME sends the routing information of the proximity service server to the user equipment, so that the user equipment can provide, in subsequent interaction with an application layer, the obtained routing information of the proximity service server to an application layer server. In this way, the application layer server may find, according to the routing information, the proximity service server with which the user equipment is registered, to perform message exchange, thereby obtaining proximity service support from the proximity service server.

The routing information of the proximity service server may be a server identifier of the proximity service server, for example, a URI or an IP address. This embodiment of the present invention does not limit a form of the routing information of the proximity service server.

Optionally, the proximity service server may further assign a decryption key to the user equipment, and send the decryption key to the user equipment by adding the decryption key to the proximity service response. Subsequently, the user equipment may perform decryption by using the decryption key when obtaining encrypted content from the proximity service server by using an application layer server.

Step 705: The MME sends the proximity service response to the user equipment, where the proximity service response carries the broadcast code and the identifier that is used for D2D communication which are assigned to the user equipment.

Optionally, if the proximity service response that is sent by the proximity service server to the MME carries the routing information of the proximity service server and/or the decryption key, where the decryption key is assigned by the proximity service server to the user equipment, the proximity service response that is sent by the MME to the user equipment may further carry the routing information of the proximity service server and/or the decryption key, where the decryption key is assigned by the proximity service server to the user equipment.

Specifically, because the proximity service response is corresponding to the proximity service request, if the proximity service request is an NAS message, the proximity service response is also an NAS message; if the proximity service request is an AS message, the proximity service response is also an AS message; and if the proximity service request uses a newly defined message, the proximity service response also uses a corresponding newly defined message.

In this embodiment, a network assigns broadcast code to a user equipment for the user equipment to perform broadcasting, which is used by the user equipment to announce its existence at a current location, so as to help another device to discover the user equipment. The network also assigns an identifier for D2D communication to the user equipment, so that the network can effectively control discovery and communication of the user equipment; therefore, an operator can provide a proximity service that is effectively controlled by the network. Moreover, a proximity service server may store proximity discovery configuration information of the user equipment, so that the proximity service server can directly reject, in subsequent user equipment discovery processes, some discovery or to-be-discovered processes that are not allowed by the user equipment, thereby reducing network signaling waste and effectively protecting privacy of a user.

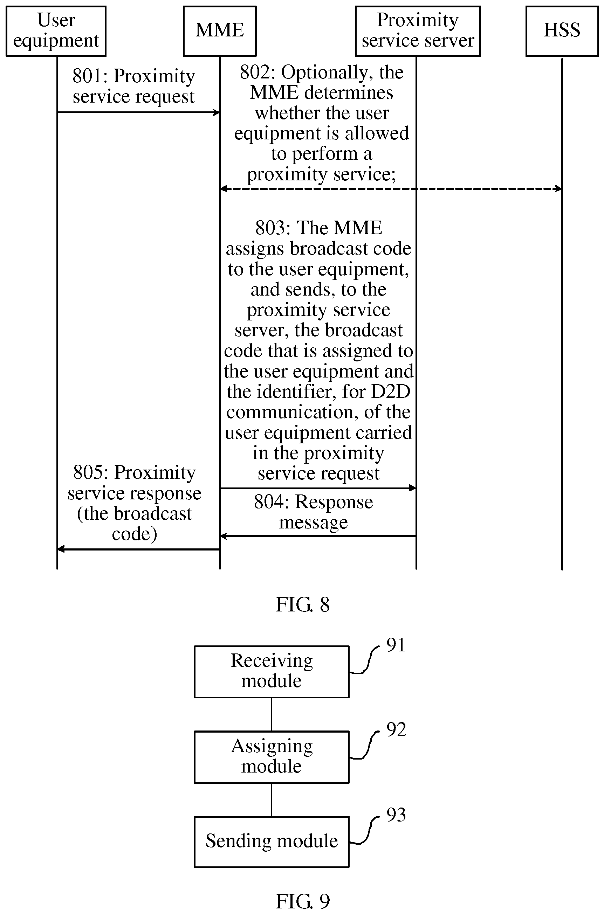

FIG. 8 is a flowchart of a yet further embodiment of a user equipment registration method according to the present invention. As shown in FIG. 8, the user equipment registration method may include:
Step 801: A user equipment sends a proximity service request to an MME.

In this embodiment, the proximity service request carries an identifier, for D2D communication, of the user equipment, where the identifier, for D2D communication, of the user equipment may be an IMSI, an MSISDN, or an IP address of the user equipment, or an identifier for D2D communication that is newly defined and configured on the user equipment itself.

The proximity service request may be an existing NAS message such as a network attachment request message or a location update message, an AS message sent by the user equipment to the MME by using a base station, or a newly defined message. If the proximity service request uses the existing message, the proximity service request further carries an identifier of a proximity service requested by the user equipment, where the identifier of the proximity service requested by the user equipment is used to indicate the proximity service requested by the user equipment.

If the proximity service request uses the newly defined message, a message name of the proximity service request indicates a proximity service requested by the user equipment. In other words, if the proximity service request uses the newly defined message, the proximity service request may not carry the identifier of the proximity service requested by the user equipment.

Optionally, the proximity service request may further carry proximity discovery configuration information of the user equipment. The proximity discovery configuration information of the user equipment may be one of the following four cases:
1) one or a combination of "can discover others, but cannot be discovered by others", "query each time whether the user equipment can be discovered by a peer party", "an identifier list of devices that are allowed to discover the user equipment", and "an identifier list of devices that are not allowed to discover the user equipment";
2) one or a combination of "can discover others, and can be discovered by others", "query each time whether the user equipment can be discovered by a peer party", "an identifier list of devices that are allowed to discover the user equipment", and "an identifier list of devices that are not allowed to discover the user equipment";
3) one or a combination of "cannot discover others, and cannot be discovered by others", "query each time whether the user equipment can be discovered by a peer party", "an identifier list of devices that are allowed to discover the user equipment", and "an identifier list of devices that are not allowed to discover the user equipment"; and
4) one or a combination of "cannot discover others, but can be discovered by others", "query each time whether the user equipment can be discovered by a peer party", "an identifier list of devices that are allowed to discover the user equipment", and "an identifier list of devices that are not allowed to discover the user equipment".

Step 802: Optionally, the MME determines whether the user equipment is allowed to perform a proximity service. If yes, step 803 is executed; and if the MME determines that the user equipment is not allowed to perform the proximity service, the MME directly rejects the proximity service request of the user equipment.

In a specific implementation manner, that the MME determines whether the user equipment is allowed to perform a proximity service may be that: the MME determines, according to subscription data of the user equipment, whether the user equipment is allowed to perform the proximity service, where the subscription data of the user equipment is obtained, from an HSS according to an identifier, for D2D communication, of the user equipment carried in the proximity service request, and is locally stored by the MME, and the subscription data of the user equipment includes information about whether the user equipment is allowed to perform the proximity service.

Specially, if the MME has obtained the subscription data of the user equipment before receiving the proximity service request in step 801, the MME does not need to obtain the subscription data from the HSS, and may directly search, locally on the MME according to the identifier, for D2D communication, of the user equipment, for the subscription data of the user equipment stored by the MME.

Optionally, the subscription data of the user equipment includes proximity discovery configuration information of the user equipment; reference may be made to the description in step 801 for a specific description of the proximity discovery configuration information of the user equipment, which is not described repeatedly in this step.

In another specific implementation manner, that the MME determines whether the user equipment is allowed to perform a proximity service may be that: the MME sends, after receiving the proximity service request sent by the user equipment, an identifier, for D2D communication, of the user equipment and an identifier of the proximity service requested by the user equipment to an HSS, where the identifier for D2D communication is carried in the proximity service request; receives feedback information of the HSS; and determines, according to the feedback information of the HSS, whether the user equipment is allowed to perform the proximity service, where the feedback information of the HSS includes information about whether the user equipment is allowed to perform the proximity service.

In this implementation manner, each time after the MME receives the proximity service request in step 801, the MME sends the identifier, for D2D communication, of the user equipment and the identifier of the proximity service requested by the user equipment to the HSS, and the HSS feeds back, to the MME, the information about whether the user equipment is allowed to perform the proximity service.

In this implementation manner, if the proximity service request further carries the identifier of the proximity service requested by the user equipment, the identifier, sent to the HSS, of the proximity service requested by the user equipment is directly acquired from the proximity service request; or if a message name of the proximity service request indicates the proximity service requested by the user equipment, the identifier, sent to the HSS, of the proximity service requested by the user equipment is generated according to the message name of the proximity service request.

Optionally, the feedback information of the HSS may further include proximity discovery configuration information of the user equipment; reference may be made to the description in step 801 for a specific description of the proximity discovery configuration information of the user equipment, which is not described repeatedly in this step.

Step 803: The MME assigns broadcast code to the user equipment, and sends, to a proximity service server, the broadcast code that is assigned to the user equipment and the identifier, for D2D communication, of the user equipment carried in the proximity service request.

Specifically, when the MME does not execute step 802, or when the MME executes step 802 and determines that the user equipment is allowed to perform the proximity service, the MME assigns the broadcast code to the user equipment.

In this embodiment, it needs to be ensured that the broadcast code assigned by the MME is unique on the proximity service server. For example, different MMEs may assign broadcast codes in different ranges.

Optionally, the MME may further add proximity discovery configuration information of the user equipment to a message by means of which the broadcast code and the identifier that is used for D2D communication are sent to the proximity service server. Specifically, if the proximity service request sent by the user equipment in step 801 carries the proximity discovery configuration information, the proximity discovery configuration information in this step may be the proximity discovery configuration information carried in a proximity discovery request in step 801; if the proximity service request sent by the user equipment in step 801 does not carry the proximity discovery configuration information, and the subscription data of the user equipment or the feedback information of the HSS in step 802 carries the proximity discovery configuration information, the proximity discovery configuration information in this step may be the proximity discovery configuration information carried in the subscription data of the user equipment or the feedback information of the HSS in step 802; and if the proximity service request sent by the user equipment in step 801 carries the proximity discovery configuration information, and the subscription data of the user equipment or the feedback information of the HSS in step 802 also carries the proximity discovery configuration information, the proximity discovery configuration information in this step may be the proximity discovery configuration information originally carried in the proximity service request sent by the user equipment in step 801, or the proximity discovery configuration information carried in the subscription data of the user equipment or the feedback information of the HSS in step 802.

Step 804: The proximity service server stores the received broadcast code and the received identifier that is used for D2D communication, and feeds back a response message to the MME.

Optionally, when the MME adds proximity discovery configuration information of the user equipment to the message by means of which the broadcast code and the identifier that is used for D2D communication are sent to the proximity service server, the proximity service server stores the proximity discovery configuration information of the user equipment.

In this step, the proximity service server may further send routing information of the proximity service server to the MME by adding the routing information of the proximity service server to the response message, and then the MME sends the routing information of the proximity service server to the user equipment, so that the user equipment can provide, in subsequent interaction with an application layer, the obtained routing information of the proximity service server to an application layer server. In this way, the application layer server may find, according to the routing information, the proximity service server with which the user equipment is registered, to perform message exchange, thereby obtaining proximity service support from the proximity service server.

The routing information of the proximity service server may be a server identifier of the proximity service server, for example, a URI or an IP address. This embodiment of the present invention does not limit a form of the routing information of the proximity service server.

Optionally, the proximity service server may further assign a decryption key to the user equipment, and send the decryption key to the user equipment by adding the decryption key to the response message. Subsequently, the user equipment may perform decryption by using the decryption key when obtaining encrypted content from the proximity service server by using an application layer server.

Step 805: The MME sends a proximity service response to the user equipment, where the proximity service response carries the broadcast code that is assigned by the MME to the user equipment.

Optionally, if the response message that is fed back by the proximity service server to the MME carries the routing information of the proximity service server and/or the decryption key, where the decryption key is assigned by the proximity service server to the user equipment, the proximity service response that is sent by the MME to the user equipment may further carry the routing information of the proximity service server and/or the decryption key, where the decryption key is assigned by the proximity service server to the user equipment.

Specifically, because the proximity service response is corresponding to the proximity service request, if the proximity service request is an NAS message, the proximity service response is also an NAS message; if the proximity service request is an AS message, the proximity service response is also an AS message; and if the proximity service request uses a newly defined message, the proximity service response also uses a corresponding newly defined message.

In this embodiment, a network assigns broadcast code to a user equipment for the user equipment to perform broadcasting, which is used by the user equipment to announce its existence at a current location, so as to help another device to discover the user equipment. The network also assigns an identifier for D2D communication to the user equipment, so that the network can effectively control discovery and communication of the user equipment; therefore, an operator can provide a proximity service that is effectively controlled by the network. Moreover, a proximity service server may store proximity discovery configuration information of the user equipment, so that the proximity service server can directly reject, in subsequent user equipment discovery processes, some discovery or to-be-discovered processes that are not allowed by the user equipment, thereby reducing network signaling waste and effectively protecting privacy of a user.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

FIG. 9 is a schematic structural diagram of an embodiment of a proximity service server according to the present invention. The proximity service server in this embodiment can implement the process of the embodiment shown in FIG. 1 of the present invention. As shown in FIG. 9, the proximity service server may include a receiving module 91, an assigning module 92, and a sending module 93.

The receiving module 91 is configured to receive a proximity service request sent by a user equipment.

The assigning module 92 is configured to assign a D2D identifier to the user equipment, where the D2D identifier includes broadcast code and an identifier that is used for D2D communication.

The sending module 93 is configured to send a proximity service response to the user equipment, where the proximity service response carries the D2D identifier assigned by the assigning module 92.

In hardware implementation, the sending module 93 may be a transmitter or a transceiver, the receiving module 91 may be a receiver or a transceiver, and the sending module 93 and the receiving module 91 may be integrated to form a transceiver unit, which is a transceiver in hardware implementation. The assigning module 92 may be built in or disposed independently of a processor of a base station in a hardware form, or may be stored in a software form in a memory of a base station, so as to be invoked by the processor to execute operations corresponding to the foregoing modules. The processor may be a central processing unit (CPU), a microprocessor, a single-chip microcomputer, or the like.

In this embodiment, after a receiving module 91 receives a proximity service request sent by a user equipment, an assigning module 92 assigns a D2D identifier to the user equipment. In this way, the user equipment may announce its existence at a current location by using the D2D identifier, so that another device discovers the user equipment; and a network side device may further effectively control discovery and communication of the user equipment by using the D2D identifier, so that an operator can provide a proximity service that is effectively controlled by a network.

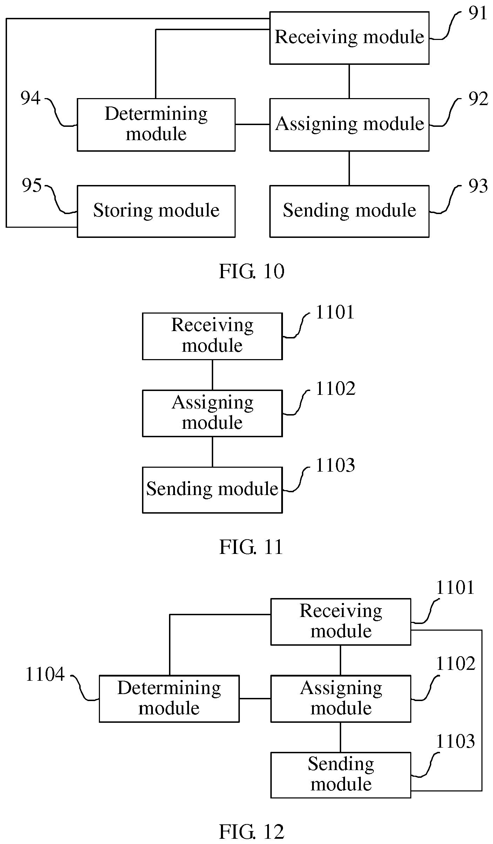

FIG. 10 is a schematic structural diagram of another embodiment of a proximity service server according to the present invention. Compared with the proximity service server shown in FIG. 9, a difference lies in that in an implementation manner of this embodiment, the proximity service server may further include a determining module 94.

The determining module 94 is configured to: before the assigning module 92 assigns the D2D identifier to the user equipment, determine whether the user equipment is allowed to perform a proximity service.

The assigning module 92 is specifically configured to assign the broadcast code and the identifier that is used for D2D communication to the user equipment when the determining module 94 determines that the user equipment is allowed to perform the proximity service.

Specifically, in a specific implementation manner, the determining module 94 is specifically configured to determine, according to subscription data of the user equipment, whether the user equipment is allowed to perform the proximity service, where the subscription data of the user equipment is obtained, from a home subscriber server according to an identifier of the user equipment carried in the proximity service request, and is locally stored by the proximity service server, and the subscription data of the user equipment includes information about whether the user equipment is allowed to perform the proximity service.

In another specific implementation manner, the sending module 93 is further configured to: after the receiving module 91 receives the proximity service request sent by the user equipment, send an identifier of the user equipment carried in the proximity service request and an identifier of the proximity service requested by the user equipment to a home subscriber server.

The receiving module 91 is further configured to receive feedback information of the home subscriber server.

The determining module 94 is specifically configured to determine, according to the feedback information that is of the home subscriber server and received by the receiving module 91, whether the user equipment is allowed to perform the proximity service, where the feedback information of the home subscriber server includes information about whether the user equipment is allowed to perform the proximity service.

In the foregoing two specific implementation manners, the identifier of the user equipment carried in the proximity service request may be a device identifier of the user equipment, where the device identifier of the user equipment may be an IMSI or an MSISDN of the user equipment, a temporary device identifier assigned by a network, or the like.

In this embodiment, the receiving module 91 is specifically configured to receive the proximity service request that is sent by the user equipment by using an MME.

The sending module 93 is specifically configured to send the proximity service response to the user equipment by using the MME.

Further, the sending module 93 is further configured to send routing information of the proximity service server to the user equipment after the assigning module 92 assigns the broadcast code and the identifier that is used for D2D communication to the user equipment.

Specifically, the sending module 93 is specifically configured to send the routing information of the proximity service server to the user equipment by separately adding the routing information of the proximity service server to the proximity service response; or send the routing information of the proximity service server to the user equipment by adding the routing information of the proximity service server to the identifier for D2D communication.

Further, the assigning module 92 is further configured to assign a decryption key to the user equipment after assigning the broadcast code and the identifier that is used for D2D communication to the user equipment.

The sending module 93 is further configured to send, to the user equipment, the decryption key assigned by the assigning module 92, so that the user equipment performs decryption by using the decryption key when obtaining encrypted content from the proximity service server by using an application layer server.

In this embodiment, the proximity service request further carries proximity discovery configuration information of the user equipment, or the subscription data of the user equipment further carries proximity discovery configuration information of the user equipment.

The proximity service server may further include a storing module 95.

The storing module 95 is configured to store the proximity discovery configuration information of the user equipment after the receiving module 91 receives the proximity discovery configuration information of the user equipment.

In this embodiment, the proximity service request further carries proximity discovery configuration information of the user equipment, or the feedback information of the home subscriber server further carries proximity discovery configuration information of the user equipment.

The proximity service server may further include a storing module 95.

The storing module 95 is configured to store the proximity discovery configuration information of the user equipment after the receiving module 91 receives the proximity discovery configuration information of the user equipment.

In this embodiment, if the proximity service request further carries the identifier of the proximity service requested by the user equipment, the identifier, sent by the sending module 93 to the home subscriber server, of the proximity service requested by the user equipment is directly acquired from the proximity service request; or
if a message name of the proximity service request indicates the proximity service requested by the user equipment, the identifier, sent by the sending module 93 to the home subscriber server, of the proximity service requested by the user equipment is generated according to the message name of the proximity service request.

In hardware implementation, the sending module 93 may be a transmitter or a transceiver, the receiving module 91 may be a receiver or a transceiver, and the sending module 93 and the receiving module 91 may be integrated to form a transceiver unit, which is a transceiver in hardware implementation. The assigning module 92, the determining module 94, and the storing module 95 may be built in or disposed independently of a processor of a base station in a hardware form, or may be stored in a software form in a memory of a base station, so as to be invoked by the processor to execute operations corresponding to the foregoing modules. The processor may be a central processing unit (CPU), a microprocessor, a single-chip microcomputer, or the like.

In this embodiment, after a receiving module 91 receives a proximity service request sent by a user equipment, an assigning module 92 assigns a D2D identifier to the user equipment. In this way, the user equipment may announce its existence at a current location by using the D2D identifier, so that another device discovers the user equipment; and a network side device may further effectively control discovery and communication of the user equipment by using the D2D identifier, so that an operator can provide a proximity service that is effectively controlled by a network.

FIG. 11 is a schematic structural diagram of an embodiment of a mobility management entity according to the present invention. The MME in this embodiment can implement the process of the embodiment shown in FIG. 1 of the present invention. As shown in FIG. 11, the MME may include:
a receiving module 1101, configured to receive a proximity service request sent by a user equipment;
an assigning module 1102, configured to assign a D2D identifier to the user equipment; and
a sending module 1103, configured to send a proximity service response to the user equipment, where the proximity service response carries the D2D identifier assigned by the assigning module 1102.

In hardware implementation, the sending module 1103 may be a transmitter or a transceiver, the receiving module 1101 may be a receiver or a transceiver, and the sending module 1103 and the receiving module 1101 may be integrated to form a transceiver unit, which is a transceiver in hardware implementation. The assigning module 1102 may be built in or disposed independently of a processor of a base station in a hardware form, or may be stored in a software form in a memory of a base station, so as to be invoked by the processor to execute operations corresponding to the foregoing modules. The processor may be a central processing unit (CPU), a microprocessor, a single-chip microcomputer, or the like.

In this embodiment, after a receiving module 1101 receives a proximity service request sent by a user equipment, an assigning module 1102 assigns a D2D identifier to the user equipment. In this way, the user equipment may announce its existence at a current location by using the D2D identifier, so that another device discovers the user equipment; and a network side device may further effectively control discovery and communication of the user equipment by using the D2D identifier, so that an operator can provide a proximity service that is effectively controlled by a network.

FIG. 12 is a schematic structural diagram of another embodiment of a mobility management entity according to the present invention. Compared with the MME shown in FIG. 11, a difference lies in that in an implementation manner of this embodiment, the D2D identifier includes broadcast code and an identifier that is used for D2D communication.

The assigning module 1102 is specifically configured to assign the broadcast code and the identifier that is used for D2D communication to the user equipment.

Further, the MME may further include a determining module 1104.

The determining module 1104 is configured to: before the assigning module 1102 assigns the broadcast code and the identifier that is used for D2D communication to the user equipment, determine whether the user equipment is allowed to perform a proximity service.

The assigning module 1102 is specifically configured to assign the broadcast code and the identifier that is used for D2D communication to the user equipment when the determining module 1104 determines that the user equipment is allowed to perform the proximity service.

Further, the sending module 1103 is further configured to send, to a proximity service server, the broadcast code and the identifier that is used for D2D communication which are assigned by the assigning module 1102 to the user equipment, so that the proximity service server stores the broadcast code and the identifier that is used for D2D communication.

The receiving module 1101 is further configured to: after the sending module 1103 sends, to the proximity service server, the broadcast code and the identifier that is used for D2D communication which are assigned to the user equipment, receive routing information that is of the proximity service server and sent by the proximity service server.

The sending module 1103 is further configured to send the routing information that is of the proximity service server and received by the receiving module 1101 to the user equipment.

Further, the receiving module 1101 is further configured to: after the sending module 1103 sends, to the proximity service server, the broadcast code and the identifier that is used for D2D communication which are assigned to the user equipment, receive a decryption key that is assigned by the proximity service server to the user equipment.

The sending module 1103 is further configured to send the decryption key received by the receiving module 1101 to the user equipment, so that the user equipment performs decryption by using the decryption key when obtaining encrypted content from the proximity service server by using an application layer server.

In another implementation manner of this embodiment, the proximity service request received by the receiving module 1101 carries an identifier, for D2D communication, of the user equipment, and the D2D identifier assigned by the assigning module 1102 to the user equipment is broadcast code.

Further, the sending module 1103 is further configured to send, to a proximity service server, the broadcast code that is assigned to the user equipment and the identifier for D2D communication that is carried in the proximity service request, so that the proximity service server stores the broadcast code and the identifier that is used for D2D communication.

Further, the receiving module 1101 is further configured to: after the sending module 1103 sends, to the proximity service server, the broadcast code that is assigned to the user equipment and the identifier for D2D communication that is carried in the proximity service request, receive routing information that is of the proximity service server and sent by the proximity service server.

The sending module 1103 is further configured to send the routing information that is of the proximity service server and received by the receiving module 1101 to the user equipment.

Further, the receiving module 1101 is further configured to: after the sending module 1103 sends, to the proximity service server, the broadcast code that is assigned to the user equipment and the identifier for D2D communication that is carried in the proximity service request, receive a decryption key that is assigned by the proximity service server to the user equipment.

The sending module 1103 is further configured to send the decryption key received by the receiving module 1101 to the user equipment, so that the user equipment performs decryption by using the decryption key when obtaining encrypted content from the proximity service server by using an application layer server.

Further, in this implementation manner, the MME may further include a determining module 1104.

The determining module 1104 is configured to: before the assigning module 1102 assigns the broadcast code to the user equipment, determine whether the user equipment is allowed to perform a proximity service.

The assigning module 1102 is specifically configured to assign the broadcast code to the user equipment when the determining module 1104 determines that the user equipment is allowed to perform the proximity service.

In the foregoing two implementation manners of this embodiment, in a specific implementation manner, the determining module 1104 is specifically configured to determine, according to subscription data of the user equipment, whether the user equipment is allowed to perform the proximity service, where the subscription data of the user equipment is obtained, from a home subscriber server according to an identifier of the user equipment carried in the proximity service request, and is locally stored by the MME, and the subscription data of the user equipment includes information about whether the user equipment is allowed to perform the proximity service.

In another specific implementation manner, the sending module 1103 is further configured to: after the receiving module 1101 receives the proximity service request sent by the user equipment, send an identifier of the user equipment carried in the proximity service request and an identifier of the proximity service requested by the user equipment to a home subscriber server.

The receiving module 1101 is further configured to receive feedback information of the home subscriber server.

The determining module 1104 is specifically configured to determine, according to the feedback information that is of the home subscriber server and received by the receiving module 1101, whether the user equipment is allowed to perform the proximity service, where the feedback information of the home subscriber server includes information about whether the user equipment is allowed to perform the proximity service.

In this embodiment, if the proximity service request further carries the identifier of the proximity service requested by the user equipment, the identifier, sent by the sending module 1103 to the home subscriber server, of the proximity service requested by the user equipment is directly acquired from the proximity service request; or
if a message name of the proximity service request indicates the proximity service requested by the user equipment, the identifier, sent by the sending module 1103 to the home subscriber server, of the proximity service requested by the user equipment is generated according to the message name of the proximity service request.

In hardware implementation, the sending module 1103 may be a transmitter or a transceiver, the receiving module 1101 may be a receiver or a transceiver, and the sending module 1103 and the receiving module 1101 may be integrated to form a transceiver unit, which is a transceiver in hardware implementation. The assigning module 1102 and the determining module 1104 may be built in or disposed independently of a processor of a base station in a hardware form, or be stored in a software form in a memory of a base station, so as to be invoked by the processor to execute operations corresponding to the foregoing modules. The processor may be a central processing unit (CPU), a microprocessor, a single-chip microcomputer, or the like.

In this embodiment, after a receiving module 1101 receives a proximity service request sent by a user equipment, an assigning module 1102 assigns a D2D identifier to the user equipment. In this way, the user equipment may announce its existence at a current location by using the D2D identifier, so that another device discovers the user equipment; and a network side device may further effectively control discovery and communication of the user equipment by using the D2D identifier, so that an operator can provide a proximity service that is effectively controlled by a network.

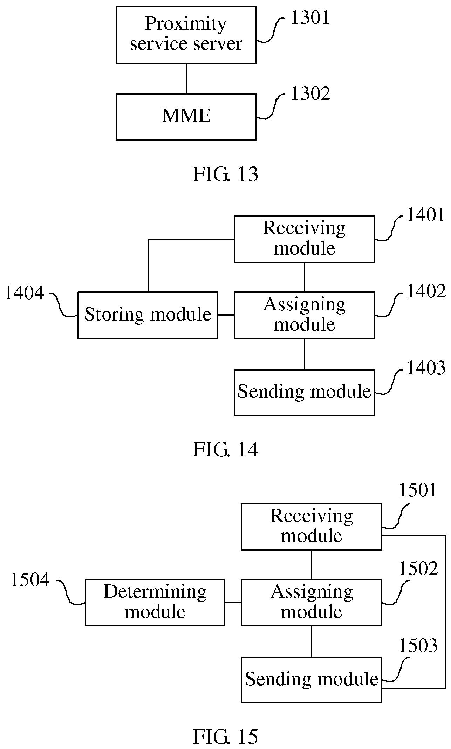

FIG. 13 is a schematic structural diagram of an embodiment of a proximity registration system according to the present invention. As shown in FIG. 13, the proximity registration system may include a proximity service server 1301 and an MME 1302.

The MME 1302 is configured to receive a proximity service request sent by a user equipment, assign broadcast code to the user equipment, and send the broadcast code to the proximity service server 1301 by adding the broadcast code to the proximity service request; receive a proximity service response sent by the proximity service server 1301, where the proximity service response sent by the proximity service server carries an identifier for D2D communication that is assigned by the proximity service server 1301 to the user equipment; and send the proximity service response to the user equipment, where the proximity service response sent to the user equipment carries the broadcast code and the identifier that is used for D2D communication.

The proximity service server 1301 is configured to receive the proximity service request that is sent by the MME 1302 and carries the broadcast code, assign the identifier for D2D communication to the user equipment, and send the identifier for D2D communication to the MME 1302 by adding the identifier for D2D communication to the proximity service response.

Further, the proximity service server 1301 is further configured to: after assigning the identifier for D2D communication to the user equipment, store the identifier used for D2D communication and assigned to the user equipment and the broadcast code that is received from the MME 1302.

Further, the proximity service server 1301 is further configured to send routing information of the proximity service server 1301 to the MME after assigning the identifier for D2D communication to the user equipment.

The MME 1302 is further configured to receive the routing information that is of the proximity service server 1301 and sent by the proximity service server 1301, and send the routing information of the proximity service server 1301 to the user equipment.

Further, the proximity service server 1301 is further configured to assign a decryption key to the user equipment after assigning the identifier for D2D communication to the user equipment, and send the decryption key to the user equipment by using the MME 1302, so that the user equipment performs decryption by using the decryption key when obtaining encrypted content from the proximity service server 1301 by using an application layer server.

Further, the MME 1302 is further configured to: before assigning the broadcast code to the user equipment, determine whether the user equipment is allowed to perform a proximity service; and the MME 1302 may assign the broadcast code to the user equipment when determining that the user equipment is allowed to perform the proximity service.

Specifically, reference may be made to the related description of the embodiment shown in FIG. 1 of the present invention for a manner in which the MME 1302 determines whether the user equipment is allowed to perform the proximity service, which is not described repeatedly in this embodiment.

In this embodiment, an MME 1302 assigns broadcast code to a user equipment, and a proximity service server 1301 assigns an identifier for D2D communication to the user equipment. In this way, the user equipment may announce its existence at a current location by using the broadcast code, so that another device discovers the user equipment; and a network side may further effectively control discovery and communication of the user equipment by using the identifier for D2D communication, so that an operator can provide a proximity service that is effectively controlled by a network.

FIG. 14 is a schematic structural diagram of still another embodiment of a proximity service server according to the present invention. As shown in FIG. 14, the proximity service server may include:
a receiving module 1401, configured to receive a proximity service request sent by an MME, where the proximity service request sent by the MME carries broadcast code that is assigned by the MME to a user equipment;
an assigning module 1402, configured to assign an identifier for D2D communication to the user equipment after the receiving module 1401 receives the proximity service request; and
a sending module 1403, configured to send the identifier for D2D communication, assigned by the assigning module 1402, to the MME by adding the identifier for D2D communication to a proximity service response.

Optionally, in an implementation manner of this embodiment, the proximity service server may further include a storing module 1404.

The storing module 1404 is configured to: after the assigning module 1402 assigns the identifier for D2D communication to the user equipment, store the identifier for D2D communication that is assigned by the assigning module 1402 to the user equipment and the broadcast code that is received by the receiving module 1401 from the MME.

Further, the sending module 1403 is further configured to send routing information of the proximity service server to the MME after the assigning module 1402 assigns the identifier for D2D communication to the user equipment, so that the MME sends the routing information of the proximity service server to the user equipment.

Specifically, the sending module 1403 may send the routing information of the proximity service server to the MME by adding the routing information of the proximity service server to the identifier for D2D communication that is assigned by the assigning module 1402 to the user equipment.

Further, the assigning module 1402 is further configured to assign a decryption key to the user equipment after assigning the identifier for D2D communication to the user equipment.

The sending module 1403 is further configured to send, to the user equipment by using the MME, the decryption key assigned by the assigning module 1402, so that the user equipment performs decryption by using the decryption key when obtaining encrypted content from the proximity service server by using an application layer server.

In this embodiment, an MME assigns broadcast code to a user equipment, and a proximity service server assigns an identifier for D2D communication to the user equipment. In this way, the user equipment may announce its existence at a current location by using the broadcast code, so that another device discovers the user equipment; and a network side may further effectively control discovery and communication of the user equipment by using the identifier for D2D communication, so that an operator can provide a proximity service that is effectively controlled by a network.

FIG. 15 is a schematic structural diagram of still another embodiment of a mobility management entity according to the present invention. As shown in FIG. 15, the MME may include a receiving module 1501, an assigning module 1502, and a sending module 1503.

The receiving module 1501 is configured to receive a proximity service request sent by a user equipment; and after the sending module 1503 sends broadcast code, assigned by the assigning module 1502, to a proximity service server by adding the broadcast code to the proximity service request, receive a proximity service response sent by the proximity service server, where the proximity service response sent by the proximity service server carries an identifier for D2D communication that is assigned by the proximity service server to the user equipment.

The assigning module 1502 is configured to assign the broadcast code to the user equipment after the receiving module 1501 receives the proximity service request.

The sending module 1503 is configured to send the broadcast code, assigned by the assigning module 1502, to the proximity service server by adding the broadcast code to the proximity service request; and after the receiving module 1501 receives the proximity service response sent by the proximity service server, send the proximity service response to the user equipment, where the proximity service response sent to the user equipment carries the broadcast code and the identifier that is used for D2D communication.

Further, the receiving module 1501 is further configured to receive routing information that is of the proximity service server and sent by the proximity service server.

The sending module 1503 is further configured to send the routing information that is of the proximity service server and received by the receiving module 1501 to the user equipment.

Optionally, in an implementation manner of this embodiment, the MME may further include a determining module 1504.

The determining module 1504 is configured to: before the assigning module 1502 assigns the broadcast code to the user equipment, determine whether the user equipment is allowed to perform a proximity service.

The assigning module 1502 is specifically configured to assign the broadcast code to the user equipment when the determining module 1504 determines that the user equipment is allowed to perform the proximity service.

Specifically, reference may be made to the related description of the embodiment shown in FIG. 12 of the present invention for a manner in which the determining module 1504 determines whether the user equipment is allowed to perform the proximity service, which is not described repeatedly in this embodiment.

In this embodiment, an MME assigns broadcast code to a user equipment, and a proximity service server assigns an identifier for D2D communication to the user equipment. In this way, the user equipment may announce its existence at a current location by using the broadcast code, so that another device discovers the user equipment; and a network side may further effectively control discovery and communication of the user equipment by using the identifier for D2D communication, so that an operator can provide a proximity service that is effectively controlled by a network.

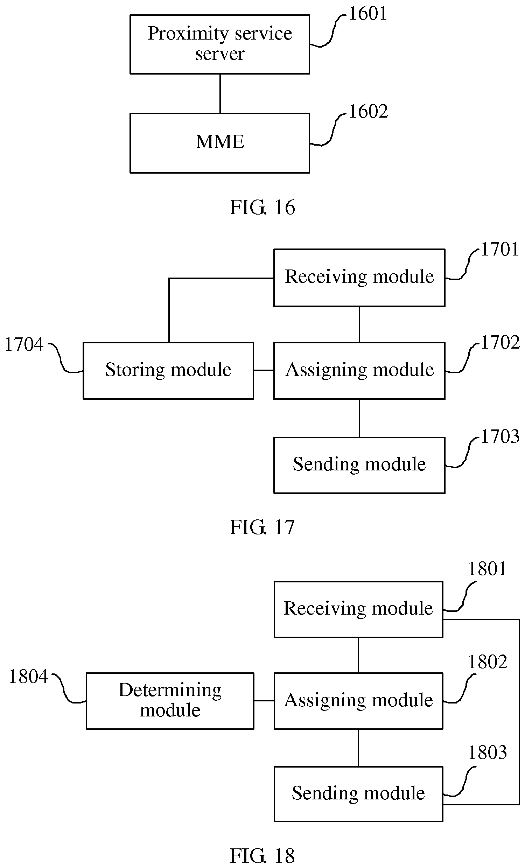

FIG. 16 is a schematic structural diagram of another embodiment of a proximity registration system according to the present invention. As shown in FIG. 16, the proximity registration system may include a proximity service server 1601 and an MME 1602.

The MME 1602 is configured to receive a proximity service request sent by a user equipment, assign an identifier for D2D communication to the user equipment, and send the identifier for D2D communication, assigned to the user equipment, to the proximity service server 1601 by adding the identifier for D2D communication to the proximity service request; receive a proximity service response sent by the proximity service server 1601, where the proximity service response sent by the proximity service server 1601 carries broadcast code that is assigned by the proximity service server 1601 to the user equipment; and send the proximity service response to the user equipment, where the proximity service response sent to the user equipment carries the identifier for D2D communication and the broadcast code.

The proximity service server 1601 is configured to receive the proximity service request that is sent by the MME 1602 and carries the identifier for D2D communication, and assign the broadcast code to the user equipment; and send the proximity service response to the MME 1602, where the proximity service response sent by the proximity service server carries the broadcast code that is assigned by the proximity service server 1601 to the user equipment.

Further, the proximity service server 1601 is further configured to: after assigning the broadcast code to the user equipment, store the broadcast code that is assigned to the user equipment and the identifier for D2D communication that is received from the MME 1602.

Further, the proximity service server 1601 is further configured to send routing information of the proximity service server 1601 to the MME 1602 after assigning the broadcast code to the user equipment.

The MME 1602 is further configured to receive the routing information that is of the proximity service server 1601 and sent by the proximity service server 1601, and send the routing information of the proximity service server 1601 to the user equipment.

Further, the proximity service server 1601 is further configured to assign a decryption key to the user equipment after assigning the broadcast code to the user equipment, and send the decryption key to the user equipment by using the MME 1602, so that the user equipment performs decryption by using the decryption key when obtaining encrypted content from the proximity service server 1601 by using an application layer server.

Further, the MME 1602 is further configured to: before assigning the identifier for D2D communication to the user equipment, determine whether the user equipment is allowed to perform a proximity service; and the MME 1602 may assign the identifier for D2D communication to the user equipment when determining that the user equipment is allowed to perform the proximity service.

Specifically, reference may be made to the related description of the embodiment shown in FIG. 1 of the present invention for a manner in which the MME 1602 determines whether the user equipment is allowed to perform the proximity service, which is not described repeatedly in this embodiment.

In this embodiment, an MME assigns an identifier for D2D communication to a user equipment, and a proximity service server assigns broadcast code to the user equipment. In this way, the user equipment may announce its existence at a current location by using the broadcast code, so that another device discovers the user equipment; and a network side may further effectively control discovery and communication of the user equipment by using the identifier for D2D communication, so that an operator can provide a proximity service that is effectively controlled by a network.

FIG. 17 is a schematic structural diagram of yet another embodiment of a proximity service server according to the present invention. As shown in FIG. 17, the proximity service server may include:
a receiving module 1701, configured to receive a proximity service request sent by an MME, where the proximity service request carries an identifier for D2D communication that is assigned by the MME to a user equipment;
an assigning module 1702, configured to assign broadcast code to the user equipment after the receiving module 1701 receives the proximity service request; and
a sending module 1703, configured to send a proximity service response to the mobility management entity, where the proximity service response carries the broadcast code that is assigned by the assigning module 1702 to the user equipment.

Optionally, the proximity service server may further include a storing module 1704.

The storing module 1704 is configured to: after the assigning module 1702 assigns the broadcast code to the user equipment, store the broadcast code that is assigned by the assigning module 1702 to the user equipment and the identifier for D2D communication that is received by the receiving module 1701 from the MME.

Further, the sending module 1703 is further configured to send routing information of the proximity service server to the MME after the assigning module 1702 assigns the broadcast code to the user equipment, so that the MME sends the routing information of the proximity service server to the user equipment.

Further, the assigning module 1702 is further configured to assign a decryption key to the user equipment after assigning the broadcast code to the user equipment.

The sending module 1703 is further configured to send, to the user equipment by using the MME, the decryption key assigned by the assigning module 1702, so that the user equipment performs decryption by using the decryption key when obtaining encrypted content from the proximity service server by using an application layer server.

In this embodiment, an MME assigns an identifier for D2D communication to a user equipment, and a proximity service server assigns broadcast code to the user equipment. In this way, the user equipment may announce its existence at a current location by using the broadcast code, so that another device discovers the user equipment; and a network side may further effectively control discovery and communication of the user equipment by using the identifier for D2D communication, so that an operator can provide a proximity service that is effectively controlled by a network.

FIG. 18 is a schematic structural diagram of yet another embodiment of a mobility management entity according to the present invention. As shown in FIG. 18, the MME may include a receiving module 1801, an assigning module 1802, and a sending module 1803.

The receiving module 1801 is configured to receive a proximity service request sent by a user equipment; and after the sending module 1803 sends an identifier for D2D communication, assigned by the assigning module 1802 to the user equipment, to a proximity service server by adding the identifier for D2D communication to the proximity service request, receive a proximity service response sent by the proximity service server, where the proximity service response sent by the proximity service server carries broadcast code that is assigned by the proximity service server to the user equipment.

The assigning module 1802 is configured to assign the identifier for D2D communication to the user equipment after the receiving module 1801 receives the proximity service request.

The sending module 1803 is configured to send the identifier for D2D communication, assigned by the assigning module 1802 to the user equipment, to the proximity service server by adding the identifier for D2D communication to the proximity service request; and after the receiving module 1801 receives the proximity service response sent by the proximity service server, send the proximity service response to the user equipment, where the proximity service response sent to the user equipment carries the identifier for D2D communication and the broadcast code.

Further, the receiving module 1801 is further configured to receive routing information that is of the proximity service server and sent by the proximity service server.

The sending module 1803 is further configured to send the routing information that is of the proximity service server and received by the receiving module 1801 to the user equipment.

Optionally, in an implementation manner of this embodiment, the MME may further include a determining module 1804.

The determining module 1804 is configured to: before the assigning module 1802 assigns the identifier for D2D communication to the user equipment, determine whether the user equipment is allowed to perform a proximity service.

The assigning module 1802 is specifically configured to assign the identifier for D2D communication to the user equipment when the determining module 1804 determines that the user equipment is allowed to perform the proximity service.

Specifically, reference may be made to the related description of the embodiment shown in FIG. 12 of the present invention for a manner in which the determining module 1804 determines whether the user equipment is allowed to perform the proximity service, which is not described repeatedly in this embodiment.

In this embodiment, an MME assigns an identifier for D2D communication to a user equipment, and a proximity service server assigns broadcast code to the user equipment. In this way, the user equipment may announce its existence at a current location by using the broadcast code, so that another device discovers the user equipment; and a network side may further effectively control discovery and communication of the user equipment by using the identifier for D2D communication, so that an operator can provide a proximity service that is effectively controlled by a network.

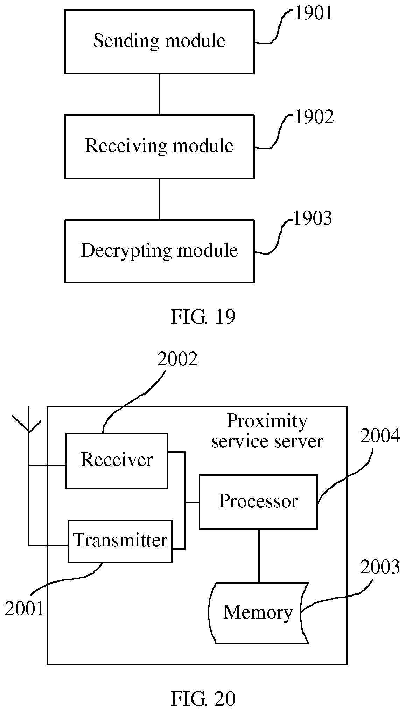

FIG. 19 is a schematic structural diagram of an embodiment of a user equipment according to the present invention. The user equipment in this embodiment can implement the process of the embodiment shown in FIG. 2 of the present invention. As shown in FIG. 19, the user equipment may include:
a sending module 1901, configured to send a proximity service request to a network side device; and
a receiving module 1902, configured to receive a proximity service response sent by the network side device, where the proximity service response carries a D2D identifier assigned by the network side device to the user equipment.

In this embodiment, the D2D identifier includes broadcast code and an identifier that is used for D2D communication; or the proximity service request carries an identifier, for D2D communication, of the user equipment, and in this case, the D2D identifier is broadcast code.

In this embodiment, further, the receiving module 1902 is further configured to: after the sending module 1901 sends the proximity service request to the network side device, receive routing information that is of a proximity service server and sent by the network side device.

The sending module 1901 is further configured to send, in subsequent interaction with an application layer, the routing information of the proximity service server to an application layer server, so that the application layer server finds, according to the routing information of the proximity service server, the proximity service server with which the user equipment is registered.

Optionally, in an implementation manner of this embodiment, the user equipment may further include a decrypting module 1903.

The receiving module 1902 is further configured to: after the sending module 1901 sends the proximity service request to the network side device, receive a decryption key that is assigned by the proximity service server to the user equipment and sent by the network side device.

The decrypting module 1903 is configured to: when the user equipment obtains encrypted content from the proximity service server by using an application layer server, perform decryption by using the decryption key.

In hardware implementation, the sending module 1901 may be a transmitter or a transceiver, the receiving module 1902 may be a receiver or a transceiver, and the sending module 1901 and the receiving module 1902 may be integrated to form a transceiver unit, which is a transceiver in hardware implementation. The decrypting module 1903 may be built in or disposed independently of a processor of a base station in a hardware form, or may be stored in a software form in a memory of a base station, so as to be invoked by the processor to execute operations corresponding to the foregoing modules. The processor may be a central processing unit (CPU), a microprocessor, a single-chip microcomputer, or the like.

In this embodiment, after a sending module 1901 sends a proximity service request to a network side device, a receiving module 1902 receives a D2D identifier assigned by the network side device to the user equipment. In this way, the user equipment may announce its existence at a current location by using the D2D identifier, so that another device discovers the user equipment; and the network side device may further effectively control discovery and communication of the user equipment by using the D2D identifier, so that an operator can provide a proximity service that is effectively controlled by a network.

FIG. 20 is a schematic structural diagram of still yet another embodiment of a proximity service server according to the present invention. As shown in FIG. 20, the proximity service server may include a transmitter 2001, a receiver 2002, a memory 2003, and a processor 2004 connected to the transmitter 2001, the receiver 2002, and the memory 2003 separately. Certainly, the proximity service server may further include other general components; this embodiment of the present invention sets no limit thereto.

The receiver 2002 is configured to receive a proximity service request sent by a user equipment.

The memory 2003 is configured to store a group of program code.

The processor 2004 is configured to invoke the program code stored in the memory 2003, to assign a D2D identifier to the user equipment, where the D2D identifier includes broadcast code and an identifier that is used for D2D communication.

The transmitter 2001 is configured to send a proximity service response to the user equipment, where the proximity service response carries the D2D identifier assigned by the processor 2004 to the user equipment.

Further, the processor 2004 is further configured to: before assigning the D2D identifier to the user equipment, determine whether the user equipment is allowed to perform a proximity service; and assign the broadcast code and the identifier that is used for D2D communication to the user equipment when determining that the user equipment is allowed to perform the proximity service.

Specifically, that the processor 2004 is configured to determine whether the user equipment is allowed to perform a proximity service may be that: the processor 2004 is specifically configured to determine, according to subscription data of the user equipment, whether the user equipment is allowed to perform the proximity service, where the subscription data of the user equipment is obtained, from a home subscriber server according to an identifier of the user equipment carried in the proximity service request, and is locally stored by the processor 2004, and the subscription data of the user equipment includes information about whether the user equipment is allowed to perform the proximity service.

The transmitter 2001 is further configured to: after the receiver 2002 receives the proximity service request sent by the user equipment, send an identifier of the user equipment carried in the proximity service request and an identifier of the proximity service requested by the user equipment to an HSS.

The receiver 2002 is further configured to receive feedback information of the HSS.

The processor 2004 is specifically configured to determine, according to the feedback information that is of the HSS and received by the receiver 2002, whether the user equipment is allowed to perform the proximity service, where the feedback information of the HSS includes information about whether the user equipment is allowed to perform the proximity service.

In this embodiment, the receiver 2002 is specifically configured to receive the proximity service request that is sent by the user equipment by using an MME.

The transmitter 2001 is specifically configured to send the proximity service response to the user equipment by using the MME.

Further, the transmitter 2001 is further configured to send routing information of the proximity service server to the user equipment after the processor 2004 assigns the broadcast code and the identifier that is used for D2D communication to the user equipment.

The transmitter 2001 is specifically configured to send the routing information of the proximity service server to the user equipment by separately adding the routing information of the proximity service server to the proximity service response, or send the routing information of the proximity service server to the user equipment by adding the routing information of the proximity service server to the identifier for D2D communication.

Further, the processor 2004 is further configured to assign a decryption key to the user equipment after assigning the broadcast code and the identifier that is used for D2D communication to the user equipment.

The transmitter 2001 is further configured to send, to the user equipment, the decryption key assigned by the processor 2004, so that the user equipment performs decryption by using the decryption key when obtaining encrypted content from the proximity service server by using an application layer server.

In this embodiment, the proximity service request further carries proximity discovery configuration information of the user equipment, or the subscription data of the user equipment further carries proximity discovery configuration information of the user equipment.

Further, the processor 2004 is further configured to store the proximity discovery configuration information of the user equipment after the receiver 2002 receives the proximity discovery configuration information of the user equipment.

In this embodiment, the proximity service request further carries proximity discovery configuration information of the user equipment, or the feedback information of the HSS further carries proximity discovery configuration information of the user equipment.

The processor 2004 is further configured to store the proximity discovery configuration information of the user equipment after the receiver 2002 receives the proximity discovery configuration information of the user equipment.

In this embodiment, if the proximity service request further carries the identifier of the proximity service requested by the user equipment, the identifier, sent by the transmitter 2001 to the HSS, of the proximity service requested by the user equipment is directly acquired from the proximity service request; or if a message name of the proximity service request indicates the proximity service requested by the user equipment, the identifier, sent by the transmitter 2001 to the HSS, of the proximity service requested by the user equipment is generated according to the message name of the proximity service request.

It should be noted that the proximity service server shown in FIG. 20 may be configured to implement the method provided by the embodiment shown in FIG. 1 of the present invention; descriptions of the identifier of the user equipment and the like are the same as those in the method embodiment, and are not described repeatedly in this embodiment.

In this embodiment, after receiving a proximity service request sent by a user equipment, a proximity service server assigns a D2D identifier to the user equipment. In this way, the user equipment may announce its existence at a current location by using the D2D identifier, so that another device discovers the user equipment; and a network side may further effectively control discovery and communication of the user equipment by using the D2D identifier, so that an operator can provide a proximity service that is effectively controlled by a network.

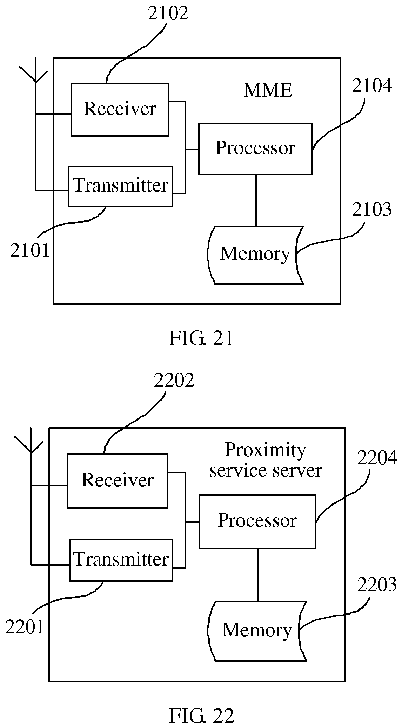

FIG. 21 is a schematic structural diagram of still yet another embodiment of a mobility management entity according to the present invention. As shown in FIG. 21, the MME may include a transmitter 2101, a receiver 2102, a memory 2103, and a processor 2104 connected to the transmitter 2101, the receiver 2102, and the memory 2103 separately. Certainly, the MME may further include other general components; this embodiment of the present invention sets no limit thereto.

The receiver 2102 is configured to receive a proximity service request sent by a user equipment.

The memory 2103 is configured to store a group of program code.

The processor 2104 is configured to invoke the program code stored in the memory 2103, to assign a D2D identifier to the user equipment.

The transmitter 2101 is configured to send a proximity service response to the user equipment, where the proximity service response carries the D2D identifier assigned by the processor 2104 to the user equipment.

In an implementation manner of this embodiment, the D2D identifier includes broadcast code and an identifier that is used for D2D communication.

The processor 2104 is specifically configured to assign the broadcast code and the identifier that is used for D2D communication to the user equipment.

Further, the processor 2104 is further configured to: before assigning the broadcast code and the identifier that is used for D2D communication to the user equipment, determine whether the user equipment is allowed to perform a proximity service; and assign the broadcast code and the identifier that is used for D2D communication to the user equipment when determining that the user equipment is allowed to perform the proximity service.

Further, the transmitter 2101 is further configured to send, to a proximity service server, the broadcast code and the identifier that is used for D2D communication which are assigned by the processor 2104 to the user equipment, so that the proximity service server stores the broadcast code and the identifier that is used for D2D communication.

Further, the receiver 2102 is further configured to: after the transmitter 2101 sends, to the proximity service server, the broadcast code and the identifier that is used for D2D communication which are assigned by the processor 2104 to the user equipment, receive routing information that is of the proximity service server and sent by the proximity service server.

The transmitter 2101 is further configured to send the routing information that is of the proximity service server and received by the receiver 2102 to the user equipment.

The receiver 2102 is further configured to: after the transmitter 2101 sends, to the proximity service server, the broadcast code and the identifier that is used for D2D communication which are assigned by the processor 2104 to the user equipment, receive a decryption key that is assigned by the proximity service server to the user equipment.

The transmitter 2101 is further configured to send the decryption key received by the receiver 2102 to the user equipment, so that the user equipment performs decryption by using the decryption key when obtaining encrypted content from the proximity service server by using an application layer server.

In another implementation manner of this embodiment, the proximity service request received by the receiver 2102 carries an identifier, for D2D communication, of the user equipment; and the D2D identifier assigned by the processor 2104 to the user equipment is broadcast code.

Further, the transmitter 2101 is further configured to send, to a proximity service server, the identifier for D2D communication that is carried in the proximity service request and the broadcast code that is assigned by the processor 2104 to the user equipment, so that the proximity service server stores the broadcast code and the identifier that is used for D2D communication.

Further, the receiver 2102 is further configured to: after the transmitter 2101 sends, to the proximity service server, the identifier for D2D communication that is carried in the proximity service request and the broadcast code that is assigned by the processor 2104 to the user equipment, receive routing information that is of the proximity service server and sent by the proximity service server.

The transmitter 2101 is further configured to send the routing information that is of the proximity service server and received by the receiver 2102 to the user equipment.

The receiver 2102 is further configured to: after the transmitter 2101 sends, to the proximity service server, the identifier for D2D communication that is carried in the proximity service request and the broadcast code that is assigned by the processor 2104 to the user equipment, receive a decryption key that is assigned by the proximity service server to the user equipment.

The transmitter 2101 is further configured to send the decryption key received by the receiver 2102 to the user equipment, so that the user equipment performs decryption by using the decryption key when obtaining encrypted content from the proximity service server by using an application layer server.

In the foregoing two implementation manners of this embodiment, the processor 2104 is further configured to: before assigning the broadcast code to the user equipment, determine whether the user equipment is allowed to perform a proximity service; and assign the broadcast code to the user equipment when determining that the user equipment is allowed to perform the proximity service.

In a specific implementation manner, that the processor 2104 is configured to determine whether the user equipment is allowed to perform a proximity service may be that: the processor 2104 is specifically configured to determine, according to subscription data of the user equipment, whether the user equipment is allowed to perform the proximity service, where the subscription data of the user equipment is obtained, from a home subscriber server according to an identifier of the user equipment carried in the proximity service request, and is locally stored by the processor 2104, and the subscription data of the user equipment includes information about whether the user equipment is allowed to perform the proximity service.

In another specific implementation manner, the transmitter 2101 is further configured to: after the receiver 2102 receives the proximity service request sent by the user equipment, send an identifier of the user equipment carried in the proximity service request and an identifier of the proximity service requested by the user equipment to an HSS.

The receiver 2102 is further configured to receive feedback information of the HSS.

The processor 2104 is specifically configured to determine, according to the feedback information that is of the HSS and received by the receiver 2102, whether the user equipment is allowed to perform the proximity service, where the feedback information of the HSS includes information about whether the user equipment is allowed to perform the proximity service.

In this embodiment, if the proximity service request further carries the identifier of the proximity service requested by the user equipment, the identifier, sent by the transmitter 2101 to the HSS, of the proximity service requested by the user equipment is directly acquired from the proximity service request; or if a message name of the proximity service request indicates the proximity service requested by the user equipment, the identifier, sent by the transmitter 2101 to the HSS, of the proximity service requested by the user equipment is generated according to the message name of the proximity service request.

It should be noted that the MME shown in FIG. 21 may be configured to implement the method provided by the embodiment shown in FIG. 1 of the present invention; descriptions of the identifier of the user equipment and the like are the same as those in the method embodiment, and are not described repeatedly in this embodiment.

In this embodiment, after receiving a proximity service request sent by a user equipment, an MME assigns a D2D identifier to the user equipment. In this way, the user equipment may announce its existence at a current location by using the D2D identifier, so that another device discovers the user equipment; and a network side device may further effectively control discovery and communication of the user equipment by using the D2D identifier, so that an operator can provide a proximity service that is effectively controlled by a network.

FIG. 22 is a schematic structural diagram of a further embodiment of a proximity service server according to the present invention. As shown in FIG. 22, the proximity service server may include a transmitter 2201, a receiver 2202, a memory 2203, and a processor 2204 connected to the transmitter 2201, the receiver 2202, and the memory 2203 separately. Certainly, the proximity service server may further include other general components; this embodiment of the present invention sets no limit thereto.

The receiver 2202 is configured to receive a proximity service request sent by an MME, where the proximity service request sent by the MME carries broadcast code assigned by the MME to a user equipment.

The memory 2203 is configured to store a group of program code.

The processor 2204 is configured to invoke the program code stored in the memory 2203, to assign an identifier for D2D communication to the user equipment after the receiver 2202 receives the proximity service request.

The transmitter 2201 is configured to send the identifier for D2D communication, assigned by the processor 2204, to the MME by adding the identifier for D2D communication to a proximity service response.

Further, the processor 2204 is further configured to: after assigning the identifier for D2D communication to the user equipment, store the identifier used for D2D communication and assigned to the user equipment and the broadcast code that is received by the receiver 2202 from the MME.

Further, the transmitter 2201 is further configured to send routing information of the proximity service server to the MME after the processor 2204 assigns the identifier for D2D communication to the user equipment, so that the MME sends the routing information of the proximity service server to the user equipment.

The transmitter 2201 is specifically configured to send the routing information of the proximity service server to the MME by adding the routing information of the proximity service server to the identifier for D2D communication that is assigned by the processor 2204 to the user equipment.

Further, the processor 2204 is further configured to assign a decryption key to the user equipment after assigning the identifier for D2D communication to the user equipment.

The transmitter 2201 is further configured to send, to the user equipment by using the MME, the decryption key assigned by the processor 2204, so that the user equipment performs decryption by using the decryption key when obtaining encrypted content from the proximity service server by using an application layer server.

It should be noted that the proximity service server shown in FIG. 22 may be configured to implement the method provided by the embodiment shown in FIG. 1 of the present invention; descriptions of the identifier of the user equipment and the like are the same as those in the method embodiment, and are not described repeatedly in this embodiment.

In this embodiment, an MME assigns broadcast code to a user equipment, and a proximity service server assigns an identifier for D2D communication to the user equipment. In this way, the user equipment may announce its existence at a current location by using the broadcast code, so that another device discovers the user equipment; and a network side may further effectively control discovery and communication of the user equipment by using the identifier for D2D communication, so that an operator can provide a proximity service that is effectively controlled by a network.

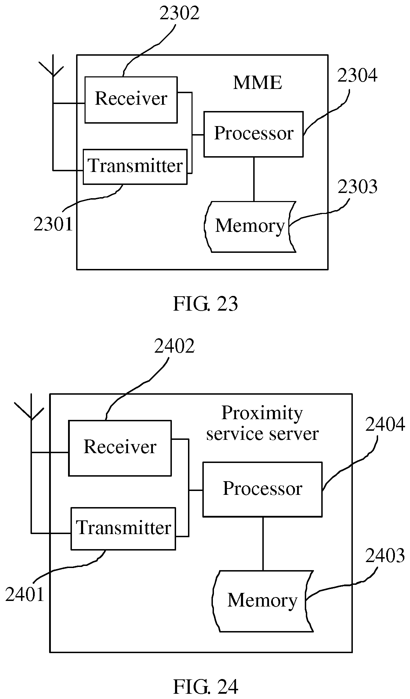

FIG. 23 is a schematic structural diagram of a further embodiment of a mobility management entity according to the present invention. As shown in FIG. 23, the MME may include a transmitter 2301, a receiver 2302, a memory 2303, and a processor 2304 connected to the transmitter 2301, the receiver 2302, and the memory 2303 separately. Certainly, the MME may further include other general components; this embodiment of the present invention sets no limit thereto.

The receiver 2302 is configured to receive a proximity service request sent by a user equipment; and after the transmitter 2301 sends broadcast code, assigned by the processor 2304, to a proximity service server by adding the broadcast code to the proximity service request, receive a proximity service response sent by the proximity service server, where the proximity service response sent by the proximity service server carries an identifier for D2D communication that is assigned by the proximity service server to the user equipment.

The memory 2303 is configured to store a group of program code.

The processor 2304 is configured to invoke the program code stored in the memory 2303, to assign the broadcast code to the user equipment after the receiver 2302 receives the proximity service request.

The transmitter 2301 is configured to send the broadcast code, assigned by the processor 2304, to the proximity service server by adding the broadcast code to the proximity service request; and after the receiver 2302 receives the proximity service response sent by the proximity service server, send the proximity service response to the user equipment, where the proximity service response sent to the user equipment carries the broadcast code and the identifier that is used for D2D communication.

Further, the receiver 2302 is further configured to receive routing information that is of the proximity service server and sent by the proximity service server.

The transmitter 2301 is further configured to send the routing information that is of the proximity service server and received by the receiver 2302 to the user equipment.

Further, the processor 2304 is further configured to: before assigning the broadcast code to the user equipment, determine whether the user equipment is allowed to perform a proximity service; and assign the broadcast code to the user equipment when determining that the user equipment is allowed to perform the proximity service.

It should be noted that the MME shown in FIG. 23 may be configured to implement the method provided by the embodiment shown in FIG. 1 of the present invention; descriptions of the identifier of the user equipment, determining whether the user equipment is allowed to perform the proximity service, and the like are same as those in the method embodiment, and are not described repeatedly in this embodiment.

In this embodiment, an MME assigns broadcast code to a user equipment, and a proximity service server assigns an identifier for D2D communication to the user equipment. In this way, the user equipment may announce its existence at a current location by using the broadcast code, so that another device discovers the user equipment; and a network side may further effectively control discovery and communication of the user equipment by using the identifier for D2D communication, so that an operator can provide a proximity service that is effectively controlled by a network.

FIG. 24 is a schematic structural diagram of a still further embodiment of a proximity service server according to the present invention. As shown in FIG. 24, the proximity service server may include a transmitter 2401, a receiver 2402, a memory 2403, and a processor 2404 connected to the transmitter 2401, the receiver 2402, and the memory 2403 separately. Certainly, the proximity service server may further include other general components; this embodiment of the present invention sets no limit thereto.

The receiver 2402 is configured to receive a proximity service request sent by an MME, where the proximity service request carries an identifier for D2D communication that is assigned by the MME to a user equipment.

The memory 2403 is configured to store a group of program code.

The processor 2404 is configured to invoke the program code stored in the memory 2403, to assign broadcast code to the user equipment after the receiver 2402 receives the proximity service request.

The transmitter 2401 is configured to send a proximity service response to the MME, where the proximity service response carries the broadcast code assigned by the processor 2404 to the user equipment.

Further, the processor 2404 is further configured to: after assigning the broadcast code to the user equipment, store the broadcast code that is assigned to the user equipment and the identifier for D2D communication that is received by the receiver 2402 from the MME.

Further, the transmitter 2401 is further configured to send routing information of the proximity service server to the MME after the processor 2404 assigns the broadcast code to the user equipment, so that the MME sends the routing information of the proximity service server to the user equipment.

Further, the processor 2404 is further configured to assign a decryption key to the user equipment after assigning the broadcast code to the user equipment.

The transmitter 2401 is further configured to send, to the user equipment by using the MME, the decryption key assigned by the processor 2404, so that the user equipment performs decryption by using the decryption key when obtaining encrypted content from the proximity service server by using an application layer server.

It should be noted that the proximity service server shown in FIG. 24 may be configured to implement the method provided by the embodiment shown in FIG. 1 of the present invention; descriptions of the identifier of the user equipment and the like are same as those in the method embodiment, and are not described repeatedly in this embodiment.

In this embodiment, an MME assigns an identifier for D2D communication to a user equipment, and a proximity service server assigns broadcast code to the user equipment. In this way, the user equipment may announce its existence at a current location by using the broadcast code, so that another device discovers the user equipment; and a network side may further effectively control discovery and communication of the user equipment by using the identifier for D2D communication, so that an operator can provide a proximity service that is effectively controlled by a network.

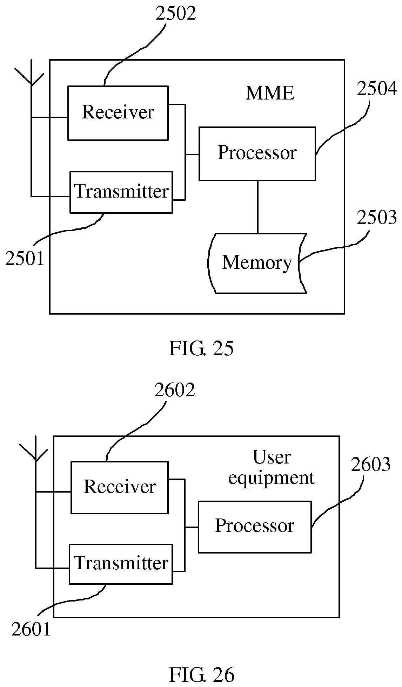

FIG. 25 is a schematic structural diagram of a still further embodiment of a mobility management entity according to the present invention. As shown in FIG. 25, the MME may include a transmitter 2501, a receiver 2502, a memory 2503, and a processor 2504 connected to the transmitter 2501, the receiver 2502, and the memory 2503 separately. Certainly, the MME may further include other general components; this embodiment of the present invention sets no limit thereto.

The receiver 2502 is configured to receive a proximity service request sent by a user equipment; and after the transmitter 2501 sends an identifier for D2D communication, assigned by the processor 2504 to the user equipment, to a proximity service server by adding the identifier for D2D communication to the proximity service request, receive a proximity service response sent by the proximity service server, where the proximity service response sent by the proximity service server carries broadcast code that is assigned by the proximity service server to the user equipment.

The memory 2503 is configured to store a group of program code.

The processor 2504 is configured to invoke the program code stored in the memory 2503, to assign the identifier for D2D communication to the user equipment after the receiver 2502 receives the proximity service request.

The transmitter 2501 is configured to send the identifier for D2D communication, assigned by the processor 2504 to the user equipment, to the proximity service server by adding the identifier for D2D communication to the proximity service request; and after the receiver 2502 receives the proximity service response sent by the proximity service server, send the proximity service response to the user equipment, where the proximity service response sent to the user equipment carries the identifier for D2D communication and the broadcast code.

Further, the receiver 2502 is further configured to receive routing information that is of the proximity service server and sent by the proximity service server.

The transmitter 2501 is further configured to send the routing information that is of the proximity service server and received by the receiver 2502 to the user equipment.

Further, the processor 2504 is further configured to: before assigning the identifier for D2D communication to the user equipment, determine whether the user equipment is allowed to perform a proximity service; and assign the identifier for D2D communication to the user equipment when determining that the user equipment is allowed to perform the proximity service.

It should be noted that the MME shown in FIG. 25 may be configured to implement the method provided by the embodiment shown in FIG. 1 of the present invention; descriptions of the identifier of the user equipment, determining whether the user equipment is allowed to perform the proximity service, and the like are same as those in the method embodiment, and are not described repeatedly in this embodiment.

In this embodiment, an MME assigns an identifier for D2D communication to a user equipment, and a proximity service server assigns broadcast code to the user equipment. In this way, the user equipment may announce its existence at a current location by using the broadcast code, so that another device discovers the user equipment; and a network side may further effectively control discovery and communication of the user equipment by using the identifier for D2D communication, so that an operator can provide a proximity service that is effectively controlled by a network.

FIG. 26 is a schematic structural diagram of another embodiment of a user equipment according to the present invention. As shown in FIG. 26, the user equipment may include a transmitter 2601 and a receiver 2602. Certainly, the user equipment may further include general components such as a memory, an antenna, a baseband processing component, an intermediate radio frequency processing component, and an input and output apparatus; this embodiment of the present invention sets no limit thereto.

The transmitter 2601 is configured to send a proximity service request to a network side device.

The receiver 2602 is configured to: after the transmitter 2601 sends the proximity service request, receive a proximity service response sent by the network side device, where the proximity service response carries a D2D identifier assigned by the network side device to the user equipment.

Further, the receiver 2602 is further configured to: after the transmitter 2601 sends the proximity service request, receive routing information that is of a proximity service server and sent by the network side device.

The transmitter 2601 is further configured to send, in subsequent interaction with an application layer, the routing information that is of the proximity service server and received by the receiver 2602 to an application layer server, so that the application layer server finds, according to the routing information of the proximity service server, the proximity service server with which the user equipment is registered.

Further, the user equipment may further include a processor 2603.

The receiver 2602 is further configured to: after the transmitter 2601 sends the proximity service request, receive a decryption key that is assigned by the proximity service server to the user equipment and sent by the network side device.

The processor 2603 is configured to: when the user equipment obtains encrypted content from the proximity service server by using the application layer server, perform decryption by using the decryption key received by the receiver 2602.

It should be noted that the user equipment shown in FIG. 26 may be configured to implement the method provided by the embodiment shown in FIG. 2 of the present invention; descriptions of the D2D identifier and the like are the same as those in the method embodiment, and are not described repeatedly in this embodiment.

In this embodiment, after sending a proximity service request to a network side device, a user equipment receives a D2D identifier assigned by the network side device to the user equipment. In this way, the user equipment may announce its existence at a current location by using the D2D identifier, so that another device discovers the user equipment; and the network side device may further effectively control discovery and communication of the user equipment by using the D2D identifier, so that an operator can provide a proximity service that is effectively controlled by a network.

An embodiment of the present invention further provides a computer program product, including a computer readable medium, where the computer readable medium includes a group of program code for executing the method provided by the embodiment shown in FIG. 1 of the present invention.

An embodiment of the present invention further provides a computer program product, including a computer readable medium, where the computer readable medium includes a group of program code for executing the method provided by the embodiment shown in FIG. 2 of the present invention.

Persons skilled in the art may understand that the accompanying drawings are merely schematic diagrams of exemplary embodiments, and modules or processes in the accompanying drawings are not necessarily required for implementing the present invention.

Persons skilled in the art may understand that the modules in the apparatuses provided in the embodiments may be arranged in the apparatuses in a distributed manner according to the description of the embodiments, or may be arranged in one or more apparatuses which are different from those described in the embodiments. The modules in the foregoing embodiments may be combined into one module, or split into a plurality of submodules.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments within the scope of the claims.

## Claims

1. A user equipment registration method, comprising:
receiving (401), by a network side device, a proximity service request sent by a user equipment, wherein a proximity service requested by the user equipment is indicated by an identifier of the proximity service carried in the proximity service request or by a message name of the proximity service request;
determining (402), by the network side device, whether the user equipment is allowed to perform the proximity service, wherein the network side device is a proximity service server (1301);
assigning (403), by the network side device, a device-to-device, D2D, identifier to the user equipment if the user equipment is allowed to perform the proximity service; and
sending, by the network side device, a proximity service response to the user equipment, wherein the proximity service response carries the D2D identifier, and the D2D identifier comprises broadcast code and an identifier that is used for D2D communication.

2. The method according to claim 1, wherein the determining (402), by the proximity service server (1301), whether the user equipment is allowed to perform the proximity service comprises:
determining (402), by the proximity service server (1301) according to subscription data of the user equipment, whether the user equipment is allowed to perform the proximity service, wherein the subscription data of the user equipment is obtained, from a home subscriber server according to an identifier of the user equipment carried in the proximity service request, and is locally stored by the proximity service server (1301), and the subscription data of the user equipment comprises information about whether the user equipment is allowed to perform the proximity service.

3. The method according to claim 1, wherein the determining (402), by the proximity service server (1301), whether the user equipment is allowed to perform the proximity service comprises:
sending, by the proximity service server (1301) after receiving the proximity service request sent by the user equipment, an identifier of the user equipment carried in the proximity service request and an identifier of the proximity service requested by the user equipment to a home subscriber server; receiving feedback information of the home subscriber server; and determining, according to the feedback information of the home subscriber server, whether the user equipment is allowed to perform the proximity service, wherein the feedback information of the home subscriber server comprises information about whether the user equipment is allowed to perform the proximity service.

4. The method according to claim 2, wherein the proximity service request further carries proximity discovery configuration information of the user equipment, or the subscription data of the user equipment further carries proximity discovery configuration information of the user equipment; and
the method further comprises: storing, by the proximity service server (1301), the proximity discovery configuration information of the user equipment after receiving the proximity discovery configuration information of the user equipment.

5. The method according to claim 3, wherein the proximity service request further carries proximity discovery configuration information of the user equipment, or the feedback information of the home subscriber server further carries proximity discovery configuration information of the user equipment; and
the method further comprises: storing, by the proximity service server (1301), the proximity discovery configuration information of the user equipment after receiving the proximity discovery configuration information of the user equipment.

6. The method according to claim 3, wherein:
if the proximity service request further carries the identifier of the proximity service requested by the user equipment, the identifier, sent to the home subscriber server, of the proximity service requested by the user equipment is directly acquired from the proximity service request; or
if a message name of the proximity service request indicates the proximity service requested by the user equipment, the identifier, sent to the home subscriber server, of the proximity service requested by the user equipment is generated according to the message name of the proximity service request.

7. A proximity service server (1301), comprising:
a receiving module (91), configured to receive a proximity service request sent by a user equipment, wherein a proximity service requested by the user equipment is indicated by an identifier of the proximity service carried in the proximity service request or by a message name of the proximity service request;
a determining module (94), configured to determine whether the user equipment is allowed to perform the proximity service;
an assigning module (92), configured to assign a device-to-device, D2D, identifier to the user equipment when the user equipment is allowed to perform the proximity service, wherein the D2D identifier comprises broadcast code and an identifier that is used for D2D communication; and
a sending module (93), configured to send a proximity service response to the user equipment, wherein the proximity service response carries the D2D identifier assigned by the assigning module (92).

8. The proximity service server (1301) according to claim 7, wherein:
the determining module (94) is specifically configured to determine, according to subscription data of the user equipment, whether the user equipment is allowed to perform the proximity service, wherein the subscription data of the user equipment is obtained, from a home subscriber server according to an identifier of the user equipment carried in the proximity service request, and is locally stored by the proximity service server, and the subscription data of the user equipment comprises information about whether the user equipment is allowed to perform the proximity service.

9. The proximity service server (1301) according to claim 7, wherein:
the sending module (93) is further configured to: after the receiving module (91) receives the proximity service request sent by the user equipment, send an identifier of the user equipment carried in the proximity service request and an identifier of the proximity service requested by the user equipment to a home subscriber server;
the receiving module (91) is further configured to receive feedback information of the home subscriber server; and
the determining module (94) is specifically configured to determine, according to the feedback information that is of the home subscriber server and received by the receiving module (91), whether the user equipment is allowed to perform the proximity service, wherein the feedback information of the home subscriber server comprises information about whether the user equipment is allowed to perform the proximity service.

10. The proximity service server (1301) according to claim 8, wherein the proximity service request further carries proximity discovery configuration information of the user equipment, or the subscription data of the user equipment further carries proximity discovery configuration information of the user equipment; and
the proximity service server (1301) further comprises a storing module (95), wherein:
the storing module (95) is configured to store the proximity discovery configuration information of the user equipment after the receiving module (91) receives the proximity discovery configuration information of the user equipment.

11. The proximity service server (1301) according to claim 9, wherein the proximity service request further carries proximity discovery configuration information of the user equipment, or the feedback information of the home subscriber server further carries proximity discovery configuration information of the user equipment; and
the proximity service server (1301) further comprises a storing module (95), wherein:
the storing module (95) is configured to store the proximity discovery configuration information of the user equipment after the receiving module (91) receives the proximity discovery configuration information of the user equipment.

12. The proximity service server (1301) according to claim 9, wherein:
the sending module (93) is further configured to send an identifier of the proximity service requested by the user equipment to the home subscriber server; and configured
if the proximity service request further carries the identifier of the proximity service requested by the user equipment, the identifier, sent by the sending module to the home subscriber server, of the proximity service requested by the user equipment is directly acquired from the proximity service request; or
if a message name of the proximity service request indicates the proximity service requested by the user equipment, the identifier, sent by the sending module to the home subscriber server, of the proximity service requested by the user equipment is generated according to the message name of the proximity service request.

## Patentansprüche

1. Registrierungsverfahren für Benutzer-Equipment, umfassend:
Empfangen (401) einer durch ein Benutzer-Equipment gesendeten Nahdienstanforderung durch eine netzwerkseitige Einrichtung, wobei ein durch das Benutzer-Equipment angeforderter Nahdienst durch eine in der Nahdienstanforderung mitgeführte Kennung des Nahdienstes oder durch einen Nachrichtennamen der Nahdienstanforderung angegeben wird;
Festlegen (402) durch die netzwerkseitige Einrichtung, ob es dem Benutzer-Equipment erlaubt ist, den Nahdienst durchzuführen, wobei die netzwerkseitige Einrichtung ein Nahdienstserver (1301) ist;
Zuweisen (403) einer Einrichtung-zu-Einrichtung-, D2D-, -Kennung durch die netzwerkseitige Einrichtung zu dem Benutzer-Equipment, falls es dem Benutzer-Equipment erlaubt ist, den Nahdienst durchzuführen; und
Senden einer Nahdienstantwort durch die netzwerkseitige Einrichtung zu dem Benutzer-Equipment, wobei die Nahdienstantwort die D2D-Kennung trägt und die D2D-Kennung Broadcast-Code und eine für D2D-Kommunikation verwendete Kennung umfasst.

2. Verfahren nach Anspruch 1, wobei das Festlegen (402) durch den Nahdienstserver (1301), ob es dem Benutzer-Equipment erlaubt ist, den Nahdienst durchzuführen, umfasst:
Festlegen (402) durch den Nahdienstserver (1301) entsprechend Subskriptionsdaten des Benutzer-Equipments, ob es dem Benutzer-Equipment erlaubt ist, den Nahdienst durchzuführen, wobei die Subskriptionsdaten des Benutzer-Equipments von einem Home-Teilnehmerserver entsprechend einer in der Nahdienstanforderung mitgeführten Kennung erhalten werden und lokal durch den Nahdienstserver (1301) gespeichert werden und die Subskriptionsdaten des Benutzer-Equipments Informationen dazu umfassen, ob es dem Benutzer-Equipment erlaubt ist, den Nahdienst durchzuführen.

3. Verfahren nach Anspruch 1, wobei das Festlegen (402) durch den Nahdienstserver (1301), ob es dem Benutzer-Equipment erlaubt ist, den Nahdienst durchzuführen, umfasst:
Senden, durch den Nahdienstserver (1301) nach dem Empfangen der durch das Benutzer-Equipment gesendeten Nahdienstanforderung, einer in der Nahdienstanforderung mitgeführten Kennung des Benutzer-Equipments und einer von dem Benutzer-Equipment angeforderten Kennung zu einem Home-Teilnehmerserver; Empfangen von Rückmeldeinformation des Home-Teilnehmerservers und Festlegen, entsprechend den Rückmeldeinformationen des Home-Teilnehmerservers, ob es dem Benutzer-Equipment erlaubt ist, den Nahdienst durchzuführen, wobei die Rückmeldeinformationen des Home-Teilnehmerservers Information dazu umfassen, ob es dem Benutzer-Equipment erlaubt ist, den Nahdienst durchzuführen.

4. Verfahren nach Anspruch 2, wobei die Nahdienstanforderung ferner Nahbereichserkennungs-Einstellinformationen des Benutzer-Equipments trägt oder die Subskriptionsdaten des Benutzer-Equipments ferner Nahbereichserkennungs-Einstellinformationen des Benutzer-Equipments tragen; und
das Verfahren ferner umfasst: Speichern der Nahbereichserkennungs-Einstellinformationen des Benutzer-Equipments durch den Nahdienstserver (1301) nach dem Empfangen der Nahbereichserkennungs-Einstellinformationen des Benutzer-Equipments.

5. Verfahren nach Anspruch 3, wobei die Nahdienstanforderung ferner Nahbereichserkennungs-Einstellinformationen des Benutzer-Equipments mitführt oder die Rückmeldeinformationen des Home-Teilnehmerservers ferner Nahbereichserkennungs-Einstellinformationen des Benutzer-Equipments mitführen;
und
das Verfahren ferner umfasst: Speichern der Nahbereichserkennungs-Einstellinformationen des Benutzer-Equipments durch den Nahdienstserver (1301) nach dem Empfangen der Nahbereichserkennungs-Einstellinformationen des Benutzer-Equipments.

6. Verfahren nach Anspruch 3, wobei,
falls die Nahdienstanforderung ferner die durch das Benutzer-Equipment angeforderte Kennung des Nahdienstes mitführt, die zu dem Home-Teilnehmerserver gesendete Kennung des von dem Benutzer-Equipment angeforderten Nahdienstes direkt aus der Nahdienstanforderung erfasst wird; oder
falls ein Nachrichtenname der Nahdienstanforderung den durch das Benutzer-Equipment angeforderten Nahdienst angibt, die zu dem Home-Teilnehmerserver gesendete Kennung des von dem Benutzer-Equipment angeforderten Nahdienstes entsprechend dem Nachrichtennamen der Nahdienstanforderung erzeugt wird.

7. Nahdienstserver (1301), umfassend:
ein Empfangsmodul (91), ausgelegt zum Empfangen einer von einem Benutzer-Equipment gesendeten Nahdienstanforderung, wobei ein von dem Benutzer-Equipment angeforderter Nahdienst durch eine in der Nahdienstanforderung mitgeführte Kennung des Nahdienstes oder durch einen Nachrichtennamen der Nahdienstanforderung angegeben wird;
ein Bestimmungsmodul (94), ausgelegt zum Festlegen, ob es dem Benutzer-Equipment erlaubt ist, den Nahdienst durchzuführen;
ein Zuweisungsmodul (92), ausgelegt zum Zuweisen einer Einrichtung-zu-Einrichtung-, D2D-, -Kennung zu dem Benutzer-Equipment, wenn es dem Benutzer-Equipment erlaubt ist, den Nahdienst durchzuführen, wobei die D2D-Kennung Broadcast-Code und eine für D2D-Kommunikation verwendete Kennung umfasst; und
ein Sendemodul (93), ausgelegt zum Senden einer Nahdienstanforderung zu dem Benutzer-Equipment, wobei die Nahdienstanforderung die durch das Zuweisungsmodul (92) zugewiesene D2D-Kennung mitführt.

8. Nahdienstserver (1301) nach Anspruch 7, wobei
das Bestimmungsmodul (94) im Einzelnen dafür ausgelegt ist, entsprechend Subskriptionsdaten des Benutzer-Equipments festzulegen, ob es dem Benutzer-Equipment erlaubt ist, den Nahdienst durchzuführen, wobei die Subskriptionsdaten des Benutzer-Equipments von einem Home-Teilnehmerserver entsprechend einer in der Nahdienstanforderung mitgeführten Kennung des Benutzer-Equipments erhalten und lokal durch den Nahdienstserver gespeichert werden und die Subskriptionsdaten des Benutzer-Equipments Informationen dazu umfassen, ob es dem Benutzer-Equipment erlaubt ist, den Nahdienst durchzuführen.

9. Nahdienstserver (1301) nach Anspruch 7, wobei
das Sendemodul (93) ferner dafür ausgelegt ist, nachdem das Empfangsmodul (91) die durch das Benutzer-Equipment gesendete Nahdienstanforderung empfangen hat, eine in der Nahdienstanforderung mitgeführte Kennung des Benutzer-Equipments und eine Kennung des durch das Benutzer-Equipment angeforderten Nahdienstes zu einem Home-Teilnehmerserver zu senden;
das Empfangsmodul (91) ferner dafür ausgelegt ist, Rückmeldeinformationen des Home-Teilnehmerservers zu empfangen; und
das Bestimmungsmodul (94) im Einzelnen dafür ausgelegt ist, entsprechend den Rückmeldeinformationen, die von dem Home-Teilnehmerserver kommen und von dem Empfangsmodul (91) empfangen werden, festzulegen, ob es dem Benutzer-Equipment erlaubt ist, den Nahdienst durchzuführen, wobei die Rückmeldeinformationen des Home-Teilnehmerservers Informationen dazu umfassen, ob es dem Benutzer-Equipment erlaubt ist, den Nahdienst durchzuführen.

10. Nahdienstserver (1301) nach Anspruch 8, wobei die Nahdienstanforderung ferner Nahbereichserkennungs-Einstellinformationen des Benutzer-Equipments mitführt oder die Subskriptionsdaten des Benutzer-Equipments ferner Nahbereichserkennungs-Einstellinformationen des Benutzer-Equipments mitführen; und
der Nahdienstserver (1301) ferner ein Speichermodul (95) umfasst, wobei das Speichermodul (95) dafür ausgelegt ist, die Nahbereichserkennungs-Einstellinformationen des Benutzer-Equipments zu speichern, nachdem das Empfangsmodul (91) die Nahbereichserkennungs-Einstellinformationen des Benutzer-Equipments empfangen hat.

11. Nahdienstserver (1301) nach Anspruch 9, wobei die Nahdienstanforderung ferner Nahbereichserkennungs-Einstellinformationen des Benutzer-Equipments mitführt oder die Rückmeldeinformationen des Home-Teilnehmerservers ferner Nahbereichserkennungs-Einstellinformationen des Benutzer-Equipments mitführen; und
der Nahdienstserver (1301) ferner ein Speichermodul (95) umfasst, wobei das Speichermodul (95) dafür ausgelegt ist, die Nahbereichserkennungs-Einstellinformationen des Benutzer-Equipments zu speichern, nachdem das Empfangsmodul (91) die Nahbereichserkennungs-Einstellinformationen des Benutzer-Equipments empfangen hat.

12. Nahdienstserver (1301) nach Anspruch 9, wobei
das Sendemodul (93) ferner dafür ausgelegt ist, eine Kennung des durch das Benutzer-Equipment angeforderten Nahdienstes zu dem Home-Teilnehmerserver zu senden; und dafür ausgelegt ist,
falls die Nahdienstanforderung ferner die Kennung des von dem Benutzer-Equipment angeforderten Nahdienstes mitführt, die von dem Sendemodul zu dem Home-Teilnehmerserver gesendete Kennung des durch das Benutzer-Equipment angeforderten Nahdienstes direkt aus der Nahdienstanforderung zu erfassen; oder falls ein Nachrichtenname der Nahdienstanforderung den durch das Benutzer-Equipment angeforderten Nahdienst angibt, die von dem Sendemodul zu dem Home-Teilnehmerserver gesendete Kennung des von dem Benutzer-Equipment angeforderten Nahdienstes entsprechend dem Nachrichtennamen der Nahdienstanforderung zu erzeugen.

## Revendications

1. Procédé d'enregistrement d'équipement utilisateur, comprenant les étapes suivantes :
recevoir (401), par un dispositif côté réseau, une requête de service de proximité envoyée par un équipement utilisateur, un service de proximité demandé par l'équipement utilisateur étant indiqué par un identifiant du service de proximité contenu dans la requête de service de proximité ou par un nom de message de la requête de service de proximité ;
déterminer (402), par le dispositif côté réseau, si l'équipement utilisateur est autorisé à exécuter le service de proximité, le dispositif côté réseau étant un serveur de service de proximité (1301) ;
affecter (403), par le dispositif côté réseau, un identifiant D2D, entre dispositifs, à l'équipement utilisateur si l'équipement utilisateur est autorisé à exécuter le service de proximité ; et
envoyer, par le dispositif côté réseau, une réponse de service de proximité à l'équipement utilisateur, la réponse de service de proximité contenant l'identifiant D2D, et l'identifiant D2D comportant un code de diffusion et un identifiant qui est utilisé pour une communication D2D.

2. Procédé selon la revendication 1, dans lequel l'étape de détermination (402), par le serveur de service de proximité (1301), permettant de savoir si l'équipement utilisateur est autorisé à exécuter le service de proximité comprend :
déterminer (402), par le serveur de service de proximité (1301) selon les données d'abonnement de l'équipement utilisateur, si l'équipement utilisateur est autorisé à exécuter le service de proximité, les données d'abonnement de l'équipement utilisateur étant obtenues à partir d'un serveur des abonnés nominaux selon un identifiant de l'équipement utilisateur contenu dans la requête de service de proximité, et étant stockées localement par le serveur de service de proximité (1301), et les données d'abonnement de l'équipement utilisateur comportant des informations indiquant si l'équipement utilisateur est autorisé à exécuter le service de proximité.

3. Procédé selon la revendication 1, dans lequel l'étape de détermination (402), par le serveur de service de proximité (1301), permettant de savoir si l'équipement utilisateur est autorisé à exécuter le service de proximité comprend :
envoyer, par le serveur de service de proximité (1301) après avoir reçu la requête de service de proximité envoyée par l'équipement utilisateur, un identifiant de l'équipement utilisateur contenu dans la requête de service de proximité et un identifiant du service de proximité demandé par l'équipement utilisateur à un serveur des abonnés nominaux ; recevoir des informations de rétroaction du serveur des abonnés nominaux ; et déterminer, selon les informations de rétroaction du serveur des abonnés nominaux, si l'équipement utilisateur est autorisé à exécuter le service de proximité, les informations de rétroaction du serveur des abonnés nominaux comportant des informations indiquant si l'équipement utilisateur est autorisé à exécuter le service de proximité.

4. Procédé selon la revendication 2, dans lequel la requête de service de proximité contient en outre des informations de configuration de découverte de proximité de l'équipement utilisateur, ou les données d'abonnement de l'équipement utilisateur contiennent en outre des informations de configuration de découverte de proximité de l'équipement utilisateur ; et
le procédé comprend en outre : stocker, par le serveur de service de proximité (1301), les informations de configuration de découverte de proximité de l'équipement utilisateur après avoir reçu les informations de configuration de découverte de proximité de l'équipement utilisateur.

5. Procédé selon la revendication 3, dans lequel la requête de service de proximité contient en outre des informations de configuration de découverte de proximité de l'équipement utilisateur, ou les informations de rétroaction du serveur des abonnés nominaux contiennent en outre des informations de configuration de découverte de proximité de l'équipement utilisateur ; et
le procédé comprend en outre : stocker, par le serveur de service de proximité (1301), les informations de configuration de découverte de proximité de l'équipement utilisateur après avoir reçu les informations de configuration de découverte de proximité de l'équipement utilisateur.

6. Procédé selon la revendication 3, dans lequel :
si la requête de service de proximité contient en outre l'identifiant du service de proximité demandé par l'équipement utilisateur, l'identifiant, envoyé au serveur des abonnés nominaux, du service de proximité demandé par l'équipement utilisateur est directement acquis à partir de la requête de service de proximité ; ou
si un nom de message de la requête de service de proximité indique le service de proximité demandé par l'équipement utilisateur, l'identifiant, envoyé au serveur des abonnés nominaux, du service de proximité demandé par l'équipement utilisateur est généré selon le nom de message de la requête de service de proximité.

7. Serveur de service de proximité (1301), comprenant :
un module de réception (91), configuré pour recevoir une requête de service de proximité envoyée par un équipement utilisateur, un service de proximité demandé par l'équipement utilisateur étant indiqué par un identifiant du service de proximité contenu dans la requête de service de proximité ou par un nom de message de la requête de service de proximité ;
un module de détermination (94), configuré pour déterminer si l'équipement utilisateur est autorisé à exécuter le service de proximité ;
un module d'affectation (92), configuré pour affecter un identifiant D2D, entre dispositifs, à l'équipement utilisateur lorsque l'équipement utilisateur est autorisé à exécuter le service de proximité, l'identifiant D2D comportant un code de diffusion et un identifiant qui est utilisé pour une communication D2D ; et
un module d'envoi (93), configuré pour envoyer une réponse de service de proximité à l'équipement utilisateur, la réponse de service de proximité contenant l'identifiant D2D affecté par le module d'affectation (92).

8. Serveur de service de proximité (1301) selon la revendication 7, dans lequel :
le module de détermination (94) est configuré spécifiquement pour déterminer, selon les données d'abonnement de l'équipement utilisateur, si l'équipement utilisateur est autorisé à exécuter le service de proximité, les données d'abonnement de l'équipement utilisateur étant obtenues à partir d'un serveur des abonnés nominaux selon un identifiant de l'équipement utilisateur contenu dans la requête de service de proximité, et étant stockées localement par le serveur de service de proximité, et les données d'abonnement de l'équipement utilisateur comportant des informations indiquant si l'équipement utilisateur est autorisé à exécuter le service de proximité.

9. Serveur de service de proximité (1301) selon la revendication 7, dans lequel :
le module d'envoi (93) est configuré en outre pour : après que le module de réception (91) a reçu la requête de service de proximité envoyée par l'équipement utilisateur, envoyer un identifiant de l'équipement utilisateur contenu dans la requête de service de proximité et un identifiant du service de proximité demandé par l'équipement utilisateur à un serveur des abonnés nominaux ;
le module de réception (91) est en outre configuré pour recevoir des informations de rétroaction du serveur des abonnés nominaux ; et
le module de détermination (94) est configuré spécifiquement pour déterminer, selon les informations de rétroaction qui proviennent du serveur des abonnés nominaux et qui sont reçues par le module de réception (91), si l'équipement utilisateur est autorisé à exécuter le service de proximité, les informations de rétroaction du serveur des abonnés nominaux comportant des informations indiquant si l'équipement utilisateur est autorisé à exécuter le service de proximité.

10. Serveur de service de proximité (1301) selon la revendication 8, dans lequel la requête de service de proximité contient en outre des informations de configuration de découverte de proximité de l'équipement utilisateur, ou les données d'abonnement de l'équipement utilisateur contiennent en outre des informations de configuration de découverte de proximité de l'équipement utilisateur ; et
le serveur de service de proximité (1301) comprend en outre un module de stockage (95) :
le module de stockage (95) étant configuré pour stocker les informations de configuration de découverte de proximité de l'équipement utilisateur après que le module de réception (91) a reçu les informations de configuration de découverte de proximité de l'équipement utilisateur.

11. Serveur de service de proximité (1301) selon la revendication 9, dans lequel la requête de service de proximité contient en outre des informations de configuration de découverte de proximité de l'équipement utilisateur, ou les informations de rétroaction du serveur des abonnés nominaux contiennent en outre des informations de configuration de découverte de proximité de l'équipement utilisateur ; et
le serveur de service de proximité (1301) comprend en outre un module de stockage (95) :
le module de stockage (95) étant configuré pour stocker les informations de configuration de découverte de proximité de l'équipement utilisateur après que le module de réception (91) a reçu les informations de configuration de découverte de proximité de l'équipement utilisateur.

12. Serveur de service de proximité (1301) selon la revendication 9, dans lequel :
le module d'envoi (93) est en outre configuré pour envoyer un identifiant du service de proximité demandé par l'équipement utilisateur au serveur des abonnés nominaux ; et configuré pour
si la requête de service de proximité contient en outre l'identifiant du service de proximité demandé par l'équipement utilisateur, l'identifiant, envoyé par le module d'envoi au serveur des abonnés nominaux, du service de proximité demandé par l'équipement utilisateur est directement acquis à partir de la requête de service de proximité ; ou
si un nom de message de la requête de service de proximité indique le service de proximité demandé par l'équipement utilisateur, l'identifiant, envoyé par le module d'envoi au serveur des abonnés nominaux, du service de proximité demandé par l'équipement utilisateur est généré selon le nom de message de la requête de service de proximité.
